(19) Europäisches Patentamt
European Patent Office
Office européen des brevets

(11) EP 0 697 615 A2

(12) **EUROPEAN PATENT APPLICATION**

(43) Date of publication:
**21.02.1996 Bulletin 1996/08**

(51) Int. Cl.$^6$: **G02F 1/07**

(21) Application number: **95113035.0**

(22) Date of filing: **18.08.1995**

(84) Designated Contracting States:
**DE FR GB IT**

(30) Priority: **19.08.1994 JP 195830/94**
**19.08.1994 JP 195831/94**
**19.08.1994 JP 195832/94**
**19.08.1994 JP 195833/94**
**31.10.1994 JP 267887/94**
**31.10.1994 JP 267888/94**

(71) Applicants:
- **FUJIKURA LTD.**
  **Koto-ku Tokyo (JP)**
- **FUJIKURA KASEI CO., LTD.**
  **Itabashi-ku, Tokyo 174 (JP)**

(72) Inventors:
- **Akashi, Kazuya**
  **Inbagun, Chiba-ken (JP)**
- **Anzai, Hidenobu**
  **Tokyo (JP)**
- **Edamura, Kazuya**
  **Minato-ku, Tokyo (JP)**
- **Otsubo, Yasufumi**
  **Chiba-shi, Chiba-ken (JP)**

(74) Representative: **Grünecker, Kinkeldey,**
**Stockmair & Schwanhäusser**
**Anwaltssozietät**
**D-80538 München (DE)**

(54) **Display device**

(57) A display device employing electro-optical fluids which contain dielectric particles having an electro-rheological effect in an electrically insulating medium is proposed. The display device includes a hollow housing body, two opposing faces of which have respectively at least transparent opposing part and in which the electro-optical fluids are contained. Transparent conductive layers are formed on at least part of respective faces of the two opposing faces of the housing body. Optical shutters are formed in the housing body by chain-like structures of the dielectric particles which, by applying voltage to the transparent conductive layers, are arranged to be connected to each other in the direction along an applied electric field. Desired characters, numerals, figures and the like can be displayed by operating the optical shutters. The transparent conductive layers can be formed on an entire surface or formed as line conductor. Otherwise, the transparent conductive layers can be stacked to form a multilayered structure, thus enabling the display device to switch selectively displayed shapes.

FIG. 4A

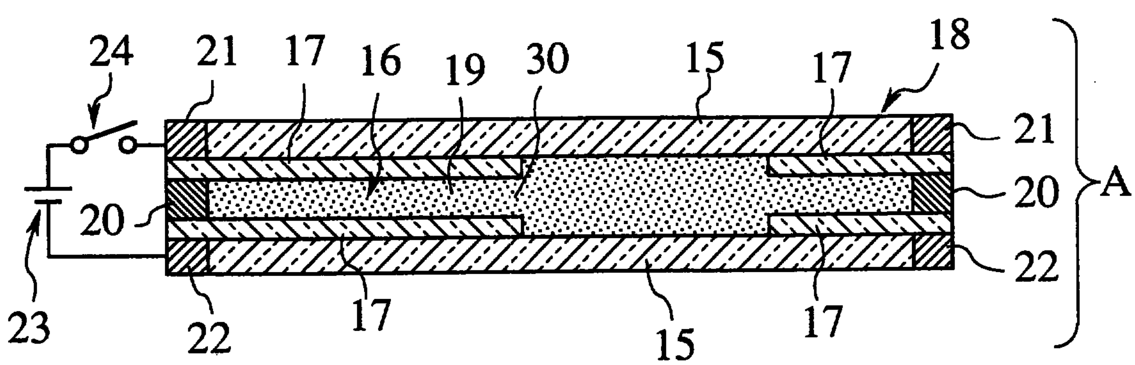


EP 0 697 615 A2

## Description

### BACKGROUND OF THE INVENTION

#### 1. Field of the Invention

The present invention relates to a display device employing electro-optical fluids capable of controlling light transmission property based on an electro-rheological effect caused by an applied electric field and, more particularly, to a display device employing the electro-optical fluids containing dielectric particles having the electro-rheological effect in an electrically insulating medium.

#### 2. Description of the Prior Art

Conventionally, goods are displayed and propagated by display devices such as the glass show window in the store, the department store and the like. The glass show window is formed such that a large size glass plate is fitted into a wall of the store and various goods to be sold in the store are displayed therein. If various displays are designed by changing the background of the show window, arranging illumination for goods, for instance, great propaganda effects can be produced. It has become important to utilize the show window since it can inform not only the goods and their prices, but also the atmosphere in the store.

Since tempered glasses has been developed, anxiety such as the glass plate is destroyed or the exhibited goods are robbed can be decreased. Therefore, the number of stores has been increased wherein, after the store is closed, illumination of the glass show window is maintained to propagate the goods or improve the image of the store. Under these situations, it is promising that advertisement propaganda approaches utilizing the display devices such as the glass show window in the store are increased further more.

In the meanwhile, in case entertainments or meetings such as "CLEARANCE SALE FOR CLOSING BUSINESS" or "BARGAIN SALE", for example, are held in the store equipped with such display device, the display device is decorated by painting the glass plate, putting up a poster on the glass plate, or lifting flags. However, since theses decorations consume much preparation time and the display contents cannot be varied, less propaganda effect is produced and additional time is taken to remove them after finishing the meeting. In addition, the number of decoration characters is restricted corresponding to the size of the glass plate and the decoration characters, and much time is required to remove a large number of decoration characters.

As well known, the display device is sometimes buried on the surface of passages. For example, the display device, such as an arrow type display device for indicating a refuge place, or a shelter to be used when disasters such as earthquake, fire etc. are caused may be buried on the surface of passages. Another example may be a time display portion buried in a ceiling for informing the passenger walking in the shopping district of current time by a digital display. Since great propaganda effects can be produced if such display devices are designed by arranging illumination for the goods, for instance, it has become important to utilize the show window effectively.

In any event, in the arrow type display portion provided on the surface of the passage etc., decorations such as the arrow shape painted on the glass plate, or the arrow shape resin pasted up on the glass plate are made. However, theses decorations consume much preparation time and the display contents cannot be changed, so that less display and propaganda effect is produced, and also much time is required to remove and maintain a large number of decoration characters.

Conventionally, as has been disclosed in Patent Application Publication (KOKAI) 4-31833 as an example, a transmitted light intensity control unit has been known wherein a light adjusting device formed of an electrochromic device is incorporated into a window glass, and a predetermined voltage is applied to the light adjusting device to change sunlight transmittance of the window glass.

FIG.1 is a sectional view showing a structure of the sunlight control window set forth in the Patent Application Publication (KOKAI) 4-31833. The window glass 1 used in the conventional sunlight control window is formed such that an electrochromic device layer 65 is stacked on an electrolyte layer 63, the electrolyte layer 63 and the electrochromic device layer 65 are sandwiched by upper and lower glass plates 64, 64, sealing members 67, 67 are fitted on both ends of the electrolyte layer 63 and the electrochromic device layer 65, and a conductor 68 is formed on entire ends of a resultant structure. In addition, as shown in FIGS.2 and 3, a large number of liquid crystals 111 are dispersed in a polymer matrix 110.

The window glass 1 of the sunlight control window described above is formed as follows. As shown in FIG.2, by applying voltage to the liquid crystals 111 from a power source 122 via transparent conductive layers 66, 66, the liquid crystal molecules 111 are aligned in the direction of electric field. As a result, transmittance of the window glass 1 can be improved to increase an amount of transmitted light. On the other hand, as shown in FIG.3, by removing the applied voltage, the liquid crystal molecules 111 are aligned at random. As a result, incident lights are scattered by the molecules to decrease the transmitted light intensity. Therefore, if the applied voltage to the transparent conductive layers 66, 66 is controlled in response to strength of the sunlight, an intensity of the transmitted sunlight can be controlled by the conventional sunlight control window shown in FIG.1.

While, some signboard which is set up in front of the store or attached to upper wall of an entrance of the store may change its display according to time to enhance an advertisement propaganda effect. There are many cases where the electro-optical fluids, which can control its optical characteristic by applied voltage, is employed in such signboard. As the electro-optical fluids, liquid crystal compositions, electrochromic compositions etc. are well known.

If the voltage is imposed to two transparent electrodes between which the liquid crystal composition is held, polarizing nature of the transmitted light is changed by the liquid crystal composition. And, if the voltage is applied to two transparent electrodes which sandwich the electrochromic composition, transmitted light of particular wavelength is absorbed by the electrochromic composition. Thus, these compositions may be used as a flat panel light adjusting shutter of the window glass, various display devices, or the like. Hence, the electro-optical fluids may be utilized in the display device to produce the advertisement propaganda effect.

However, in the case of the liquid crystal composition, manufacturing cost is significantly increased according to an increase in display area because of various reasons. For example, additional parts such as polarizing film are required, and a distance between the transparent electrodes must be adjusted severely. Moreover, such display device requires increased consumption of electric power and thus becomes expensive and impractical if it is used in the large size glass plate for the show window. On the other hand, in the case of the electrochromic composition, such display device has various drawbacks. For example, a response of the display device is slow, and an intensity of transmitted light cannot be evenly controlled over the full wavelength range of the light since the electrochromic composition has an absorption characteristic of the particular optical wavelength to have the specified color.

Further, the conventional sunlight control window shown in FIGS.1 to 3 has following drawbacks. Since the liquid crystals 111 are utilized to control an intensity of the transmitted light, the same voltage must be continuously applied on continuous duty and the electric power consumption is increased if it is continuously used. In addition, when the liquid crystals 111 are utilized to transmit and scatter the light, the transmitted light is colored and uniform adjusting function of transmitted light intensity cannot be attained over the full wavelength range of the light, owing to the absorption characteristic of the particular optical wavelength of the liquid crystal.

By the way, a liquid compound called as the electro-rheological fluid (referred to as "ER fluid" hereinafter) is well known. This liquid compound is obtained by dispersing solid particles in electrically insulating medium. The liquid compound has a so-called electro-rheological effect (referred to as "ER effect" hereinafter), i.e., when an external voltage is applied thereto, its viscosity is extremely increased or it is solidified as the case may be. This ER effect is known as the Winslow effect. In other words, when the voltage is imposed to the composition inserted between electrodes, solid particles dispersed in the compound are polarized by the electric field. Then, the solid particles are aligned to be connected to each other in the direction of the electric field by an electrostatic attractive force generated by polarization, and thus can resist external shear flowing.

Since the ER fluid has the above ER effect, various applications to transmit a power to or to brake electrically controlled devices, for example, clutches, dampers, shock absorbers, valves, actuators, vibrators, printers, vibration devices, etc. are expected. And the inventors of the present invention have studied these ER fluid and applications of the ER effect.

However, the conventional ER fluids have various problems. The conventional ER fluids have been known wherein, for instance, solid particles which absorb and hold water in their surface layers such as silica gel, cellulose, starch, soy casein, and polystyrene type ion-exchanger resin, are dispersed in the electrically insulating oil such as silicon oil, diphenyl chloride, and transformer oil. These ER fluids have drawbacks as follows. During applying voltage, resistance force to the external shear flowing (referred to as "shear resistance" hereinafter) is not sufficient, high applied voltage is required, and electric power consumption becomes large. Further, abnormal electric currents sometimes flow because of adsorbed water of solid particles, etc., solid particles are aggregated to one of the electrodes because of migration, and its conservation stability is not good. Furthermore, since water adsorbed in the particles is evaporated from the particles by heating, water contents of the particles are changed. As a result, a electro-rheological property (referred to as "ER property" hereinafter) is changed, and thus heat resistance and moistureproof properties, etc. are reduced.

Hence, new ER fluids have been proposed wherein, for instance, inorganic solid particles which include semiconductors as the solid particles and have low conductivity are employed (Patent Application Publication (KOKAI) 2-91194), or inorganic ion-exchanger particles which are formed multivalent metal hydroxide, hydrotalcites, multivalent metal acid salt, hydroxyapatite, nashicon type compound, clay mineral, potassium titanades, heteropoly-acid salt, or insoluble ferrocyanide are employed (Patent Application Publication (KOKAI) 3-200897).

But, these inorganic solid particles have drawbacks as follows. Since difference in specific gravity between these inorganic solid particles and the electrically insulating oil as disperse medium is large, sedimentation of the particles are caused in the insulating oil as time goes by. Thus, since sedimentation of the particles which cannot be readily dispersed again are caused, etc., conservation stability of the display device becomes poor. Further, since these inorganic solid particles are very rigid, they are worn away by means of friction between the particles and the voltage applying electrodes and device walls. Furthermore, since powders caused by the wear are suspended in the ER fluid or the like, the ER property of the display device is changed in long use. Sometimes (or suddenly) an abnormally large electric current flow, thus resulting in insufficient durability of the device.

Especially, some of the inorganic ion-exchangers have large conductivity. If such ion-exchangers are employed, excessive electric currents flow in the ER fluid to generate extraordinary heat and excessive electric power is consumed when the voltage is applied to the electrodes.

The display device has been proposed wherein particles that can obtained by coating core materials, which are formed of materials having specific gravity of less 1.2, with organic polymeric compounds, which have dissociative anion group or cation group in water, are employed (Patent Application Publication (KOKAI) 3-162494). However, in this case, since the particles are hydrous, the conductivity and the polarizability of the particles are changed if the temperature of the system in use is raised up and thus water contents of the particles are changed. As a result, the ER property of the compound is changed by atmospheric humidity.

Taking the above circumstances into consideration, as unique electro-rheological fluid compositions capable of overcoming at once the above drawbacks of the above conventional electro-rheological fluid compositions, new electro-rheological fluid compositions have been developed. The new electro-rheological fluid compositions are formed by dispersing inorganic/organic composite particles, which are formed by core bodies made of organic polymeric compound and outer surfaces, or shells made of inorganic ion-exchangers, into the electrically insulating medium. And, a patent application has already been filed as shown in Patent Application Publication (KOKAI) 5-324102.

## SUMMARY OF THE INVENTION

An object of the present invention is to provide a display device capable of displaying desired characters, numerals, figures, etc. by controlling an amount of transmit light by means of compounds having new structures.

Another object of the present invention is to provide a display device capable of inverting transparent/opaque states of a display section for displaying a desired shape such as characters, numerals, and figures and a non-display section excluding the display section by means of compounds having new structures at extremely high speed.

Still another object of the present invention is to provide a display device capable of switching a plurality of desired shapes such as characters, numerals, and figures by means of compounds having new structures at extremely high speed and by low electric power consumption.

Still another object of the present invention is to provide a display device capable of switching inversion between a plurality of display sections and non-display sections at extremely high speed and by low electric power consumption.

Further object of the present invention is to provide a display device arranged horizontally on a surface of a passage, ceiling of architectural structure etc. to display desired characters, numerals, figures etc. by low electric power consumption.

Still further object of the present invention is to provide a display device having a uniform light transmission characteristic over a full wavelength range of visible lights and capable of being colored in desired color as required.

In order to achieve the above objects, the present inventors have studied the electro-optical fluids (abbreviated as "EA fluid" hereinafter) having new **Electro-Alignment** property which is not known in the art. The EA fluid is obtained by dispersing solid particles in an electrically insulating medium, for example. The solid particles cause dielectric polarization when an electric field is imposed to the EA fluid. For this reason, the solid particles are aligned by electrostatic attraction forces generated by the dielectric polarization and connected to each other in the direction of the electric field to thus produce chain-like structures.

In addition, when an electric field is applied to the EA fluid, some solid particles electrically migrate to electrodes because of their electric migration property, and are aligned to produce aligned mass structures. As described above, such alignment of the particles under application of the electric field is called as an **Electro-Alignment** effect (abbreviated as "EA effect" hereinafter). The solid particle having such property is called as an electro-alignment particle (abbreviated as "EA particle" hereinafter). In addition, the EA fluid is obtained by dispersing the EA particles as main constituting material in the electrically insulating medium.

As shown in FIG.4A, the display device of the present invention is so constituted that the EA fluid 16 is contained in a predetermined housing body 18, at least part of two opposing faces of the housing body 18 are formed by transparent substrates 15 such as glass substrates and transparent resin substrates, and transparent conductive layers 17 are formed on inner walls of the transparent substrates 15. When the electric field is not imposed to the transparent conductive layers 17 formed opposedly, the EA particles are suspended in the electrically insulating medium at random, as shown in FIG.5, so that incident lights are scattered by the EA particles. Thus, the EA fluid 16 becomes opaque optically. On the contrary, when the electric field is imposed to the transparent conductive layers 17, the EA particles are aligned, as shown in FIG.6, so that the chain-like structures 301 are formed in the electrically insulating medium. Thus, the EA fluid 16 becomes transparent optically. As a result, as shown in FIG.7, if the transparent conductive layers 17 are formed in opaque portions which correspond to desired characters, numerals, figures etc., desired shapes can be displayed by opaque portions B. On the other hand, as shown in FIG.9, if desired characters, numerals, figures etc. have to be displayed by the transparent portions, the transparent conductive layers 17, as shown in FIG.4A, may be formed to have desired transparent shapes.

In place of the transparent conductive layers 17 formed opposedly as shown in FIG.4A, a three electrode structure which is composed of display portion reference conductive layers 21, display portion opposing conductive layers 22 and display portion non-opposing conductive layers 23 may be used, as shown in FIG.16. The three electrode structure can be switched by an external switch 177. In other words, if the voltage is applied to the reference conductive layers 21 and the opposing conductive layers 22 by switching the external switch 177, the display portion becomes transparent, as shown in FIG.21. While, if the voltage is applied to the reference conductive layers 21 and the non-opposing conductive layers 23 by switching the external switch 177, the display portion becomes opaque, as shown in FIG.22. Similarly, in case the non-display portion is also formed by the three electrode structure, transparent/opaque states of the non-display portion may be switched by an external switch 178. As a result, as shown in FIGS.17 and 18, transparent/opaque states of the display portion and the non-display portion may be inverted, enabling the display device to display so-called inverted characters.

Further, as shown in FIGS.34 and 45, the transparent conductive layers may be formed by line conductors 17a, 17c, 176a, 176c and line conductors 17b, 17d, 176b, 176d having different polarity. For instance, as shown in FIG.36, if the voltage is imposed to the line conductor 17c and the line conductors 17d, a surface display 302 which is opaque optically may be obtained to thus display figures et. al.

Furthermore, in the present invention, if a plurality of housing bodies are stacked in a multilayered structure, a plurality of different shapes can be displayed. For instance, if the housing bodies shown in FIG.4A are stacked, a resultant structure shown in FIG.23 can be obtained whereas, if the housing bodies shown in FIG.16 are stacked, a resultant structure shown in FIG.27 can be attained. As a result, character displays shown in FIG.7 and different character displays shown in FIG.25 can be selectively switched quickly.

Other and further objects and features of the present invention will become obvious upon an understanding of the illustrative embodiments about to be described in connection with the accompanying drawings or will be indicated in the appended claims, and various advantages not referred to herein will occur to one skilled in the art upon employing of the invention in practice.

## BRIEF DESCRIPTION OF THE DRAWINGS

FIG.1 is a sectional view showing a structure of the conventional display device disclosed in Patent Application Publication (KOKAI) 4-31833;

FIG.2 is a sectional view showing a light transmittance of the conventional structure shown in FIG.1 in a state where liquid crystals are aligned;

FIG.3 is a sectional view showing a light transmittance of the conventional structure shown in FIG.1 in a state where liquid crystals are not aligned;

FIG.4A is a sectional view showing a configuration of a display device according to a first embodiment of the present invention;

FIG.4B is a sectional view showing an example of an inorganic/organic composite particle used in the display device in FIG.4A;

FIG.5 is a view illustrating dispersed state of the inorganic/organic composite particles when voltage is not applied to transparent conductive layers of the display device in FIG.4A;

FIG.6 is a view illustrating aligned state of the inorganic/organic composite particles when voltage is applied to transparent conductive layers of the display device in FIG.4A;

FIG.7 is a perspective view showing an example when the display device according to the first embodiment of the present invention is utilized in a glass show window;

FIG.8 is an enlarged view showing a B portion in FIG.7:

FIG.9 is a perspective view showing another example when the display device according to the first embodiment of the present invention is utilized in a glass show window;

FIG.10 is an enlarged view showing a C portion in FIG.9:

FIG.11 is a graph showing a light transmittance using particle concentration and an applied electric field as parameters when the electrically insulating medium having kinematic viscosity of 10 cSt is utilized in the display device according to the first embodiment of the present invention;

FIG.12 is a graph showing a light transmittance using particle concentration and an applied electric field as parameters when the electrically insulating medium having kinematic viscosity of 50 cSt is utilized in the display device according to the first embodiment of the present invention;

FIG.13 is a graph showing a light transmittance using particle concentration and an applied electric field as parameters when the electrically insulating medium having kinematic viscosity of 100 cSt is utilized in the display device according to the first embodiment of the present invention;

FIG.14 is a graph showing a light transmittance using an applied electric field and kinematic viscosity of the electrically insulating medium as parameters when the inorganic/organic composite particles having particle concentration of 5.0 weight % is utilized in the display device according to the first embodiment of the present invention;

FIG.15 is a graph showing a light transmittance using an applied electric field and kinematic viscosity of the electrically insulating medium as parameters when the inorganic/organic composite particles having particle concentration of 7.5 weight % is utilized in the display device according to the first embodiment of the present invention;

FIG.16 is a sectional view showing a configuration of a display device according to a second embodiment of the present invention;

FIG.17 is a perspective view showing an example when the display device according to the second embodiment of the present invention is utilized in a glass show window;

FIG.18 is a perspective view showing another example when the display device according to the second embodiment of the present invention is utilized in a glass show window;

FIG.19 is a perspective view showing a configuration of the display device according to the second embodiment of the present invention;

FIG.20 is a perspective view showing a configuration of the display device according to the second embodiment of the present invention;

FIG.21 is a sectional view illustrating operational principle of the display device according to the second embodiment of the present invention;

FIG.22 is a sectional view illustrating operational principle of the display device according to the second embodiment of the present invention;

FIG.23 is a sectional view showing a configuration of a display device according to a third embodiment of the present invention;

FIG.24 is a perspective view showing a display portion shown in FIG.23;

FIG.25 is a perspective view showing an example when the character in FIG.24 is utilized in a glass show window;

FIG.26 is a perspective view showing a modification of FIG.25;

FIG.27 is a sectional view showing a configuration of a display device according to a fourth embodiment of the present invention;

FIG.28 is a perspective view showing a configuration of the display device according to the fourth embodiment of the present invention;

FIG.29 is a perspective view showing a configuration of the display device according to the fourth embodiment of the present invention;

FIG.30 is a sectional view illustrating operational principle of the display device according to the fourth embodiment of the present invention;

FIG.31 is a sectional view illustrating operational principle of the display device according to the fourth embodiment of the present invention;

FIG.32 is a perspective view showing a display device according to a fifth embodiment of the present invention;

FIG.33 is sectional view showing a state wherein voltage is not imposed to the display device in FIG.32;

FIG.34 is a developed view showing a configuration of transparent conductive layers of the display device according to the fifth embodiment of the present invention;

FIG.35 is a sectional view illustrating an aligned state of the inorganic/organic composite particles when the voltage is applied to the transparent conductive layers of the display device shown in FIG.32;

FIG.36 is a sectional view illustrating a state where line conductors having different polarity in FIG.33 are connected;

FIG.37 is a sectional view illustrating a state where chain-like structures are formed like columns;

FIG.38 is a sectional view illustrating dielectric polarization of the inorganic/organic composite particles shown in FIG.37;

FIG.39 is a sectional view showing a colored state of the inorganic/organic composite particles shown in FIG.37;

FIG.40 is a characteristic view showing a wavelength dependency of transmitted light intensity when an intensity of the light transmitted through the EA fluid, which is prepared by adding the blue-colored inorganic/organic composite particles to a silicon oil having kinematic viscosity of 10 cSt by four weight %, is measured in the display device according to the fifth embodiment of the present invention;

FIG.41 is a sectional view showing a display device according to a sixth embodiment of the present invention in a state where the voltage is not applied to the conductive layers;

FIG.42 is a sectional view illustrating aligned state of the inorganic/organic composite particles when the voltage is applied to the transparent conductive layers shown in FIG.41;

FIG.43 is a perspective view showing a display device according to a seventh embodiment of the present invention utilized in the glass show window;

FIG.44 is a sectional view taken along a B-B line in FIG.43;

FIG.45 is a developed view showing a configuration of transparent conductive layers in the seventh embodiment of the present invention;

FIG.46 is a sectional view illustrating a state where line conductors having different polarity in FIG.45 are connected;

FIG.47 is a graph showing relationship of a change rate of transmitted light and voltage applying time when the EA fluid, which is prepared by adding the inorganic/organic composite particles to a silicon oil having kinematic viscosity of 10 cSt by seven weight %, is used in the display device according to the seventh embodiment of the present invention;

FIG.48 is a graph showing a wavelength dependency of transmitted light intensity when an intensity of the light transmitted through the EA fluid, which is prepared by adding the blue-colored inorganic/organic composite particles to a silicon oil having kinematic viscosity of 10 cSt by four weight %, is measured in the display device according to the seventh embodiment of the present invention;

FIG.49 is a graph showing a frequency dependency of transmitted light intensity when an intensity of the light transmitted through the electrically insulating medium of dimethyl silicon oil, into which blue dye is added by 0.1 weight %, is measured in the display device according to the seventh embodiment of the present invention; and

FIG.50 is a graph showing a frequency dependency of transmitted light intensity when an intensity of the light transmitted through the EA fluid, which is prepared by adding the yellow-colored inorganic/organic composite particles by five weight % to the electrically insulating medium of dimethyl silicon oil into which blue dye is added by 0.1 weight %, is measured in the display device according to the seventh embodiment of the present invention.

## DETAILED DESCRIPTION OF THE EMBODIMENTS

Various embodiments of the present invention will be described with reference to the accompanying drawings. It is to be noted that the same or similar reference numerals are applied to the same or similar parts and elements throughout the drawings, and the description of the same or similar parts and elements will be omitted or simplified.

### (First Embodiment)

FIG.4A is a sectional view showing a configuration of a display device according to a first embodiment of the present invention. The display device is so formed that a pair transparent substrates 15, 15 are arranged at a predetermined distance in parallel, and a liquid EA fluid 16 is enclosed between the transparent substrates 15, 15. Transparent conductive layers 17 having the same shapes are formed on opposing inner walls of the transparent substrates 15, 15. A sealing member 20 is fitted between outer peripheral portions of the transparent substrates 15, 15. The EA fluid 16 is enclosed in a plate-like hollow transparent housing body 18 formed by the transparent substrates 15, 15 and the sealing member 20. Electrode portions 21, 22 to be connected to the transparent conductive layers 17 are formed on outer edge portions of the transparent substrates 15, 15. The electrode portions 21, 22 are connected to a power source 23 via a switch 24.

It is desired that, since the transparent substrates 15, 15 must enclose the EA fluid 16 therein and have mechanical strength enough to be carried and installed, they may be formed by transparent resin substrate etc. such as various glass substrates and acrylic resins. The transparent substrates 15, 15 may be formed as not only an entire transparent structure, but also a partial transparent structure in which lights can be transmitted through transparent portions. Therefore, only peripheral portions may be formed by opaque metal frames, resin frames etc., and transparent glass substrates, transparent resin substrates are fitted in the frames. In addition, shapes of the transparent substrates 15, 15 are not limited especially, but the plate-like shapes are ordinarily used.

As the transparent conductive films constituting the transparent conductive layers 17, any films having transparency and conductivity may be used arbitrarily. In particular, an ITO (indium-tin oxide) may be used as the transparent conductive film. The shapes of the conductive films may be selected according to characters, numerals, and figures to be displayed.

The EA fluid 16 is basically formed by dispersing inorganic/organic composite particles 30 having structures shown in FIG.4B into the electrically insulating medium 19. The inorganic/organic composite particles 30 comprise cores 31 comprising organic polymeric compounds, and shells 33 comprising EA inorganic compounds 32 covering the surface of the cores 31 and producing the EA effect.

Various inorganic compounds are known as the EA inorganic compounds 32. As preferable instances of the inorganic compounds, inorganic ion-exchangers such as multivalent metal hydroxide, hydrotalcites, multivalent metal acid salt, hydroxyapatite, nashicon type compound, clay mineral, potassium titanades, heteropolyacid salt, or insoluble ferrocyanide; silica gel; and semiconductor type inorganic substance can be listed.

When the EA inorganic compounds 32 are formed on the cores 31 comprising organic polymeric compounds as the shells 33, the EA effect is produced by the EA fluid 16. And, it is preferable that the inorganic/ organic composite particles 30 may be manufactured by simultaneously forming the cores 31 and the shells 33.

As examples of organic polymeric compounds available for the cores 31 of the inorganic/organic composite particles 30, one kind or two kinds or more of mixtures or copolymers such as poly(meta)acrylic acid ester, (meta)acrylic acid ester-styrene copolymer, polystyrene, polyethylene, polypropylene, nitride rubber, butyl rubber, ABS resin, nylon, polyvinyl butylate, ionomer, ethylene-vinyl acetate copolymer, vinyl acetate resin, polycarbonate, etc. can be listed.

The preferable EA inorganic compounds 32 which are usable as the shells 33 of the inorganic/organic composite particles 30 may be formed of inorganic ion-exchangers, semiconductor type inorganic compounds, and silica gels. These compounds exhibit the excellent EA effect when the solid particles are dispersed into the electrically insulating medium 19. As the inorganic ion-exchanger of the present invention, there can be listed (1) multivalent metal hydroxide, (2) hydrotalcites, (3) multivalent metal acid salt, (4) hydroxyapatite, (5) nashicon type compound, (6) clay mineral, (7) potassium titanades, (8) heteropolyacid salt, and (9) insoluble ferrocyanide.

Respective inorganic ion-exchangers will be explained in detail hereinafter.

(1) Multivalent metal hydroxide:

Theses compounds are expressed by a general formula MOx(OH)y (M denotes a multivalent metal, x denotes number of zero or more, and y denotes a positive number). For example, there are titanium hydroxide, zirconium hydroxide, bismuth hydroxide, tin hydroxide, lead hydroxide, aluminum hydroxide, tantalum hydroxide, niobium hydroxide, molybdenum hydroxide, magnesium hydroxide, manganese hydroxide, iron hydroxide, and the like. Here, for example, both hydrous titanium oxide (metatitanic aid or $\beta$ titanic acid, TiO(OH)2) and titanium hydroxide (orthotitanic acid or $\alpha$ titanic acid, Ti(OH)4) are included in titanium hydroxide. The same can be applied to other compounds.

(2) Hydrotalcites:

Theses compounds are expressed by a general formula M13Al6(OH)43(CO)3.12H20 (M denotes a two-valent metal). For example, the two-valent metal is formed of Mg, Ca, Ni, and the like.

(3) Multivalent metal acid salt:

Theses compounds are, for example, titanium phosphate, zirconium phosphate, tin phosphate, cerium phosphate, chromium phosphate, zirconium arsenate, titanium arsenate, tin arsenate, cerium arsenate, titanium antimonate, tin antimonate, tantalum antimonate, niobium antimonate, zirconium tungstate, titanium vanadate, zirconium molybdate, titanium selenate, tin molybdate, and the like.

(4) Hydroxyapatite:

Theses compounds are, for example, calcium apatite, zinc apatite, strontium apatite, cadmium apatite, and the like.

(5) Nashicon type compound:

These compounds include, for example, (H3O)Zr2(PO4)3 and the like. In the present invention, the nashicon type compound in which H3O is replaced with Na may be used.

(6) Clay mineral:

Theses compounds are, for example, montmorillonite, sepiolite, bentonite, and the like. Especially, sepiolite is preferable.

(7) Potassium titanades:

Theses compounds are expressed by a general formula aK2O.bTiO2.nH2O (a is a positive number which satisfies $0 < a \leq 1$, b is a positive number which satisfies $1 \leq b \leq 6$, n is a positive number). For example, K2.TiO2.2H2O, 0.5K2O.TiO2.2H2O and K2O.2.5TiO2.2H2O and the like are raised. In the above compounds, the compounds in which a or b is not an integral number can be easily obtained by acid-processing the compound having the suitable integral number a or b and then replacing K with H.

(8) Heteropolyacid salt:

Theses compounds are expressed by a general formula H3AE12O40.nH2O (A denotes one of phosphorus, arsenic, germanium, or silicon, E denotes molybdenum, tungsten, or vanadium, n is a positive number). For example, ammonium molybdophosphate and ammonium tungstophosphate are listed.

(9) Insoluble ferrocyanide:

Theses compounds are expressed by a following general formula. Mb-pxaA[E(CN)6](where M denotes alkali metal or hydrogen ion, A denotes heavy metal ion such as zinc, copper, nickel, cobalt, manganese, cadmium, iron (III), titanium, or the like, E denotes iron (II), iron (III), cobalt or the like, b is 4 or 3, a denotes valent number of A, and p is a positive number of 0 to b/a). Theses compounds include, for example, insoluble ferrocyan compounds such as Cs2Zn[Fe(CN)6] and K2Co[Fe(CN)6] or the like.

The inorganic ion-exchangers listed on above (1) to (6) have OH groups In the present invention, the inorganic ion-exchangers include such compounds that part or all ions existing on ion-exchanger site of the inorganic ion-exchangers are replaced with another ions (referred to as "replace type inorganic ion-exchangers")

In other words, if the inorganic ion-exchangers are assumed as R-M1 (M1 denotes ion species on the ion-exchanger site), the replace type inorganic ion-exchangers in which part or all ions of M1 in R-M1 are replaced with different ion species M2 from M1 by a following ion exchange reaction is also included in the inorganic ion-exchangers of the present invention.

$$xR\text{-}M1+yM2 \rightarrow Rx\text{-}(M2)y+xM1$$

(where x, y denote respectively valent number of ion species M2, M1)

M1 is different according to kinds of the inorganic ion-exchangers having OH groups In general, in the inorganic ion-exchangers exhibiting catin-exchangeability, M1 is H+. In this case, any one can be selected as M2 from metal ions such as alkali metal, alkaline-earth metal, multivalent typical metal, transition metal, rare earth metal, and the like except for H+.

In general, in the inorganic ion-exchangers exhibiting anion-exchangeability, M1 is OH-. In this case, any one can be selected as M2 from all anions, for example, I, Cl, SCN, NO2, Br, F, CH3COO, SO4 or CrO4, complex ion or the like except for OH-.

In such inorganic ion-exchangers that have OH group again by being immersed in water although it has lost OH group once by a high temperature heating process, the inorganic ion-exchangers obtained after the high temperature heating process etc. may be used as one kind of the inorganic ion-exchangers usable in the present invention. As concrete examples, there are nashicon type compounds, for example, HZr2(PO4)3 obtained by heating (H3O)Zr2(PO4)3, high temperature heating products of hydrotalcite (processed by heating at 500 to 700°C ), and the like.

Not only one kind of these inorganic ion-exchangers but also several kinds thereof may be used simultaneously as the shell. It is especially preferable that, as the above inorganic ion-exchangers, multivalent metal hydroxide or multivalent metal acid salt may be used.

Another preferable EA inorganic substances which can be used as the shell 33 of the inorganic/organic composite particles 30 are raised as follows. That is, metal oxide, metal hydroxide, metal oxide-hydroxide, inorganic ion-exchanger, all having conductivity of $10^3$ to $10^{-11}$ $\Omega^{-1}$/cm at a room temperature, at least one kind of these substances to which metal is doped, at least one kind of these substances which is formed as a semiconductor layer on other supporting member irrespective of metal doping, and the like are used.

Other preferable EA inorganic substances will be explained in detail hereinafter.

(A) Metal oxide:

For example, there are SnO2, amorphous type titanium dioxide (IDEMITSU PETROCHEMICAL Co., Ltd.), and the like.

(B) Metal hydroxide:

For example, there are titanium hydroxide, niobium hydroxide, and the like. Here titanium hydroxide includes hydrous titanium oxide (ISHIHARA SANGYO KAISHA, Ltd.). metatitanic acid (β titanic acid, TiO(OH)2), and orthotitanic acid (α titanic acid, Ti(OH)4).

(C) Metal oxide-hydroxide:

For example, FeO(OH) (garcite) etc. can be listed.

(D) Multivalent metal hydroxide:

The same as aforementioned in (1) are true.

(E) Hydrotalcites:

The same as aforementioned in (2) are true.

(F) Multivalent metal acid salt:

The same as aforementioned in (3) are true.

(G) Hydroxyapatite:

The same as aforementioned in (4) are true.

(H) Nashicon type compound:

The same as aforementioned in (5) are true.

(I) Clay mineral:

The same as aforementioned in (6) are true.

(J) Potassium titanades:

The same as aforementioned in (7) are true.

(K) Heteropolyacid salt:

The same as aforementioned in (8) are true.

(L) Insoluble ferrocyanide:

The same as aforementioned in (9) are true.

(M) Metal doped EA inorganic substance:

In order to improve conductivity of the above EA inorganic substances (A) to (L), metals such as antimony (Sb) are doped in the EA inorganic substances. For example, antimony (Sb) doped tin oxide (SnO2) etc. can be listed.

(N) Resultant obtained by forming EA inorganic substance as semiconductor layer on other supporting members:

For example, there can be listed inorganic particles such as titanium oxide, silica, alumina, silica-alumina, etc. or organic polymeric particles such as polyethylene, polypropylene, etc. as the supporting member. Antimony (Sb) doped tin oxide (SnO2), etc. are formed as a semiconductor layer on the supporting member. Thus the particles covered by the EA inorganic substance can be regarded as the EA inorganic substance as a whole.

Note that, in these EA inorganic substances, two kinds of shells or more may be formed simultaneously in place of one kind of shell.

As the electrically insulating medium 19 used in the EA fluid 16, all insulating medii used in the conventionally known electro-alignment fluid may also be used. In other words, any electrically insulating medii and their mixtures may be used if they have high electrical resistance and high dielectric breakdown strength, and are chemically stable, and enable the inorganic/organic composite particles 30 to be dispersed therein. For instance, diphenyl chloride, sebacic acid bytyl, aromatic polycar-boxylic acid higher alcohol ester, halophenylalkylester, transformer oil, paraffin chloride, fluorine type oil, silicon type oil, fluorosilicon oil, and the like, can be listed.

The electrically insulating medium 19 may be colored according to its purpose. In this case, it is desired that type and amount of solvent dye or disperse dye, which are soluble in selected electrically insulating medium 19 and do not damage electric properties of the electrically insulating medium 19, must be selected. In addition, the electrically insulating medium 19 may further include disperse agent, surfactant, viscosity adjusting agent, antioxidant, stabilizer, etc..

The inorganic/organic composite particles 30 can be manufactured by various methods. For example, in one manufacturing method, both core particles 31 formed of organic macromolecular compound and EA inorganic microparticles 32 are carried by a jet air stream so as to collide with each other. In this case, the EA inorganic microparticles 32 collide against surfaces of the core particles 31 at high speed and then stick thereto, thus forming shells 33 thereon. In another manufacturing method, an EA inorganic solution are sprayed on the surfaces of the core particles 31 which are suspended in the air. In this case, the EA inorganic solution is adhered to the surfaces and then dried, thus forming shells 33 thereon.

However, a preferable method of manufacturing inorganic/organic composite particles 30 is that the core particles 31 and the shells 33 are simultaneously formed. In this method, when emulsion polymerization, suspension polymerization, or disperse polymerization of monomer of the organic polymeric compound forming the core particles 31 is performed in polymerization medium, the EA inorganic microparticles 32 exist in the monomer or in the polymerization medium. Water is preferable as the polymerization medium. But, either mixture made of water and water soluble organic solvent or organic type bad solvent may also be used. According to this method, monomers are polymerized in the polymerization medium to thus form the core particles 31 and, at the same time, the surfaces of the cores 31 are covered by the EA inorganic microparticles 32 in a multilayered fashion to form the shells 33.

In the case of manufacturing the inorganic/organic composite particles 30 by means of emulsion polymerization or suspension polymerization, by combining a hydrophobic property of the monomers with a hydrophilic property of the EA inorganic microparticles 32, most of the EA inorganic microparticles 32 can be formed on the surface of the core particles 31.

According to such methods of forming simultaneously the core particles 31 and the shells 33, the EA inorganic microparticles 32 can be adhered finely and tightly on the surfaces of the core particles 31 formed of the organic polymeric compound, so that strong inorganic/organic composite particles 30 can be obtained.

A shape of the inorganic/organic composite particles 30 used in the present invention is not limited to a spherical shape. However, in case the core particles 31 are manufactured by adjusted emulsion/suspension polymerization, the resultant inorganic/organic composite particles 30 becomes substantially spherical. Moreover, since incident lights can be scattered by the spherical particles 30 in the omni-direction when transmitted lights are adjusted, the spherical particle shape is advantageous rather than indefinite particle shapes.

A diameter of the inorganic/organic composite particles 30 is not limited particularly. But, the diameter of 0.1 to 500 μm, especially, 5 to 200 μm, is preferable. At this time, a diameter of the EA inorganic microparticles 32 is not limited particularly. But, the diameter of 0.005 to 100 μm, especially, 0.01 to 10 μm, is preferable.

In the inorganic/organic composite particles 30, a weight ratio of the EA inorganic microparticles 32 forming the shell 33 and the organic polymeric compound forming the core particles 31 is not limited particularly. However, it is preferable that a weight ratio of (EA inorganic microparticles) : (organic polymeric compound) is within a range of (1 to 60) : (99 to 40), especially, a range of (4 to 30) : (96 to 70). Here, if the weight ratio of the EA inorganic microparticles 32 is less than 1 %, the electro-alignment effect caused by the resultant EA fluid 16 becomes insufficient whereas, if the weight ratio of the EA inorganic microparticles 32 is more than 60 %, an excessive electric current flows in the resultant EA fluid 16.

Note that the shell 33 and the core particles 31 of the inorganic/organic composite particles 30, both including dyestuff, may also be used. The dyestuff usable in the shell 33 is pigment. It is desired that this pigment should be included in the shell 33 to be mixed with the EA inorganic substance 32 when the shell 33 made of the EA inorganic substance 32 is formed by the above method on the core 31.

In case the dyestuff is included in the core 31, either dye or pigment known generally as those used for synthetic resin may be used. This dyestuff can be so included in the core 31 that monomer is polymerized after the dyestuff is mixed in advance in the monomer forming the core 31, or that the dyestuff is kneaded into the synthetic resin forming the core 31.

If the inorganic/organic composite particles 30 including the dyestuff in either the shell 33 or the core 31 or in both of them is utilized, scattering light of the display device can be colored in any color when the voltage is not imposed to the resultant EA fluid 16.

In general, in the inorganic/organic composite particles 30 manufactured by the above various methods, in particular, the method of simultaneously forming the core 31 and the shell 33, there are some cases wherein the EA effect to be caused by the EA inorganic microparticles 32 cannot be sufficiently produced since part of the surface or the entire surface of the shell 33 is covered with the inorganic polymeric substance or the thin film of additions such as disperse agent, emulsifier, etc. used in manufacturing processes. The thin film of the inactive substance can be readily removed by polishing the surfaces of the EA inorganic microparticles 32.

For this reason, as the EA fluid 16 used in the present invention, the inorganic/organic composite particles 30 having polished surfaces are used.

On the other hand, if the inorganic/organic composite particles 30 is manufactured in the manner such that the shell 33 is formed after the core 31 is formed, the inactive substance is not formed on the surface of the shell 33. As a result, an enough EA effect of the inorganic ion-exchanger can be attained.

Polishing of the surface of the inorganic/organic composite particles 30 can be performed by various methods. For instance, first the inorganic/organic composite particles 30 are dispersed in the dispersing medium such as water, and then the dispersing medium is stirred to polish the surfaces of the particles 30. At this time, polishing agents such as sand particles, balls etc. can be mixed in the dispersing medium to be stirred simultaneously with the inorganic/organic composite particles 30. Otherwise, the dispersing medium can be stirred by the grinding wheel. In addition, the inorganic/organic composite particles 30 together with the polishing agent and the grinding wheel can be stirred in a dry state without the dispersing medium.

As a more preferable stirring method, a method of stirring the inorganic/organic composite particles 30 by jet air streams etc. is raised. In this method, the particles 30 per se are strongly collided with each other by the jet air streams etc. to polish their surfaces. This method is preferable in two respects that no polishing agent is required and that the inactive substances peeled off the surfaces of the particles 30 can be easily separated by means of classification.

In the above stirring method using the jet air stream, it is difficult to specify polishing conditions according to kind of stirring apparatus, stirring speed, material of the inorganic/organic composite particles, etc.. In general, it is preferable to stir the inorganic/organic composite particles by the jet air stream at a stirring speed of 6000 rpm and for about 0.5 to 15 minutes.

The EA fluid 16 used in the present invention can be manufactured by stirring and mixing uniformly the inorganic/organic composite particles 30 as well as other components such as the disperse agent, if necessary, in the electrically insulating medium 19. As this stirring apparatus, any apparatus used ordinarily for dispersing the solid particles into the liquid disperse agent may also be used.

Subsequently, concentration of the inorganic/organic composite particles 30, kinematic viscosity of the electrically insulating medium 19, and applied voltage, which are effective to the display device according to the present invention, will be explained.

Although the concentration of the inorganic/organic composite particles 30 in the EA fluid 16 used in the present invention is not limited especially, it is preferable that it is within a range of 0.5 to 15 weight %. If the concentration of the composite particles 30 is less than 0.5 weight %, a sufficient transmitted light control effect cannot be attained. On the other hand, if the concentration of the composite particles 30 is more than 15 weight %, a large amount of the inorganic/organic composite particles 30 are mixed in the EA fluid 16 because of too large concentration of the composite particles 30. Therefore, enough transparency cannot be caused sometimes when the electric field is applied so as to align the inorganic/organic composite particles 30, as described later.

Next, the kinematic viscosity of the electrically insulating medium 19 used in the present invention is preferable within a range of 1 to 3000 cSt. If the kinematic viscosity is less than 1 cSt, a plenty of volatile components exist in the disperse agent so that the EA fluid lacks enough preservation stability. On the contrary, if the kinematic viscosity is more than 3000 cSt, it becomes hard to escape vapors from the electrically insulating medium 19. In case the vapors remain in the electrically insulating medium 19, sometimes discharges are generated partially in micro-areas of the vapors to cause sparks, thus causing insulation deterioration. A more preferable range of the kinematic viscosity of the electrically insulating medium 19 is 10 to 1000 cSt. Further, a more preferable range of the kinematic viscosity of the electrically insulating medium 19 is 10 to 100 cSt.

Next, as the applied voltage to the EA fluid 16, any voltage can be imposed within a range of 0.1 to 5.0 kV/mm, for example. But, note that a high voltage in excess of this range may be imposed. In addition, in this range of the applied voltage, it is more preferable to set the applied voltage in a range of 0.25 to 1.5 kV/mm.

Subsequently, an operational principle of the display device shown in FIG.4A for controlling transmitted light to obtain a desired display will be explained.

As shown in FIG.5, in a dispersed state of the inorganic/organic composite particles wherein the voltage is not applied to the transparent conductive layers 17, 17 of the display device in FIG.4A by opening a switch S, the inorganic/organic composite particles 30 are suspended in an upper portion of the electrically insulating medium 19 at random since the electric field is not imposed thereto. In this state, since incident lights into the housing body 18 are scattered into various directions due to presence of the inorganic/organic composite particles 30, the housing body 18 becomes opaque. For example, in case the titanium hydroxide type inorganic compound is used as the EA inorganic substance 32, a cloudy color tone of the housing body 18 can be achieved. If the dyestuff is included in either the shell 33 or the core 31 or in both of them of the inorganic/organic composite particles 30, the housing body 18 is colored in certain color according to the dyestuff. Here if each of the inorganic/organic composite particles 30 is formed as a spherical shape, less possibility is supposed wherein the scattered lights are focused in the particular direction since scattering of the lights is spread in the omni-direction.

As shown in FIG.6, in an aligned state of the inorganic/organic composite particles wherein the voltage is applied to the transparent conductive layers 17, 17 of the display device in FIG.4A by closing the switch S, the inorganic/organic composite particles 30 can be aligned between the transparent conductive layers 17, 17 so as to form chain-like structures 301 in the direction perpendicular to these transparent conductive layers 17, 17 and, at the same time, the chain-like structures 301 can be aligned mutually in parallel.

In other words, since, as aforementioned, a rate of the inorganic/organic composite particles 30 dispersed in the electrically insulating medium 19 is about less than 10 weight %, a total amount of the composite particles 30 is small as a whole. Therefore, when the composite particles 30 are aligned to form the chain-like structures 301, distances between the chain-like structures 301 become considerably wider than the diameter of the inorganic/organic composite particles 30. Thereby, incident lights into the housing body 18 along the thickness direction of the housing body 18 can be passed through the housing body 18 without substantial attenuation. Accordingly, this cause the housing body 18 to be in a transparent state.

With the above operations, according to whether the voltage is applied to the transparent conductive layers 17, 17 or not, the housing body 18 can be converted from the transparent state to the opaque state and vice versa. As a result, desired characters, numerals, and figures may be displayed on the display device.

For instance, as shown in FIGS.7 and 8, if opaque characters (display portions 40) are to be displayed, the transparent conductive layers (non-display portion transparent conductive layers 17a) are formed so as to oppose to each other on inner surfaces of the non-display portions 41 of the transparent substrates 15, 15 except for the display portions 40, and then the voltage is applied to the non-display portion transparent conductive layers 17a. Then, dielectric particles suspended in area of the non-display portions 41 are coupled to each other by the electric field between the non-display portion transparent conductive layers 17a, 17a so as to form the chain-like structures 301 in the direction perpendicular to the non-display portion transparent conductive layers 17a, 17a, thus resulting in the transparent non-display portions 41. On the other hand, since dielectric particles in area of the display portions 40 are still suspended at random, the incident lights are scattered so that the display portions 40 still remain in an opaque state. As a result, characters in the display portions 40 can be displayed on the transparent substrates 15, 15.

In addition, as shown in FIGS.9 and 10, if transparent characters (display portions 40) are to be displayed, the transparent conductive layers (display portion transparent conductive layers 17b) are formed so as to oppose to each other on inner surfaces of the display portions 40 of the transparent substrates 15, 15 except for the non-display portions 41, and then the voltage is applied to the display portion transparent conductive layers 17b.

Then, the display portions 40 become transparent owing to influence of the electric field and the non-display portions 41 still remain in an opaque state, to the contrary to the above instance. As a result, inverted characters can be displayed.

Hence, the display device having the above configuration can be easily switched from the opaque state to the transparent state, for example, by switching ON/OFF of the electric power supplied from the power source. Desired characters, numerals, figures etc. can be displayed on the glass plate of the glass show window.

In addition, since the display device of the first embodiment can be driven by the voltage of 0.1 to 5.0 kV/mm and very small electric current of several $mA/m^2$ at best, it can be enoughly driven by small electric power of about 10 $W/m^2$. Thus, the display device having a power conservation structure can be achieved. Moreover, since the inorganic/organic composite particles 30 can be completely aligned within several seconds to 20 seconds after the voltage is applied to the transparent conductive layers 17, 17, a fully quick response of the display device can be derived. Further, if an intensity of the transmitted lights is controlled by the EA fluid 16, the intensity of the transmitted lights can be controlled evenly over a full wavelength range without absorption of the light having particular frequency. Therefore, there are no possibility of heat generation due to light absorption, etc. so that the display device capable of eliminating waste of energy can be manufactured.

Furthermore, once the inorganic/organic composite particles 30 are aligned by the applied voltage, the inorganic/organic composite particles 30 are held as they are for a while after the voltage is turned off. Thus as the voltage may be applied intermittently, energy conservation driving of the display device can be realized. In accordance with the kinematic viscosity of the electrically insulating medium 19 in which the inorganic/organic composite particles 30 are dispersed, an alignment holding time of the inorganic/organic composite particles 30 can be adjusted under the application of the voltage. In other words, if the kinematic viscosity of the electrically insulating medium 19 is decreased, the alignment holding time can be shortened while, if the kinematic viscosity of the electrically insulating medium 19 is increased, the alignment holding time can be prolonged.

The display device discussed advance comprises the EA fluid 16 containing the dielectric particles having the EA effect in the electrically insulating medium 19, and the hollow transparent housing body 18 enclosing the EA fluid 16 therein and having at least transparent part in two opposing faces. The display portions 40 and the non-display portions 41 are formed on the opposing transparent parts of the transparent housing body 18. One or more display portion transparent conductive layers 17b are formed on one face of the transparent parts of the display portion 40 whereas one or more display portion transparent conductive layers 17b arranged to oppose to the above display portion transparent conductive layers 17b are formed on other face of the transparent parts of the display portion 40. Therefore, in contrast to the conventional display device employing the liquid crystal, the display device having a simple structure can be provided at extremely low production cost. Incidentally, in comparison with ordinary liquid crystal material, the EA fluid 16 previously explained is very cheap like less than 1/10 in cost. In addition, although various control circuits and LSIs for driving the liquid crystal are required in the liquid crystal device, the display device of the present invention only needs a simple structure, as aforementioned, and the electric circuits of the power source can be formed only by a switch and several wirings.

The above descriptions can be applied similarly to the display device wherein one or more non-display portion transparent conductive layers 17a are formed on one face of the transparent parts of the non-display portion 41 whereas one or more non-display portion transparent conductive layers 17a are formed on other face of the transparent parts of the non-display portion 41.

The first embodiment of the present invention will be explained in more detail hereinafter. First two ITO (Indium Tin Oxide) glasses having a thickness of 1.0 mm, on inner faces of which the transparent conductive layers 17 made of ITO films are formed at coincidental locations, are prepared. Then two glass sheets are opposed at a distance of 2 mm in parallel while respective transparent conductive layers 17 being faced to each other, and peripheral portions of two glass sheets are sealed by the resin sealing member 20. Next, an injection hole is formed on part of the sealing member 20 to inject the liquid EA fluid 16. After the injection, the injection hole is stopped up, thus forming a resultant display device shown in FIG.4A.

Here, manufacturing steps of the EA fluid 16 used will be explained hereinafter. First a mixture which is formed of titanium hydroxide (general name; titanium oxide hydrate, ISHIHARA SANGYO KAISHA, Ltd., C-II), butyl acrylic acid, 1,3- butylene glycol dimethacrylate, and polymerization initiator is dispersed in water which includes calcium tertiary phosphate as a dispersion stabilizer, and then suspension polymerization is performed for one hour and at 60°C with stirring water. Thereafter a resultant product is filtered, then is subject to acid cleaning, and is rinsed and then dried to thus obtain the inorganic/organic composite particles 30. The resultant inorganic/organic composite particles 30 are stirred by the jet air stream using a jet air stream stirring machine (NARA MACHINERY Co., Ltd.) to form polished inorganic/organic composite particles 30. By dispersing the inorganic/organic composite particles 30 uniformly in the silicon oil (TOSHIBA SILICON Co., Ltd., TSF451 Series) having various kinematic viscosity so as to have various contain concentration in weight %, the EA fluid 16 can be derived which includes the fluid compositions having constant kinematic viscosity of the silicon oil and various particle concentrations, and the electrically insulating medium 19 having constant particle concentration and various kinematic viscosities of the silicon oil.

Experimental results of the transmitted light control using various EA fluids are shown in FIGS.11 to 15.

Experiments have been tried by detecting both strength of incident lights into the transparent housing body 18 and strength of transmitted lights through the transparent housing body 18 by respective photosensors anddisplaying compared result in dBm as increased lights. In this case, increase in 3.2 dBm corresponds to 2.09 times increase of optical intensity, and increase in 4.2 dBm corresponds to 2.63 times increase of optical intensity.

FIG.11 shows an experimental result of the increased light using particle concentration of the inorganic/organic composite particles and an applied electric field as parameters when the silicon oil (base oil) having kinematic viscosity of 10 cSt is utilized in the display device according to the first embodiment of the present invention. Similarly, FIG.12 shows an experimental result of the increased light when the silicon oil (base oil) having kinematic viscosity of 50 cSt is utilized in the display device. Still similarly, FIG.13 shows an experimental result of the increased light when the silicon oil (base oil) having kinematic viscosity of 100 cSt is utilized in the display device.

From the results shown in FIGS.11 to 13, in a range of 0.5 to 15 weight % of the particle concentration of the inorganic/organic composite particles, if the applied electric field is increased within a range of 0.25 to 1.5 kV/mm, a dBm value of the increased lights are increased. Therefore, it has been examined that an intensity of the transmitted lights can be controlled by embodying the first embodiment of the present invention. Alternatively, at 1.0 weight % of the particle concentration of the inorganic/organic composite particles, even if the applied electric field is set to be 3 kV/mm, a rate of the increased light becomes small. Thus, it could be found that it is preferable to set the particle concentration of the inorganic/organic composite particles to 2.5 weight % or more.

FIG.14 shows an experimental result of the increased light using an applied electric field and kinematic viscosity of the silicon oil as parameters when the inorganic/organic composite particles having particle concentration of 5.0 weight % is utilized in the display device. Similarly, FIG.15 shows an experimental result of the increased light when the inorganic/organic composite particles having particle concentration of 7.5 weight % is utilized in the display device. From the results shown in FIGS.14 and 15, it could be found that, in any range of the kinematic viscosity of the silicon oil, if the applied electric field is increased within a range of 0.5 to 3 kV/mm, a dBm value of the increased lights are increased. Therefore, it has been examined that an amount of the transmitted lights can be controlled by embodying the first embodiment of the present invention. In addition, it has also been found that, if a larger applied electric field is selected within a range of 0.25 to 1.5 kV/mm, larger increased lights can be derived.

Next, Table 1 and Table 2 show experimental results wherein the resultant increased lights are examined at different wavelength of the transmitted lights when concentration of the inorganic/organic composite particles 30 is set to be 5.0 weight % using the silicon oil (base oil) with a kinematic viscosity of 50 cSt.

Table 1

(Table 1)

| Measured values [dBm] | | Measured wavelength [nm] | | | | | | | |
|---|---|---|---|---|---|---|---|---|---|
| | | 400 | 500 | 600 | 700 | 800 | 900 | 1000 | 1100 |
| | Initial state | -18.4 | -19.5 | -20.7 | -21.5 | -22.1 | -22.5 | -22.6 | -16.9 |
| Applied electric field [kV/mm] | 0 | 0.53 | -0.61 | -1.76 | -2.59 | -3.13 | -3.55 | -3.69 | 2.09 |
| | 0.25 | 2.66 | 1.50 | 0.34 | -0.51 | -1.00 | -1.41 | -1.54 | 4.22 |
| | 0.5 | 3.50 | 2.37 | 1.25 | 0.39 | -0.16 | -0.55 | -0.70 | 5.02 |
| | 1.0 | 4.38 | 3.25 | 2.12 | 1.25 | 0.69 | 0.30 | 0.18 | 5.93 |
| | 1.5 | 4.72 | 3.63 | 2.48 | 1.64 | 1.08 | 0.72 | 0.60 | 6.36 |

At the time of Base oil: 50 cSt/ Particle concentration: 5.0 wt %

Table 2

(Table 2)

| | | | | | | | | |
|---|---|---|---|---|---|---|---|---|
| Values at 1.5 [kV/mm] | 4.72 | 3.63 | 2.48 | 1.64 | 1.08 | 0.72 | 0.60 | 6.36 |
| Values at -)0 [kV/mm] | 0.53 | -0.61 | -1.76 | -2.59 | -3.13 | -3.55 | -3.69 | 2.09 |
| Increased light dBm | 4.19 | 4.24 | 4.24 | 4.23 | 4.21 | 4.27 | 4.29 | 4.27 |

Electric field 1.5 [kV/mm]

Average increased light: 4.2 dBm at the time of Base oil:
50 cSt/ Particle concentration: 5.0 wt %

From the results shown in Table 1 and Table 2, it becomes apparent that, if the transmitted light intensity is controlled by the display device according to the first embodiment of the present invention, the increased lights can be derived uniformly over a wide wavelength range of 400 to 1100 nm, and the transmitted lights can be adjusted evenly in the wide optical wavelength range. Ordinarily, since wavelength range of visible lights may be regarded as 480 to 780 nm, it becomes apparent that the display device of the first embodiment of the present invention has a uniform transmitted light control characteristic in a full wavelength range of visible lights and an infrared range.

On the contrary, when the transparent conductive layers 17 are formed on inner faces of the glass plates of the display portion to have a shape "A" and the voltage is applied to the transparent conductive layers 17, only parts "A" in which the transparent conductive layers 17 are formed become transparent. These transparent parts can be clearly distinguished from other opaque parts, so that it could be found that the display device becomes enoughly practical. In addition, in the first embodiment of the present invention, if an illumination device is arranged such that lights are enabled to irradiate on the transparent substrates 15, the transparent parts can be readily colored by irradiating the lights from the illumination device. Alternatively, another illumination device such as electric light, laser, candle, etc. may be arranged on the outside of the housing body 18. Consequently, the transparent parts are lightened by the lights supplied from these illumination devices, so that displayed characters, etc. are conspicuous by the lights. In addition, a light coloring means such as a colored paraffin paper for coloring the lights supplied from the illumination device may be arranged between the illumination device and the housing body 18. The displayed characters, etc. are further conspicuous by the light coloring means to attract passenger's attention.

Further, if the electrically insulating medium is colored, complicated coloration can be provided and a delicate color tone can be attained.

**(Second Embodiment)**

A display device according to a second embodiment includes display portions and non-display portions, and display and inverted display can be switched at high speed between the display portions and the non-display portions.

FIG.16 shows a configuration of a display device according to the second embodiment of the present invention. In the display device according to the second embodiment, a pair of transparent electrodes 14, 15 are arranged at a predetermined distance in parallel. Outer peripheral portions of the transparent electrodes 14, 15 are sealed by a sealing member 20 to form a hollow transparent housing body. A liquid EA fluid 16 is enclosed in the transparent housing body. The display device is separated into display portions 11 and non-display portions 12. Here the display portions 11 denotes parts displaying characters, figures, etc. thereon, and the non-display portions 12 denotes parts excluding the display portions 11. In the display portions 11, display portion transparent reference conductive layers 21 are formed on an inner face of one transparent substrate 14 contacting to the EA fluid 16. Also display portion transparent opposing conductive layers 22 are formed on an inner face of the other transparent substrate 15 at coincident locations with those of the display portion transparent reference conductive layers 21. In addition, display portion transparent non-opposing conductive layers 23 are formed on an inner face of the other transparent substrate 15 at displaced locations with respect to the display portion transparent reference conductive layers 21.

In the non-display portion 12, non-display portion transparent reference conductive layers 26, non-display portion transparent opposing conductive layers 27, and non-display portion transparent non-opposing conductive layers 28 are formed in the same manner as in the display portions 11. That is, the non-display portion transparent reference conductive layers 26 and the non-display portion transparent opposing conductive layers 27 are formed at opposing locations to each other. While, the non-display portion transparent reference conductive layers 26 and non-display portion transparent non-opposing conductive layers 28 are formed at mutually displaced locations.

Six types of conductive layers formed on inner surfaces of respective display portions 11 and non-display portions 12 are electrically isolated from each other. Connection leads are independently connected to these conductive layers so as to extend toward the outside of the housing body.

A connection lead 21a connected to the display portion transparent reference conductive layers 21 is connected to one terminal of the power source 9 provided on the outside of the housing body. The other terminal of the power source 9 is connected to an input terminal of a selection switch 177. Connection leads 22a and 23a respectively connected to the display portion transparent opposing conductive layers 22 and the display portion transparent non-opposing conductive layers 23 are connected to two output terminals of the selection switch 177. Therefore, by switching the selection switch 177, the voltage can be supplied selectively to either the display portion transparent reference conductive layers 21 and the display portion transparent opposing conductive layers 22 or the display portion transparent reference conductive layers 21 and the display portion transparent non-opposing conductive layers 23 from the power source 9.

Similarly, in the non-display portion 12, by switching the selection switch 178, the voltage can be supplied selectively to either the non-display portion transparent reference conductive layers 26 and the non-display portion transparent opposing conductive layers 27 or the non-display portion transparent reference conductive layers 26 and the non-display portion transparent non-opposing conductive layers 28 from the power source 10.

FIGS.17 and 18 show respectively an example when the display device according to the second embodiment of the present invention is utilized in the glass show window.

In FIGS.17 and 18, the display portions 11 are formed to have characters of "BARGAIN SALE", and the non-display portions 12 are formed as the parts excluding the display portions 11. FIGS.19 and 20 show respectively configurations of the transparent substrate together with conductive layers shown as A portions in FIGS.17 and 18 in an enlarged manner. The display portions 11 and the non-display portions 12 are formed in respective A portions.

At the bottom of the display portions 11 on the transparent substrate 14 shown in FIG.19, the display portion transparent reference conductive layers 21 are formed to have a comb-like shape. In the non-display portions 12, the non-display portion transparent reference conductive layers 26 are also formed to have a comb-like shape.

On the surface of the display portions 11 of the transparent substrate 15 shown in FIG.20, the display portion transparent opposing conductive layers 22 having the same shape as that of the display portion transparent reference conductive layers 21 are formed at opposing locations to those of the display portion transparent reference conductive layers 21. The display portion transparent non-opposing conductive layers 23 having an alternate shape with respect to the display portion transparent opposing conductive layers 22 are formed in the portion of the display portions 11 excluding the display portion transparent opposing conductive layers 22.

In the non-display portions 12 of the transparent substrate 15, the non-display portion transparent opposing conductive layers 27 are formed at opposing locations to those of the non-display portion transparent reference conductive layers 26, and the non-display portion transparent non-opposing conductive layers 28 are formed so as to cover remaining areas of the non-display portions 12.

The transparent substrates 14, 15 used in the display device are not limited especially, if they can enclose the EA fluid 16 therein and have mechanical strength enough to be carried and installed. But, it is desired that they may be formed by transparent resin substrate etc. such as various glass substrates and acrylic resins. The transparent substrates 14, 15 may be formed as not only an entire transparent structure, but also a partial transparent structure which correspond to at least display portions and their neighbor portions. Therefore, only peripheral portions may be formed by opaque metal frames, resin frames etc., and transparent glass substrates, transparent resin substrates are fitted in the frames.

In principle, the EA fluid 16 is formed by dispersing dielectric particles (EA particles) having the EA effect in the electrically insulating medium. Any materials such as elements, organic compounds, inorganic compounds, or their mixture may be used as the EA particles in the present invention if the dielectric particles have the EA effect. For instance, like the first embodiment of the present invention, either particles made of inorganic ion-exchanger, metal oxide, silica gel, semiconductor type inorganic substance, carbon black, etc. or particles having the outer layer made of above materials can be listed.

However, as shown in FIG.4B, it is preferable that the EA particle is formed of the inorganic/organic composite particles 30 which comprises the core 31 comprising the organic polymeric compound and the shell 33 comprising the inorganic substance having the EA effect (referred to as "EA inorganic substance" hereinafter). In this case, the inorganic/organic composite particles 30 is so formed that the outer layer 33 having relatively heavy specific gravity is supported by the organic macromolecular compound having relatively light specific gravity, so that total specific gravity of the composite particles 30 can be adjusted to become close to that of the electrically insulating medium. As a result, the EA composition obtained by diversing the inorganic/organic composite particles 30 in the electrically insulating medium has excellent storage stability.

Like the first embodiment of the present invention, as examples of organic polymeric compounds available for the cores 31 of the inorganic/organic composite particles 30, one kind or two kinds or more of mixtures or copolymers such as poly(meta)acrylic acid ester, (meta)acrylic acid ester-styrene copolymer, polystyrene, polyethylene, polypropylene, nitride rubber, butyl rubber, ABS resin, nylon, polyvinyl butylate, ionomer, ethylene-vinyl acetate copolymer, vinyl acetate resin, polycarbonate, etc. can be raised. Various inorganic substances are usable as the EA inorganic compounds 32 forming the shells 33, but inorganic ion-exchangers, silica gel, semiconductor type inorganic substance are preferable, like the first embodiment.

The EA fluid 16 used in the second embodiment of the present invention may be manufactured by dispersing uniformly the EA particles together with other components such as the disperse agent, if necessary, into the electrically insulating medium by means of stirring and mixing processes. As this stirring apparatus, any apparatus used ordinarily for dispersing the solid particles into the liquid disperse agent may also be used.

The concentration of the EA particles in the electrically insulating medium, which is effective for control of an amount of the transmitted lights is not limited especially, but it is preferable that it is within a range of 0.5 to 15 weight %. If the concentration of the EA particles is less than 0.5 weight %, density of the EA particles are too small so that the EA fluid 16 still has a little transparency. Thus, sufficient contrast of the EA fluid 16 cannot be attained even when the voltage is imposed thereto. On the other hand, if the concentration of the EA particles is more than 15 weight %, the concentration of the composite particles becomes excessive. Therefore, enough transparency cannot be caused sometimes even when the electric field is applied so as to align the EA particles. In view of these respects, it is desired that the concentration of the EA particles in the electrically insulating medium should be within a range of 2.5 weight % to 10 weight %.

Next, the kinematic viscosity of the electrically insulating medium used in the second embodiment of the present invention is preferable within a range of 1 to 3000 cSt. If the kinematic viscosity is less than 1 cSt, a plenty of volatile components exist in the disperse agent so that the EA fluid composition lacks enough preservation stability. On the contrary, if the kinematic viscosity is more than 3000 cSt, it becomes hard to escape vapors from the electrically insulating medium. In case the vapors remain in the electrically insulating medium, sometimes troubles are caused to handle it. A more preferable range of the kinematic viscosity of the electrically insulating medium is 10 to 1000 cSt.

Next, as the applied voltage to the EA fluid 16, any voltage can be imposed within a range of 0.1 kV/mm to 5.0 kV/mm, for example. But, note that a higher voltage in excess of this range may be imposed. In addition, in this range of the applied voltage, it is more preferable to set the applied voltage in a range of 0.25 to 1.5 kV/mm.

Subsequently, an operation of the above display device will be explained. For example, by operating the selection switches 177 and 178, the voltage is applied to the display portion transparent reference conductive layers 21 and the display portion transparent non-opposing conductive layers 23 and to the non-display portion transparent reference conductive layers 26 and the non-display portion transparent opposing conductive layers 27, the electric field is formed between upper and lower opposed conductive layers in the non-display portion 12, as shown in FIG.21. Thus, the inorganic/organic composite particles 30 contained in the EA fluid 16 between the opposed conductive layers are polarized, and then aligned in the direction perpendicular to the substrate to be connected like chain-like structures between the opposed conductive layers. These chain-like structures are aligned in parallel to have mutually a certain distance.

Now, since the concentration of the inorganic/organic composite particles 30 dispersed in the EA fluid 16 is within a range of about several weight % to 20 weight %, a total amount of the composite particles 30 is small as a whole. Therefore, when the composite particles 30 are aligned to form the chain-like structures, distances between the chain-like structures become considerably wider than the diameter of the dielectric particles. Thereby, incident lights into the housing body along the thickness direction of the housing body can be passed through the housing body without substantial attenuation. Accordingly, a substantial transparent state is caused in the non-display portion.

On the contrary, since, in the display portion 11, the electric field is applied to the display portion transparent reference conductive layers 21 and the display portion transparent non-opposing conductive layers 23, both being arranged at mutually displaced locations, the inorganic/organic composite particles 30 dispersed in the EA fluid 16 therebetween are coupled in an inclined state against the substrate to form the chain-like structures. In this state, since incident lights are interrupted due to presence of the chain-like structure of the inorganic/organic composite particles 30, the display portion 11 becomes an opaque state having cloudy color tone corresponding to unique color of the the inorganic/organic composite particles 30. For example, in case the titanium hydroxide type inorganic compound is used as the EA inorganic substance, a cloudy color tone of the display portions can be achieved. Here if each of the inorganic/organic composite particles 30 is formed as a spherical shape, less possibility is supposed wherein the scattered lights are focused in the particular direction since scattering of the lights is spread in the omni-direction.

As a result, as shown in FIG.17, in the whole display device, the display portions 11 become opaque and the non-display portions 12 becomes transparent. Thus, the displays are conspicuous, and goods displayed in the interior can be seen through the transparent non-display portions 12.

Otherwise, in case, by operating the selection switches 177 and 178, the voltage is applied to the display portion transparent reference conductive layers 21 and the display portion transparent opposing conductive layers 22 and to the non-display portion transparent reference conductive layers 26 and the non-display portion transparent non-opposing conductive layers 28, the display portions 11 become transparent and the non-display portions 12 becomes opaque, as shown in FIG.18.

Consequently, transparent/opaque states of the display portions 11 and the non-display portions 12 can easily be reversed only by operating the selection switches 177 and 178.

Since the display device 1 of the second embodiment can be driven by, for example, the voltage of 0.1 to 5.0 kV/mm and very small electric current of 10 mA/$m^2$, it can be enoughly driven by small electric power of about 10 W/$m^2$. Thus, the display device having a power conservation structure can be achieved. Moreover, since the dielectric particles can be completely aligned within several seconds to several tens seconds after the voltage is applied to the transparent conductive layers, a fully quick response of the display device can be derived.

Furthermore, once the dielectric particles are aligned by the applied electric field, the dielectric particles are held as they are for a while after the voltage is cut off. Thus, as the voltage may be applied intermittently, electric power consumption of the display device can be reduced. By controlling the kinematic viscosity of the EA fluid, an alignment holding time of the dielectric particles can be suitably adjusted under the application of the voltage. In other words, if the kinematic viscosity of the EA fluid is decreased, the alignment holding time can be shortened while, if the kinematic viscosity of the EA fluid is increased, the alignment holding time can be prolonged.

The display device may be made by a simple structure comprising, for example, transparent substrates, transparent conductive layers, EA fluid, selection switches, and power source. Therefore, the EA fluid 16 previously explained is very cheap as 1/10 times or less than in cost in comparison with ordinary liquid crystal material. Incidentally, in contrast to the conventional display device using the liquid crystal, the display device having a simple structure can be provided at extremely low production cost.

In the above explanations, although there has been discussed the case wherein respective conductive layers are formed to have substantial comb-like shapes, the shapes of these conductive layers are not limited to this shape, and may take any shapes. If at least the opposing conductive layers are formed to oppose to the reference conductive layers and the non-opposing conductive layers are formed to be displaced from the reference conductive layers, any shape such as lattice, mesh, cross-stitch, dot pattern, and various geometrical pattern, for example, may be taken.

The display device of the second embodiment may be equipped with an illumination device such as electric light, laser, candle, etc. on the outside of the housing body. Consequently, the transparent parts are irradiated by the lights supplied from these illumination devices, so that displayed characters, etc. are conspicuous by the lights. In addition, a light coloring means such as a colored paraffin paper for coloring the lights supplied from the illumination device may be arranged between the illumination device and the housing body.

**(Third Embodiment)**

A display device according to a third embodiment of the present invention is an improvement of the first embodiment wherein a plurality of the display portions are stacked in a multilayered structure so that a plurality of characters, figures, etc. to be displayed can be switched at high speed.

FIG.23 shows a configuration of a display device according to a third embodiment of the present invention. As shown in FIG.23, in the display device of the third embodiment, a pair of transparent conductive layers 17, 17 explained in the first embodiment and a pair of another transparent conductive layers 171, 171 are stacked via a transparent insulating layer 45 to form the multilayered structure. In other words, the transparent insulating layer 45 made of glass plate, synthetic resin, etc. is arranged on the opposing face of the transparent conductive layers 17 of the first embodiment. Then two pairs of transparent conductive layers 171, 171 forming desired figure patterns such as numerals, characters, etc. are formed on the opposing face of the transparent insulating layer 45. Here, in stead of the display device having two layered structure in FIG.23, a three or more layered structure may be formed. A non-display portion, described later, may also be formed as a two or more layered structure.

For example, first two ITO (Indium Tin Oxide) glasses having a thickness of 1.0 mm, on inner faces of which the transparent conductive layers 17 made of ITO films are formed to have desired shapes such as numerals, characters, etc. at coincidental locations, are prepared. Then two glass sheets are opposed at a distance of 2 mm in parallel while respective transparent conductive layers 17 being faced to each other, and peripheral portions of two glass sheets are sealed by the resin sealing member 20. Next, an injection hole is formed on part of the sealing member 20 to inject the liquid EA fluid 16. After the injection, the injection hole is stopped up, thus forming a resultant first layer of the display device shown in FIG.23. Similarly, in the second layer of the display device, first two ITO (Indium Tin Oxide) glasses having a thickness of 1.0 mm, on inner faces of which the transparent conductive layers 171 made of ITO films are formed to have desired shapes at coincidental locations, are prepared. Then two glass sheets are opposed at a distance of 2 mm in parallel while respective transparent conductive layers 171 being faced to each other, and peripheral portions of two glass sheets are sealed by the resin sealing member 20. Next, an injection hole is formed on part of the sealing member 20 to inject the liquid EA fluid 16. After the injection, the injection hole is stopped up, thus forming a resultant second layer of the display device shown in FIG.23.

These transparent conductive layers 171, 171 are electrically connected to respective electrodes 211, 221 fitted on outer end portion of the transparent substrate 15. These electrodes 211, 221 are connected to a power source 231 via a switch 241.

By switching the switch 24 to the switch 241, figure patterns formed by the transparent conductive layers 171, 171. As shown in FIG.24, the figure patterns can be formed on the same surface as the display portion 40. In particular, by turning the switch 24 off, the inorganic/organic composite particles 30 are not aligned as the figure patterns formed of the transparent conductive layers 17, 17. In this state, by turning the switch 241 on, the inorganic/organic composite particles 30 are aligned in the predetermined direction correspondingly to the figure patterns formed of the transparent conductive layers 171, 171. As a result, since an amount of the transmitted light of the display device 40 can be controlled, the figure patterns of the transparent conductive layers 171, 171 can be seen.

FIG.25 shows an example of the third embodiment of the present invention when the character in FIG.24 is utilized in a glass show window. Then, at the same time when the characters are erased from the area wherein "BARGAIN SALE" are illustrated in the first embodiment shown in FIG.7, numerals "8/1 ~ 9/1" corresponding to a term of bargain sale can be displayed alternatively, as shown in FIG.25. As shown in FIG.26, if transparent characters (display portions 40) are to be displayed, the transparent conductive layers (display portion transparent conductive layers 17b) are formed so as to oppose to each other on inner surfaces of the display portions 40 of the transparent substrates 171, 171 except for the non-display portions 41, and then the voltage is applied to the display portion transparent conductive layers 17b.

Then, the display portions 40 become transparent because of the electric field and the non-display portions 41 still remain in an opaque state, to the contrary to the above instance. As a result, inverted characters can be displayed.

Hence, the display device having the above configuration can be easily switched from the opaque state to the transparent state, for example, by switching ON/OFF of the electric power supplied from the power source. Desired characters, numerals, figures etc. can be displayed on the glass plate of the glass show window.

In addition, since the display device of the first embodiment can be driven by the voltage of 0.1 to 5.0 kV/mm and very small electric current of several $mA/m^2$ at best, it can be enoughly driven by small electric power of about 10 $W/m^2$. Thus, the display device having a power conservation structure can be achieved. Moreover, since the inorganic/organic composite particles 30 can be completely aligned within several seconds to 20 seconds after the voltage is applied to the transparent conductive layers 17, 17, a fully quick response of the display device can be derived. Further, if an intensity of the transmitted lights is controlled by the EA fluid 16, the intensity of the transmitted lights can be controlled evenly over a full wavelength range without absorption of the light having particular frequency. Therefore, there are no possibility of heat generation due to light absorption, etc. so that the display device capable of eliminating waste of energy can be manufactured.

Furthermore, once the inorganic/organic composite particles 30 are aligned by the applied voltage, the inorganic/organic composite particles 30 are held as they are for a while after the voltage is turned off. Thus as the voltage may be applied intermittently, energy conservation driving of the display device can be realized. In accordance with the kinematic viscosity of the electrically insulating medium 19 in which the inorganic/organic composite particles 30 are dispersed, an alignment holding time of the inorganic/organic composite particles 30 can be adjusted under the application of the voltage. In other words, if the kinematic viscosity of the electrically insulating medium 19 is decreased, the alignment holding time can be shortened while, if the kinematic viscosity of the electrically insulating medium 19 is increased, the alignment holding time can be prolonged.

The display device aforementioned comprises the EA fluid containing the dielectric particles having the EA effect in the electrically insulating medium, and the hollow transparent housing body enclosing the EA fluid therein and having at least transparent part in two opposing faces. The display portions and the non-display portions are formed on the opposing transparent parts of the transparent housing body. One or more display portion transparent conductive layers are formed on one face of the transparent parts of the display portion whereas one or more display portion transparent conductive layers arranged to oppose to the above display portion transparent conductive layers are formed on other face of the transparent parts of the display portion. Therefore, in contrast to the conventional display device employing the liquid crystal, the display device having a simple structure can be provided at extremely low production cost. Incidentally, in comparison with ordinary liquid crystal material, the EA fluid previously discussed is very cheap like less than 1/10 in cost. In addition, although various control circuits and LSIs for driving the liquid crystal are required in the liquid crystal device, the display device of the present invention only needs a simple structure, as aforementioned, and the electric circuits of the power source can be formed only by a switch and several wirings.

Especially, since respective display portions are formed by stacking a plurality of transparent conductive layers via the transparent insulating layer, displayed characters, figures, etc. are switched by changing the display portion. Therefore, a large amount of characters, figures, figures, etc. can be displayed on the display portion, and they can also be displayed on the display portion in an enlarged form.

Like the first embodiment of the present invention, by dispersing the titanium hydroxide type inorganic/organic composite particles uniformly in the silicon oil having various kinematic viscosity so as to have various contain concentration in weight %, the EA fluid 16 can be derived which includes the fluid compositions having constant kinematic viscosity of the silicon oil and various particle concentrations, and the electrically insulating medium 19 having constant particle concentration and various kinematic viscosities of the silicon oil.

The display device of the third embodiment of the present invention is not restricted to the above structure. For instance, the transparent conductive layers 171, 171 are not limited to two pairs of those, and three pairs of transparent conductive layers or more may be stacked.

At this time, if the shapes of the transparent conductive layers 171, 171 are formed differently with each other, desired displays can be derived by applying the voltage to the desired transparent conductive layers 171, 171.

Further, after the previous displayed shape is erased by removing the voltage supply of the transparent conductive layers 17, display contents can be changed simply by supplying the voltage to other transparent conductive layers 171.

In addition, if an illumination device is arranged such that lights are enabled to irradiate on the transparent substrates 15, the transparent parts can be readily colored by irradiating the lights from the illumination device.

Alternatively, the display device of the third embodiment of the present invention may be equipped with another illumination device such as electric light, laser, candle, etc. on the outside of the housing body 18. Consequently, the transparent parts are lightened by the lights supplied from these illumination devices, so that displayed characters, etc. are conspicuous by the lights.

In addition, a light coloring means such as a colored paraffin paper for coloring the lights supplied from the illumination device may be arranged between the illumination device and the housing body 18. The displayed characters, etc. are further conspicuous by the light coloring means to attract passenger's attention.

**(Fourth Embodiment)**

A display device according to a fourth embodiment of the present invention is so formed that the display device according to the second embodiment wherein display and inverted display can be switched at high speed between the display portions and the non-display portions are stacked in a multilayered structure, and, by switching respective displays on the first layer, the second layer, the third layer.., a large number of characters, numerals, figures, etc. can be displayed at high speed.

With reference to FIGS.27 to 31, FIGS.17 and 18 used in the second embodiment, and FIGS.25 and 26 used in the third embodiment, the fourth embodiment of the present invention will be explained in detail hereinafter.

FIG.27 shows a configuration of a display device according to a fourth embodiment of the present invention. In the display device of the fourth embodiment in FIG.27, a pair of transparent electrodes 14, 15 are arranged at a predetermined distance in parallel. Outer peripheral portions of the transparent electrodes 14, 15 are sealed by a sealing member 20 to form a hollow transparent housing body. A liquid EA fluid 16 is enclosed in the transparent housing body.

The display device is separated into display portions 11 and non-display portions 12. Here the display portions 11 denotes parts displaying characters, figures, etc. thereon, and the non-display portions 12 denotes parts excluding the display portions 11.

In the display portions 11, display portion transparent reference conductive layers 211 are formed on an inner face of one transparent substrate 14 contacting to the EA fluid 16. Also display portion transparent opposing conductive layers 221 are formed on an inner face of the other transparent substrate 15 at coincident locations with those of the display portion transparent reference conductive layers 211. In addition, display portion transparent non-opposing conductive layers 231 are formed on an inner face of the other transparent substrate 15 at displaced locations with respect to the display portion transparent reference conductive layers 211.

In the display portions 11, another display portion is stacked via an electrically insulating layer 40. In other words, the display portion transparent opposing conductive layers 221 and the display portion transparent non-opposing conductive layers 231 are formed on one surface of the electrically insulating layer 40. The display portion transparent reference conductive layers 212 are formed on other surface of the electrically insulating layer 40. The display portion transparent opposing conductive layers 222 and the display portion transparent non-opposing conductive layers 232 are formed to oppose to the display portion transparent reference conductive layers 212 via the EA fluid 16. The display portion transparent opposing conductive layers 222 and the display portion transparent non-opposing conductive layers 232 are formed on the transparent substrate 15. Here a two layered structure is shown in FIG.27, but three or more layered structure may be used.

In the non-display portion 12, like the display portion 11, non-display portion transparent reference conductive layers 261 are arrange to oppose to non-display portion transparent opposing conductive layers 271 and non-display portion transparent non-opposing conductive layers 281 via the EA fluid 16. The non-display portion transparent reference conductive layers 261 and the non-display portion transparent opposing conductive layers 271 are formed at opposing locations to each other. While, the non-display portion transparent reference conductive layers 261 and non-display portion transparent non-opposing conductive layers 281 are formed at mutually displaced locations.

In addition, like the display portion 11, another non-display portion 12 is stacked on the lower portion of the non-display portion 12 via an transparent electrically insulating layer 40. In other words, the non-display portion transparent non-opposing conductive layers 271 and the non-display portion transparent non-opposing conductive layers 281 are formed on one surface of the electrically insulating layer 40. The non-display portion transparent reference conductive layers 262 is formed on lower surface of the electrically insulating layer 40. The non-display portion transparent opposing conductive layers 272 and the non-display portion transparent non-opposing conductive layers 282 are formed to oppose to the non-display portion transparent reference conductive layers 262 via the EA fluid 16. Here two layered structures of the display portion and the non-display portion are shown in FIG.27, but three or more layered structure may be used.

Respective conductive layers formed on inner surfaces of respective display portions 11 and non-display portions 12 are electrically isolated from each other. Connection leads are independently connected to these conductive layers so as to extend toward the outside of the housing body.

A connection lead 21a connected to the display portion transparent reference conductive layers 211 is connected to one terminal of the power source 91 provided on the outside of the housing body. The other terminal of the power source 91 is connected to an input terminal of a selection switch 171. Connection leads 22a and 23a respectively connected to the display portion transparent opposing conductive layers 221 and the display portion transparent non-opposing conductive layers 231 are connected to two output terminals of the selection switch 171. Therefore, by switching the selection switch 171, the voltage can be supplied selectively to either the display portion transparent reference conductive layers 211 and the display portion transparent opposing conductive layers 221 or the display portion transparent reference conductive layers 211 and the display portion transparent non-opposing conductive layers 231 from the power source 91.

In similar, a connection lead 21b connected to the display portion transparent reference conductive layers 212 as another display portion is connected to one terminal of another power source 92 provided on the outside of the housing body. The other terminal of the power source 92 is connected to an input terminal of a selection switch 172. Connection leads 22b and 23b respectively connected to the display portion transparent opposing conductive layers 222 and the display portion transparent non-opposing conductive layers 232 are connected to two output terminals of the selection switch 172. Therefore, by switching the selection switch 172, the voltage can be supplied selectively to either the display portion transparent reference conductive layers 212 and the display portion transparent opposing conductive layers 222 or the display portion transparent reference conductive layers 2121 and the display portion transparent non-opposing conductive layers 232 from the power source 92.

Also, although omitted in FIG.27, like the display portion 11 in the non-display portion 12, respective connection leads, power sources connected to the connection leads, and selection switches for changing connections between the power sources and the connection leads. By switching the selection switches, the voltage can be supplied selectively to either the non-display portion transparent reference conductive layers 261 and the non-display portion transparent opposing conductive layers 271 or the non-display portion transparent reference conductive layers 261 and the non-display portion transparent non-opposing conductive layers 281 from the power source.

Although omitted in FIG.27, in the second layer of the another non-display portion, respective conductive layers 262, 272, 282 are similarly connected to respective connection leads, another power sources, and another selection switches for changing connections between the another power sources and the connection leads. By switching the selection switches, the voltage can be supplied selectively to either the non-display portion transparent reference conductive layers 262 and the non-display portion transparent opposing conductive layers 272 or the non-display portion transparent reference conductive layers 262 and the non-display portion transparent non-opposing conductive layers 282 from the another power sources.

Now, with reference to FIGS.17 and 18 used in the second embodiment, the fourth embodiment will be explained hereinafter. FIGS.17 and 18 also show respectively an example of the display device according to the fourth embodiment of the present invention utilized in the glass show window. As in the second embodiment, in FIG.17, the display portions 11 are formed to have characters of "BARGAIN SALE", and the non-display portions 12 are formed as the parts excluding the display portions 11. FIGS.19 and 20 show respectively configurations of the transparent substrate together with conductive layers shown as A portions in FIGS.17 and 18 in an enlarged manner. The display portions 11 and the non-display portions 12 are formed in respective A portions.

FIG.28 is a perspective view showing the transparent substrate 14. At the bottom of the display portions 11 on the transparent substrate 14, the display portion transparent reference conductive layers 211 are formed to have a comb-like shape. In the non-display portions 12, the non-display portion transparent reference conductive layers 261 are also formed to have a comb-like shape.

FIG.29 is a perspective view showing the transparent substrate 15. On the surface of the display portions 11 of the transparent substrate 15, the display portion transparent opposing conductive layers 221 having the same shape as that of the display portion transparent reference conductive layers 211 are formed at opposing locations to those of the display portion transparent reference conductive layers 211. The display portion transparent non-opposing conductive layers 231 having an alternate shape with respect to the display portion transparent opposing conductive layers 221 are formed in the portion of the display portions 11 excluding the display portion transparent opposing conductive layers 221.

In the non-display portions 12 of the transparent substrate 15, the non-display portion transparent opposing conductive layers 271 are formed at opposing locations to those of the non-display portion transparent reference conductive layers 261, and the non-display portion transparent non-opposing conductive layers 281 are formed so as to cover remaining areas of the non-display portions 12.

The transparent substrates 14, 15 used in the display device are not limited especially, if they can enclose the EA fluid 16 therein and have mechanical strength enough to be carried and installed. But, it is desired that they may be formed by transparent resin substrate etc. such as various glass substrates and acrylic resins. The transparent substrates 14, 15 may be formed as not only an entire transparent structure, but also a partial transparent structure which correspond to at least display portions and their neighbor portions. Therefore, only peripheral portions may be formed by opaque metal frames, resin frames etc., and transparent glass substrates, transparent resin substrates are fitted in the frames.

In principle, the EA fluid 16 is formed by dispersing dielectric particles (EA particles) having the EA effect in the electrically insulating medium, which is the same as that explained in the first to third embodiments of the present invention. That is, as shown in FIG.4B, it is preferable that the EA particle is formed of the inorganic/organic composite particles 30 which comprises the core 31 comprising the organic polymeric compound and the shell 33 comprising the EA inorganic substance 32. As examples of organic polymeric compounds available for the cores 31 of the inorganic/organic composite particles 30, one kind or two kinds or more of mixtures or copolymers such as poly(meta)acrylic acid ester, (meta)acrylic acid ester-styrene copolymer, polystyrene, polyethylene, polypropylene, nitride rubber, butyl rubber, ABS resin, nylon, polyvinyl butylate, ionomer, ethylene-vinyl acetate copolymer, vinyl acetate resin, polycarbonate, etc. can be raised. Various inorganic substances are usable as the EA inorganic compounds 32 forming the shells 33, but inorganic ion-exchangers, silica gel, semiconductor type inorganic substance are preferable, like the first embodiment. As has been discussed in the first to third embodiments, as the inorganic ion-exchanger of the present invention, there can be listed (1) multivalent metal hydroxide, (2) hydrotalcites, (3) multivalent metal acid salt, (4) hydroxyapatite, (5) nashicon type compound, (6) clay mineral, (7) potassium titanades, (8) heteropolyacid salt, and (9) insoluble ferrocyanide. The preferable EA inorganic substances which can be used as the shell 33 of the inorganic/organic composite particles 30 are raised as follows. That is, metal oxide, metal hydroxide, metal oxide-hydroxide, inorganic ion-exchanger, all having conductivity of $10^3$ to $10^{-11}$ $\Omega^{-1}$/cm at a room temperature, at least one kind of these substances to which metal is doped, at least one kind of these substances which is formed as a semiconductor layer on other supporting member irrespective of metal doping, and the like are used.

In the meanwhile, as the electrically insulating medium used in the EA fluid 16, all insulating medii used in the conventionally known electro-alignment fluid may also be used. In other words, any electrically insulating medii and their mixtures may be used if they have high electrical resistance and high dielectric breakdown strength, and are chemically stable, and enable the inorganic/organic composite particles 30 to be dispersed therein. For instance, diphenyl chloride, sebacic acid bytyl, aromatic polycar-boxylic acid higher alcohol ester, halophenylalkylester, transformer oil, paraffin chloride, fluorine type oil, silicon type oil, fluorosilicon oil, and the like, can be listed. The electrically insulating medium may be colored according to its purpose. In this case, it is desired that type and amount of solvent dye or disperse dye, which are soluble in selected electrically insulating medium and do not damage electric properties of the electrically insulating medium, must be selected. In addition, the electrically insulating medium may further include disperse agent, surfactant, viscosity adjusting agent, antioxidant, stabilizer, etc..

The concentration of the EA particles in the electrically insulating medium, which is effective for control of an intensity of the transmitted lights is not limited especially, but it is preferable that it is within a range of 0.5 to 15 weight %. If the concentration of the EA particles is less than 0.5 weight %, density of the EA particles are too small so that the EA fluid 16 still has a little transparency. Thus, sufficient contrast of the EA fluid 16 cannot be attained even when the voltage is imposed thereto. On the other hand, if the concentration of the EA particles is more than 15 weight %, the concentration of the composite particles becomes excessive. Therefore, enough transparency cannot be caused sometimes even when the electric field is applied so as to align the EA particles. In view of these respects, it is desired that the concentration of the EA particles in the electrically insulating medium should be within a range of 2.5 weight % to 10 weight %.

Next, the kinematic viscosity of the electrically insulating medium used in the fourth embodiment of the present invention is preferable within a range of 1 to 3000 cSt. If the kinematic viscosity is less than 1 cSt, a plenty of volatile components exist in the disperse agent so that the EA fluid composition lacks enough preservation stability. On the contrary, if the kinematic viscosity is more than 3000 cSt, it becomes hard to escape vapors from the electrically insulating medium. In case the vapors remain in the electrically insulating medium, sometimes troubles are caused to handle it. A more preferable range of the kinematic viscosity of the electrically insulating medium is 10 to 1000 cSt.

Next, as the applied voltage to the EA fluid 16, any voltage can be imposed within a range of 0.1 kV/mm to 5.0 kV/mm, for example. But, note that a higher voltage in excess of this range may be imposed. In addition, in this range of the applied voltage, it is more preferable to set the applied voltage in a range of 0.25 to 1.5 kV/mm.

Subsequently, an operation of the above display device will be explained. For example, in the first layer of the display portion and the non-display portion, when the voltage is applied by operating the selection switches 171 and the another selection switches to the display portion transparent reference conductive layers 211 and the display portion transparent non-opposing conductive layers 231 and to the non-display portion transparent reference conductive layers 261 and the non-display portion transparent opposing conductive layers 271, the electric field is formed between upper and lower opposed conductive layers in the non-display portion 12, as shown in FIG.30. Thus, the inorganic/organic composite particles 30 contained in the EA fluid 16 between the opposed conductive layers are polarized, and then aligned in the direction perpendicular to the substrate to be connected like chain-like structures between the opposed conductive layers. These chain-like structures are aligned in parallel to have mutually a certain distance.

Now, since the concentration of the inorganic/organic composite particles 30 dispersed in the EA fluid 16 is within a range of about several weight % to 20 weight %, a total amount of the composite particles 30 is small as a whole. Therefore, when the composite particles 30 are aligned to form the chain-like structures, distances between the chain-like structures become considerably wider than the diameter of the dielectric particles. Thereby, incident lights into the housing body along the thickness direction of the housing body can be passed through the housing body without substantial attenuation. Accordingly, a substantial transparent state is caused in the non-display portion.

On the contrary, since, in the display portion 11, the electric field is applied to the display portion transparent reference conductive layers 211 and the display portion transparent non-opposing conductive layers 231, both being arranged at mutually displaced locations, the inorganic/organic composite particles 30 dispersed in the EA fluid 16 therebetween are coupled in an inclined state against the substrate to form the chain-like structures. In this state, since incident lights are interrupted due to presence of the chain-like structure of the inorganic/organic composite particles 30, the display portion 11 becomes an opaque state having cloudy color tone corresponding to unique color of the the inorganic/organic composite particles 30. For example, in case the titanium hydroxide type inorganic compound is used as the EA inorganic substance, a cloudy color tone of the display portions can be achieved. Here if each of the inorganic/organic composite particles 30 is formed as a spherical shape, less possibility is supposed wherein the scattered lights are focused in the particular direction since scattering of the lights is spread in the omni-direction.

As a result, as shown in FIG.17, in the whole display device, the display portions 11 become opaque and the non-display portions 12 becomes transparent. Thus, the displays are conspicuous, and goods displayed in the interior can be seen through the transparent non-display portions 12.

Otherwise, in case, by operating the selection switches 171 and the not shown selection switches, the voltage is applied to the display portion transparent reference conductive layers 211 and the display portion transparent opposing conductive layers 221 and to the non-display portion transparent reference conductive layers 261 and the non-display portion transparent non-opposing conductive layers 281, the display portions 11 become transparent and the non-display portions 12 becomes opaque, as shown in FIG.18.

Consequently, transparent/opaque states of the display portions 11 and the non-display portions 12 can easily be reversed only by operating the above selection switches.

In addition, in the second layer of the display portion and the non-display portion, when the voltage is applied by operating the selection switches 172 and the another selection switches to the display portion transparent reference conductive layers 212 and the display portion transparent non-opposing conductive layers 232 and to the non-display portion transparent reference conductive layers 262 and the non-display portion transparent opposing conductive layers 272, the electric field is formed between upper and lower opposed conductive layers in the non-display portion 12, as shown in FIG.30. Thus, the inorganic/organic composite particles 30 contained in the EA fluid 16 between the opposed conductive layers are polarized, and then aligned in the direction perpendicular to the substrate to be connected like chain-like structures between the opposed conductive layers. These chain-like structures are aligned in parallel to have mutually a certain distance.

On the contrary, since, in the display portion, the electric field is applied to the display portion transparent reference conductive layers 212 and the display portion transparent non-opposing conductive layers 232, both being arranged at mutually displaced locations, the inorganic/organic composite particles 30 dispersed in the EA fluid 16 therebetween are coupled in an inclined state against the substrate to form the chain-like structures. In this state, since incident lights are interrupted due to presence of the chain-like structure of the inorganic/organic composite particles 30, the display portion 11 becomes an opaque state having cloudy color tone corresponding to unique color of the the inorganic/organic composite particles 30.

As a result, as shown in FIG.25, in the whole display device, the display portions 11 become opaque and the non-display portions 12 becomes transparent. Thus, the displays of "8/1 ~ 9/1" in place of the above characters "BARGAIN SALE" become conspicuous, and goods displayed in the interior can be seen through the transparent non-display portions 12.

Otherwise, in case, by operating the selection switches 172 and the not shown selection switches, the voltage is applied to the display portion transparent reference conductive layers 212 and the display portion transparent opposing conductive layers 222 and to the non-display portion transparent reference conductive layers 262 and the non-display portion transparent non-opposing conductive layers 282, the display portions 11 become transparent and the non-display portions 12 becomes opaque, as shown in FIG.26.

Consequently, transparent/opaque states of the display portions 11 and the non-display portions 12 can easily be reversed only by operating the above selection switches.

Since the display device of the fourth embodiment can be driven by, for example, the voltage of 0.1 to 5.0 kV/mm and very small electric current of 10 $mA/m^2$, it can be enoughly driven by small electric power of about 10 $W/m^2$. Thus, the display device having a power conservation structure can be achieved. Moreover, since the dielectric particles can be completely aligned within several seconds to several tens seconds after the voltage is applied to the transparent conductive layers, a fully quick response of the display device can be derived.

Furthermore, once the dielectric particles are aligned by the applied electric field, the dielectric particles are held as they are for a while after the voltage is cut off. Thus, as the voltage may be applied intermittently, electric power consumption of the display device can be reduced. By controlling the kinematic viscosity of the EA fluid, an alignment holding time of the dielectric particles can be suitably adjusted under the application of the voltage. In other words, if the kinematic viscosity of the EA fluid is decreased, the alignment holding time can be shortened while, if the kinematic viscosity of the EA fluid is increased, the alignment holding time can be prolonged.

The display device may be made by a simple structure comprising, for example, transparent substrates, transparent conductive layers, EA fluid, selection switches, and power source. Therefore, the EA fluid 16 previously explained is very cheap as 1/10 times or less than in cost in comparison with ordinary liquid crystal material. Incidentally, in contrast to the conventional display device using the liquid crystal, the display device having a simple structure can be provided at extremely low production cost.

In particular, since the display devices 11 and the non-display devices 12 are stacked in a multilayered fashion via the transparent insulating layer 40, different characters, figures, etc. are displayed separately on a plurality of the display devices 11 and the non-display devices 12. In other words, since characters, figures, etc. displayed on respective display devices and non-display devices can be switched, a large number of characters, numerals, figures, etc. can be displayed and enlarged characters, etc. can also be displayed.

In the above explanations, although there has been discussed the case wherein respective conductive layers are formed to have substantial comb-like shapes, the shapes of these conductive layers are not limited to this shape, and may take any shapes. If at least the opposing conductive layers are formed to oppose to the reference conductive layers and the non-opposing conductive layers are formed to be displaced from the reference conductive layers, any shape such as lattice, mesh, cross-stitch, dot pattern, and various geometrical pattern, for example, may be taken.

The display device of the fourth embodiment may be equipped with an illumination device such as electric light, laser, candle, etc. on the outside of the housing body. Consequently, the transparent parts are irradiated by the lights supplied from these illumination devices, so that displayed characters, etc. are conspicuous by the lights.

In addition, a light coloring means such as a colored paraffin paper for coloring the lights supplied from the illumination device may be arranged between the illumination device and the housing body. The displayed characters, etc. are further conspicuous by the light coloring means to attract passenger's attention.

Further, if the electrically insulating medium is colored, complicated coloration can be provided and a delicate color tone can be attained.

**(Fifth Embodiment)**

A display device according to a fifth embodiment of the present invention is relevant to a display device arranged on the surface of a passage, etc. shown in FIG.32, i.e., a display device arranged horizontally or substantially horizontally to display characters, numerals, figures, etc.

With reference to FIGS.32 to 39, the fifth embodiment of the present invention will be explained in detail hereinafter.

FIG.32 is a perspective view showing a display device according to a fifth embodiment of the present invention. FIG.33 is sectional view showing a state wherein voltage is not imposed to the display device in FIG.32. In the display device of the fifth embodiment, as shown in FIG.33, a pair transparent substrates 15, 15 are arranged at a predetermined distance in parallel to constitute a housing body 18, and a liquid EA fluid 16 is enclosed between the transparent substrates 15, 15. Transparent conductive layers 173, 174 are formed respectively on opposing inner walls of the transparent substrates 15, 15.

As shown in FIG.34, a lower transparent conductive layer 173 of the transparent conductive layers are formed to cover an entire inner face of the transparent substrate 15. An upper transparent conductive layer 174 is formed by one line conductor 17a or more having a finite or infinite shape and one line conductor 17b or more having a finite or infinite shape adjacent to the line conductor 17a and having different polarity on the transparent substrate 15. These line conductors 17a, 17b are arranged opposedly to have profiles along the longitudinal direction of an arrow in FIG.34. Engagement portions 17c, 17d are formed to project from these line conductors 17a, 17b in the direction perpendicular thereto. These engagement portions 17c, 17d are alternatively arranged at a predetermined distance along the longitudinal direction of a figure to be displayed.

The line conductors 17a, 17c are connected to one terminal of a switch S via a power source V. Other terminal of the switch S is connected alternatively to the lower transparent conductive layer 173 and the line conductors 17b, 17d having different polarity.

Although omitted from FIG.33, a sealing member is fitted between outer peripheral portions of the transparent substrates 15, 15. The EA fluid 16 is enclosed in a plate-like hollow transparent housing body 18 formed by the transparent substrates 15, 15 and the sealing member.

As shown in FIG.35, electrode portions to be electrically connected to the transparent conductive layers 173, 174 are formed on outer edge portions of the transparent substrates 15, 15. The electrode portions are connected to the power source V via the switch S.

It is desired that, since the transparent substrates 15, 15 must enclose the EA fluid 16 therein and have mechanical strength enough to be carried and installed, they may be formed by transparent resin substrate etc. such as various glass substrates and acrylic resins. The transparent substrates 15, 15 may be formed as not only an entire transparent structure, but also a partial transparent structure in which lights can be transmitted through transparent portions. Therefore, only peripheral portions may be formed by opaque metal frames, resin frames etc., and transparent glass substrates, transparent resin substrates are fitted in the frames. In addition, shapes of the transparent substrates 15, 15 are not limited especially, but the plate-like shapes are ordinarily used.

The EA fluid 16 is basically the same as that explained in the first embodiment of the present invention, which is formed by dispersing inorganic/organic composite particles 30 having structures shown in FIG.4B into the electrically insulating medium 19. The inorganic/organic composite particles 30 comprise cores 31 comprising organic polymeric compound, and shells 33 comprising EA inorganic compounds 32 covering the surface of the cores 31 and producing the EA effect.

Various inorganic compounds are known as the EA inorganic compounds 32. As preferable instances of the inorganic compounds, inorganic ion-exchangers such as multivalent metal hydroxide, hydrotalcites, multivalent metal acid salt, hydroxyapatite, nashicon type compound, clay mineral, potassium titanades, heteropolyacid salt, or insoluble ferrocyanide; silica gel; and semiconductor type inorganic substance can be listed.

When the EA inorganic compounds 32 are formed on the cores 31 comprising organic polymeric compound as the shells 33, the EA effect is produced by the EA fluid 16. And, it is preferable that the inorganic/organic composite particles 30 may be manufactured by simultaneously forming the cores 31 and the shells 33.

As examples of organic macromolecular compounds available for the cores 31 of the inorganic/organic composite particles 30, one kind or two kinds or more of mixtures or copolymers such as poly(meta)acrylic acid ester, (meta)acrylic acid ester-styrene copolymer, polystyrene, polyethylene, polypropylene, nitride rubber, butyl rubber, ABS resin, nylon, polyvinyl butylate, ionomer, ethylene-vinyl acetate copolymer, vinyl acetate resin, polycarbonate, etc. can be listed.

The preferable EA inorganic compounds 32 which are usable as the shells 33 of the inorganic/organic composite particles 30 may be formed of inorganic ion-exchangers, semiconductor type inorganic compounds, and silica gels. These compounds exhibit the excellent EA effect when the solid particles are dispersed into the electrically insulating medium 19. Like the first embodiment of the present invention, as the inorganic ion-exchanger of the present invention, there can be listed (1) multivalent metal hydroxide, (2) hydrotalcites, (3) multivalent metal acid salt, (4) hydroxyapatite, (5) nashicon type compound, (6) clay mineral, (7) potassium titanades, (8) heteropolyacid salt, and (9) insoluble ferrocyanide.

The preferable EA inorganic substances which can be used as the outer layer 33 of the inorganic/organic composite particles 30 are raised as follows. That is, metal oxide, metal hydroxide, metal oxide-hydroxide, inorganic ion-exchanger, all having conductivity of $10^3$ to $10^{-11}$ $\Omega^{-1}$/cm at a room temperature, at least one kind of these substances to which metal is doped, at least one kind of these substances which is formed as a semiconductor layer on other supporting member irrespective of metal doping, and the like are used. These are the same as the first embodiment of the present invention.

As the electrically insulating medium 19 used in the EA fluid 16, insulating medii used in the conventionally known electro-alignment fluid may also be used. In other words, any electrically insulating medii and their mixtures may be used if the electrically insulating medium 19 has specific gravity larger than those of the inorganic/organic composite particles 30, and has high electrical resistance and high dielectric breakdown strength, and are chemically stable, and enable the inorganic/organic composite particles 30 to be dispersed therein. For instance, in case specific gravity of the inorganic/organic composite particles 30 is smaller than about 1.5, perfluoro compound having larger specific gravity than that of the composite particles 30 may be used. As such perfluoro compound, there are KRYTOX GPL100 manufactured by Dupont Japan Ltd. and having properties of specific gravity of 1.87 at 0°C, specific gravity of 1.67 at 100°C , kinematic viscosity 7 cSt at 20°C , and kinematic viscosity 4 cSt at 40°C ; KRYTOX GPL101 manufactured by the same and having properties of specific gravity of 1.89 at 0°C , specific gravity of 1.70 at 100°C , kinematic viscosity 16 cSt at 20°C , and kinematic viscosity 8 cSt at 40°C ; FLUORINERT FC-40 manufactured by SIMUTOMO-3M LIMITED and having properties of specific gravity of 1.87 and kinematic viscosity 2.2 cSt at 25°C ; FLUORINERT FC-43 manufactured by the same and having properties of specific gravity of 1.88 and kinematic viscosity 2.8 cSt at 25°C ; FLUORINERT FC-70 manufactured by the same and having properties of specific gravity of 1.94 and kinematic viscosity 14.0 cSt at 25°C ; and phosphazen oil, OHTSUKA PHOSFAROL NF-36 manufactured by OHTSUKA CHEMICAL Co., Ltd. and having properties of specific gravity of 1.75 at 15°C and kinematic viscosity of 37 cSt at 40°C .

In the meanwhile, the electrically insulating medium 19 is not limited to above instances. Any electrically insulating medium may be used in the EA fluid 16, if it has specific gravity larger than those of the inorganic/organic composite particles 30. For example, if specific gravity of the inorganic/organic composite particles 30 is 1.0, various halogen elements containing medii such as diphenyl chloride, paraffin chloride, bromine oil, fluorocarbon type oil, fluorosilicon type oil, fluorine type medium, and methylphenylpolysiloxane type silicon oil can be listed. Their mixture may also be used.

The electrically insulating medium 19 may be colored according to its purpose. In this case, it is desired that type and amount of solvent dye or disperse dye, which are soluble in selected electrically insulating medium and do not damage electric properties of the electrically insulating medium, must be selected.

Although diameters of the inorganic/organic composite particles 30 are not especially limited, it is preferable that they are within a range of 0.1 to 500 µm, particularly, a range of 5 to 200 µm. At this time, although diameters of the EA inorganic substances 32 are not especially limited, it is preferable that they are within a range of 0.005 to 100 µm, particularly, a range of 0.01 to 10 µm.

In the inorganic/organic composite particles 30, a weight ratio of the EA inorganic microparticles 32 forming the outer layer 33 and the organic polymeric compound forming the core particles 31 is not limited particularly. However, it is preferable that a weight ratio of (EA inorganic microparticles) : (organic polymeric compound) is within a range of (1 to 60) : (99 to 40), especially, a range of (4 to 30) : (96 to 70). Here, if the weight ratio of the EA inorganic microparticles 32 is less than 1 %, the electro-alignment effect caused by the resultant EA fluid 16 becomes insufficient whereas, if the weight ratio of the EA inorganic microparticles 32 is more than 60 %, an excessive electric current flows in the resultant EA fluid 16.

Since the organic polymeric compound having relatively small specific gravity may be used as the core 31, specific gravity of the inorganic/organic composite particles 30 can be decreased to a relatively small value in contrast to that of the EA inorganic substance 32 forming the outer layer 33. In accordance with the ratio and kinds of the organic polymeric compound and the EA inorganic substance, specific gravity of the inorganic/organic composite particles 30 can be adjusted freely. In general, specific gravity thereof is adjusted in a range of 1.0 to 2.0 in connection to the electrically insulating medium used.

Note that the shell 33 and the core particles 31 of the inorganic/organic composite particles 30, both including dyestuff, may also be used. The dyestuff usable in the shell 33 is pigment. It is desired that this pigment should be included in the shell 33 to be mixed with the EA inorganic substance 32 when the shell 33 made of the EA inorganic substance 32 is formed by the method explained in the first embodiment of the present invention on the core 31.

In case the dyestuff is included in the core 31, either dye or pigment known generally as those used for synthetic resin may be used. This dyestuff can be so included in the core 31 that monomer is polymerized after the dyestuff is mixed in advance in the monomer forming the core 31, or that the dyestuff is kneaded into the synthetic resin forming the core 31.

If the inorganic/organic composite particles 30 including the dyestuff in either the shell 33 or the core 31 or in both of them is utilized, scattering light of the display device can be colored in any color when the voltage is not imposed to the resultant EA fluid 16.

For example, if titanium hydroxide or silica gel is mixed, white color can be attained. If blue pigment of phthalocyanine blue (DAINICHISEIKA COLOR & CHEMICALS Mfg. Co., Ltd., cyanine blue S-32) is mixed, blue color can be attained. If yellow pigment of fast yellow (DAINICHISEIKA COLOR & CHEMICALS Mfg. Co., Ltd., NL fast yellow 5GS), yellow color can be achieved. In addition, if black triiron tetraoxide (Fe3O4) formed of semiconductor inorganic substance, black color can be obtained. If red diiron trioxide (Fe2O3) formed of semiconductor inorganic substance, red color can be obtained.

In general, in the inorganic/organic composite particles 30 manufactured by the above various methods, in particular, the method of simultaneously forming the core 31 and the shell 33, there are some cases wherein the EA effect to be caused by the EA inorganic microparticles 32 cannot be sufficiently produced since part of the surface or the entire surface of the shell 33 is covered with the inorganic macromolecular substance or the thin film of additions such as disperse agent, emulsifier, etc. used in manufacturing processes. The thin film of the inactive substance can be readily removed by polishing the surfaces of the EA inorganic microparticles 32.

The surface of the inorganic/organic composite particles 30 can be polished by the methods explained in the first embodiment of the present invention.

Although the concentration of the inorganic/organic composite particles 30 in the EA fluid 16 used in the fifth embodiment of the present invention is not limited especially, it is preferable that it is within a range of 0.5 to 15 weight %. If the concentration of the composite particles 30 is less than 0.5 weight %, a sufficient transmitted light control effect cannot be attained. On the other hand, if the concentration of the composite particles 30 is more than 15 weight %, a large amount of the inorganic/organic composite particles 30 are mixed in the EA fluid 16 because of too large concentration of the composite particles 30. Therefore, enough transparency cannot be caused sometimes when the electric field is applied so as to align the inorganic/organic composite particles 30, as described later. Next, the kinematic viscosity of the electrically insulating medium 19 used in the present invention is preferable within a range of 1 to 3000 cSt. If the kinematic viscosity is less than 1 cSt, a plenty of volatile components exist in the disperse agent so that the EA fluid lacks enough preservation stability. On the contrary, if the kinematic viscosity is more than 3000 cSt, it becomes hard to escape vapors from the electrically insulating medium 19. In case the vapors remain in the electrically insulating medium 19, sometimes discharges are generated partially in micro-areas of the vapors to cause sparks, thus causing insulation deterioration. A more preferable range of the kinematic viscosity of the electrically insulating medium 19 is 10 to 1000 cSt. Further, a more preferable range of the kinematic viscosity of the electrically insulating medium 19 is 10 to 100 cSt.

Next, as the applied voltage to the EA fluid 16, any voltage can be imposed within a range of 0.1 to 5.0 kV/mm, for example. But, note that a high voltage in excess of this range may be imposed. In addition, in this range of the applied voltage, it is more preferable to set the applied voltage in a range of 0.25 to 1.5 kV/mm.

Subsequently, an operational principle of the display device A shown in FIG.32 for controlling transmitted light to obtain a desired display will be explained. The display device A shown in FIG.32 is formed such that, for example, first the transparent conductive layers made of ITO (Indium Tin Oxide) films are formed on the surface of the plate glass of the glass show window to cover the entire surface of the display portion, as shown in FIG.34, and the transparent conductive layers having line conductors and line conductor having different polarity are formed on the surface of another plate glass. Then, two ITO glasses having a thickness of 1.0 mm, on which the transparent conductive layers are formed at coincidental locations, are prepared. Then two glass sheets are opposed at a distance of 2 mm in parallel while respective transparent conductive layers being faced to each other, and peripheral portions of two glass sheets are sealed by the resin sealing member. Next, an injection hole is formed on part of the sealing member to inject the titanium hydroxide type EA fluid. After the injection, the injection hole is stopped up, thus forming a resultant display device A shown in FIG.32 in a state wherein the line conductors and the line conductor having different polarity are set upwardly.

FIG.33 shows a dispersed state of the inorganic/organic composite particles wherein the voltage is not applied to the transparent conductive layers 173, 174 of the display device A by opening a switch S. In this state, the inorganic/organic composite particles 30 are suspended in an upper portion of the electrically insulating medium 19 at random since the electric field is not imposed thereto. In this state, since incident lights into the housing body 18 are scattered into various directions due to presence of the inorganic/organic composite particles 30, the housing body 18 becomes opaque. For example, in case the titanium hydroxide type inorganic compound is used as the EA inorganic substance 32, a cloudy color tone of the housing body 18 can be achieved.

If the dyestuff is included in either the outer layer 33 or the core body 31 or in both of them of the inorganic/organic composite particles 30, the housing body 18 is colored in certain color according to the dyestuff.

Here if each of the inorganic/organic composite particles 30 is formed as a spherical shape, less possibility is supposed wherein the scattered lights are focused in the particular direction since scattering of the lights is spread in the omni-direction.

Next, FIG.35 shows an aligned state of the inorganic/organic composite particles wherein the voltage is applied to the transparent conductive layers 173, 174 of the display device A by closing the switch S. In this state, the inorganic/organic composite particles 30 can be aligned between the transparent conductive layers 173, 174 so as to form chain-like structures 301 in the direction perpendicular to these transparent conductive layers 173, 174 and, at the same time, the chain-like structures 301 can be aligned mutually in parallel.

In other words, since, as aforementioned, the concentration of the inorganic/organic composite particles 30 dispersed in the electrically insulating medium 19 is about less than 10 weight %, a total amount of the composite particles 30 is small as a whole. Therefore, when the composite particles 30 are aligned to form the chain-like structures 301, distances between the chain-like structures 301 become considerably wider than the diameter of the inorganic/organic composite particles 30. Thereby, incident lights into the housing body 18 along the thickness direction of the housing body 18 can be passed through the housing body 18 without substantial attenuation. Accordingly, this cause the housing body 18 to be in a transparent state.

With the above operations, according to whether the voltage is applied to the transparent conductive layers 173, 174 or not, the housing body 18 can be transferred from the transparent state to the opaque state and vice versa.

Next, the switch S is changed to be connected to the line conductor 17b having different polarity, the inorganic/organic composite particles 30 are aligned between the engagement 17c of the line conductor 17a and the engagement 17d of the line conductor 17b having different polarity. In other words, the inorganic/organic composite particles 30 are aligned along the surface of the housing body 18 which corresponds to the surface of the transparent conductive layers 174 to thus form a face body 302. Incident lights which are input from one surface of the housing body 18 are interrupted by the resultant face body 302, part of the housing body 18 becomes a dark cloudy glass state. Thus, figures can be displayed as shown in FIG.32. In addition, particles in the area wherein electrodes are not formed are almost attracted to the electrode side. As a result, parts having no electrodes becomes a transparent state.

By switching the switch like this, characters et. al. can be displayed simply on the housing body 18.

Here, manufacturing steps of the titanium hydroxide type EA fluid 16 used in the display device A shown in FIG.32 will be explained hereinafter. First a mixture which is formed of titanium hydroxide (general name; titanium oxide hydrate, ISHIHARA SANGYO KAISHA, Ltd., C-II), butyl acrylic acid, 1,3- butylene glycol dimethacrylate, and polymerization initiator is dispersed in water which includes calcium tertiary phosphate as a dispersion stabilizer, and then suspension polymerization is performed for one hour and at 60°C with stirring water. Thereafter a resultant product is filtered, then is subject to acid cleaning, and is rinsed and then dried to thus obtain the inorganic/organic composite particles 30. The resultant inorganic/organic composite particles 30 are stirred by the jet air stream using a jet air stream stirring machine (NARA MACHINERY Co., Ltd.) to form polished inorganic/organic composite particles 30. The composite particles 30 have specific gravity of 1.157 and average particle diameter of 13.7 μm. By dispersing the inorganic/organic composite particles 30 uniformly in the silicon oil (TOSHIBA SILICON Co., Ltd., TSF451 Series) having various kinematic viscosity so as to have various contain concentration in weight %, the EA fluid 16 can be derived which includes the fluid compositions having constant kinematic viscosity of the silicon oil and various particle concentrations, and the electrically insulating medium 19 having constant particle concentration and various kinematic viscosities of the silicon oil.

In addition, since the display device A shown in FIG.32 can be driven by the voltage of 0.1 to 5.0 kV/mm and very small electric current of several $mA/m^2$ at best, it can be enoughly driven by small electric power of about 10 $W/m^2$. Thus, the display device having a power conservation structure can be achieved. Moreover, since the inorganic/organic composite particles 30 can be completely aligned within several seconds to 20 seconds after the voltage is applied to the transparent conductive layers 17, 17, a fully quick response of the display device can be derived. Further, if an intensity of the transmitted lights is controlled by the EA fluid 16, the amount of the transmitted lights can be controlled evenly over a full wavelength range without absorption of the light having particular frequency. Therefore, there are no possibility of heat generation due to light absorption, etc. so that the display device capable of eliminating waste of energy can be manufactured.

Furthermore, once the inorganic/organic composite particles 30 are aligned by the applied voltage, the inorganic/organic composite particles 30 are held as they are for a while after the voltage is turned off. Thus as the voltage may be applied intermittently, energy conservation driving of the display device can be realized. In accordance with the kinematic viscosity of the electrically insulating medium 19 in which the inorganic/organic composite particles 30 are dispersed, an alignment holding time of the inorganic/organic composite particles 30 can be adjusted under the application of the voltage. In other words, if the kinematic viscosity of the electrically insulating medium 19 is decreased, the alignment holding time can be shortened while, if the kinematic viscosity of the electrically insulating medium 19 is increased, the alignment holding time can be prolonged.

Although, in the explanations regarding FIG.35, the inorganic/organic composite particles 30 are aligned in parallel to form line-type chain-like structures 301 by application of the voltage, a plurality of the chain-like structures 301 are formed in place of the line-type chain-like structures 301 if the number of the inorganic/organic composite particles 30 is increased in excess of 1 weight %. As a result, as shown in FIG.37, the inorganic/organic composite particles 30 are aligned to form columns C.

In these columns C, the inorganic/organic composite particles 30 of the chain-like structures 301 in the right and left are adjacently coupled alternatively one by one. The present inventors have supposed that this is because the inorganic/organic composite particles 30 can stay in their stable state in energy if the inorganic/organic composite particles 30 which are polarized to (+) polarity portions and (-) polarity portions, as shown in FIG.38, are adjacently aligned in an alternative manner due to mutual attraction of (+) polarity portions and (-) polarity portions.

Therefore, if a large amount of the inorganic/organic composite particles 30 are contained, a large number of columns C are formed between the electrodes. The mechanism of increasing the transmitted lights is generated by the columns C. In this case, since a large amount of the inorganic/organic composite particles 30 can be coupled as a plurality of columns C, a distance between adjacent columns is increased largely and thus a function for increasing transmitted light is enhanced remarkably.

Meanwhile, the inorganic/organic composite particles 30 function as either light scattering type particles or light reflecting type particles, so that diameters of the inorganic/organic composite particles 30 are set within a range of 0.1 to 500 μm, preferably 5 to 200 μm, as aforementioned. As well known, since wavelengths of visible lights span from 380 to 780 nm, i.e., 0.38 to 0.78 μm, the diameters of the inorganic/organic composite particles 30 must be formed more

than 0.1 μm at lowest, preferably more than 5 μm, in order to control the transmitted lights by scattering or reflecting the light having such wavelengths.

On the other hand, in case dielectric microparticles or ultra-fine particles having smaller diameters than wavelengths of the visible lights causing Brawnian motion, for instance, about 5 nm to several tens nm (=0.005 to 0.02 μm) are dispersed in the electrically insulating medium 19, the ultra-fine dielectric particles may be aligned by the electric field. But, in this case, a light transmitting mechanism is completely different from that in the fifth embodiment of the present invention. In other words, the ultra-fine dielectric particles are dispersed under no application of electric field to transmit the lights, whereas the ultra-fine dielectric particles are aligned under application of the electric field to scatter the lights, thus causing attenuation of the incident lights. Therefore, it is not preferable since the ultra-fine dielectric particles exhibit completely different behavior from those of the inorganic/organic composite particles 30.

Next, in view of coloring property, it is difficult to color the ultra-fine dielectric particles. Even if the ultra-fine dielectric particles can be colored, color of the ultra-fine dielectric particles dispersed in the electrically insulating medium 19 do not appear visibly since they have too small diameters. Thus, in the case of the ultra-fine dielectric particles, only color of the electrically insulating medium 19 appears. Therefore, just one colored pattern can be attained. For instance, color change between transparent red and opaque red can be merely attained.

On the contrary, according to the fifth embodiment of the present invention, if the medium is colored as transparent red and the inorganic/organic composite particles are colored as white, color change between cloudy opaque and transparent red can be attained. If the medium is formed as colorless transparent and the inorganic/organic composite particles are colored as blue, color change between blue opaque and colorless transparent can be attained. If the medium is colored as red and the inorganic/organic composite particles are colored as blue, color change between violet opaque and transparent red can be attained. If the medium is colored as light blue and the inorganic/organic composite particles are colored as yellow, color change between yellowish green opaque and transparent light blue can be attained. In addition, since either one of the core 31 and the shell 33 of the inorganic/organic composite particles 30 and the electrically insulating medium 19 may be colored, coloring variation can be easily attained.

Although the surface of the core 31 of the inorganic/organic composite particles 30 is covered by inorganic substances, color appears from clearances between the inorganic substances. Therefore, the color of the core 31 can be effectively reflect in the color of the EA fluid.

If the shell 33 of the inorganic/organic composite particles 30 must be colored, a required amount of coloring inorganic pigment, which is used when manufacturing the inorganic/organic composite particles 30, is introduced into the inorganic/organic composite particles 30 and uniformly mixed. Thereby, the inorganic/organic composite particles 30 may be manufactured in the above described manner. In the inorganic/organic composite particles 30 manufactured as above, as shown in FIG.39, for example, part of the inorganic/organic composite particles 30 attached around the core body 31 may be replaced by coloring inorganic pigment 35. In this way, the inorganic/organic composite particles 30 can be colored.

According to the display device of the fifth embodiment, the display device which is placed horizontally or substantially horizontally to display characters, numerals, figures, etc. comprises the EA fluid formed by including the EA particles into the electrically insulating medium having larger specific gravity than those of the EA particles, and the hollow housing body enclosing the EA fluid therein and having at least upper and lower transparent parts of two opposing faces opposing to each other. Therefore, the EA particles are suspended in the electrically insulating medium and are aligned along inner surfaces of the housing body to cause the housing body to be in an opaque state. In addition, since the transparent conductive layers are formed on respective transparent parts of the housing body, the EA particles are aligned in the vertical direction when the voltage is imposed to the transparent conductive layers, thus the housing body becomes transparent. Consequently, according to voltage application or not, the housing body can be easily switched from its transparent state to its opaque state and vice versa.

FIG.40 shows a wavelength dependency of transmitted light intensity when a pair of line conductors are connected to the switch S and when a pair of line conductors are not connected to the switch S

In FIG.40, an amount of the light transmitted through the EA fluid, which is prepared by adding the blue-colored inorganic/organic composite particles to a silicon oil having kinematic viscosity of 10 cSt by four weight %, is measured in the display device according to the fifth embodiment of the present invention. Coloring of the inorganic/organic composite particles is performed by replacing the EA inorganic substance forming the shell 33 with blue pigment by 20 weight % when manufacturing the inorganic/organic composite particles. In FIG.40, a curve shown by E=0 kV denotes transmitted light intensity under no application of the electric field, and a curve shown by E=2 kV denotes transmitted light intensity when electric potential of 2 kV is applied to the electrodes.

In FIG.40, the curve shown by E=2 kV and located in the upper of FIG.40 shows transmitted light intensity when the line conductors are connected to one transparent conductive layer via the switch. As apparent from this curve, the inorganic/organic composite particles are aligned in the perpendicular direction between engagement portions of the line conductors and one transparent conductive layer. Thus, the lights can be transmitted over a wide wavelength range.

The curve located in the middle of FIG.40 denotes that the inorganic/organic composite particles are suspended at random and scattered when the switch is not turned on, i.e., under no application of the electric field.

The curve located in the lower of FIG.40 shows transmitted light intensity when the line conductors are connected to one transparent conductive layer having different polarity via the switch. As apparent from this curve, the inorganic/organic composite particles are aligned along the surface direction between engagement portions of the line conductors and one transparent conductive layer having different polarity, as shown in FIG.36, thus to form a surface body. Therefore, the lights except for the wavelength of blue can be interrupted, so that the housing body becomes opaque.

In addition, in contrast to the conventional display device employing the liquid crystal, the display device of the fifth embodiment having a simple structure can be provided at extremely low production cost. Incidentally, in comparison with ordinary liquid crystal material, the EA fluid 16 previously explained is very cheap like less than 1/10 in cost. In addition, although various control circuits and LSIs for driving the liquid crystal are required in the liquid crystal device, the display device of the fifth embodiment of the present invention only needs a simple structure, as aforementioned, and the electric circuits of the power source can be formed only by a switch and several wirings.

Especially, by applying the voltage to the line conductors and the line conductors having different polarity, the EA particles can be aligned between them. In other words, the EA particles can be aligned along the upper transparent conductive layers. As a result, the lights passing through the housing body can be interrupted, thus part of the housing body becomes opaque. For this reason, by arranging the line conductors and the line conductors having different polarity to have desired shapes of characters, numerals, figures, etc., desired characters, numerals, figures, etc. can be displayed interchangeably and horizontally or substantially horizontally. In addition, desired characters, numerals, figures, etc. can be displayed in low cost.

**(Sixth Embodiment)**

A display device according to a sixth embodiment of the present invention is relevant to a display device which, like the fifth embodiment, is arranged horizontally or substantially horizontally to display characters, etc. on the upper part such as the ceiling of the building and is looked up from the lower side.

With reference to FIGS.41 and 42, the sixth embodiment of the present invention will be explained in detail hereinafter.

FIG.41 shows a display device according to the sixth embodiment of the present invention in a state where the voltage is not applied to the conductive layers. FIG.42 shows aligned state of the inorganic/organic composite particles when the voltage is applied to the transparent conductive layers shown in FIG.41.

In contrast to the fifth embodiment wherein the electrically insulating medium having specific gravity heavier than those of the EA particles is used, the electrically insulating medium having specific gravity lighter than those of the EA particles is used in the sixth embodiment. Thus, in the sixth embodiment, the upper transparent conductive layers and the lower transparent conductive layers are reversely utilized.

As shown in FIG.41, in the display device of the sixth embodiment of the present invention, transparent conductive layers 471, 472 are formed on inner surfaces of respective transparent parts of the housing body 18. In other words, an upper transparent conductive layer 471 are formed to cover an almost entire inner face of the transparent part of the housing body 18. A lower transparent conductive layer 472 is formed by one line conductor 47a or more having a finite or infinite shape and one line conductor 47b or more having a finite or infinite shape adjacent to the line conductor 47a and having different polarity on the transparent substrate 15. Engagement portions 47c, 47d are alternatively arranged at a predetermined distance along the longitudinal direction of characters to be displayed.

As the electrically insulating medium 19 used in the sixth embodiment of the present invention, any electrically insulating medii and their mixtures may be used if the electrically insulating medium 19 has specific gravity smaller than those of the inorganic/organic composite particles 30, and has high electrical resistance and high dielectric breakdown strength, and are chemically stable, and enable the inorganic/organic composite particles 30 to be fallen therein. For instance, in case specific gravity of the inorganic/organic composite particles 30 is more than about 2.0, any electrically insulating medium 19 described above may be used. On the contrary, if specific gravity of the inorganic/organic composite particles 30 is within 2.0 to 1.0, there may be used, as the electrically insulating medium 19, sebacic acid bytyl, sebacic acid dioctyl, aromatic polycarboxylic acid higher alcohol ester, transformer oil, hydrocarbon type medium, polydimethylsiloxane type silicon oil, ring polysiloxane silicon oil, etc. and their mixture may also be used.

In the display device of the sixth embodiment of the present invention, if the voltage is not applied to upper transparent conductive layers 471 and lower transparent conductive layers 472 and if the voltage is not applied to the line conductors 47a and the line conductors 47b having different polarity in the lower transparent conductive layers 472, as shown in FIG.41, the inorganic/organic composite particles 30 are sedimented on the lower transparent conductive layers 472, thus the housing body 18 becomes opaque.

Next, as shown in FIG.42, the voltage is applied to the line conductor 47c and the line conductor 47d having different polarity in the lower transparent conductive layers 472, the inorganic/organic composite particles 30 are aligned between the line conductor 47a and the line conductor 47b having different polarity, thus form a face body 302. Incident lights are interrupted by the resultant face body 302, and thus characters, etc. can be displayed. In addition, particles in the area wherein electrodes are not formed are almost attracted to the electrode side. As a result, parts having no electrodes becomes a transparent state.

According to the display device of the sixth embodiment of the present invention, since the electrically insulating medium having specific gravity lighter than those of the EA particles is used, the inorganic/organic composite particles 30 are sedimented in the electrically insulating medium 19 due to own weight. And, since the line conductor 47c and the line conductor 47d having different polarity are formed in the lower transparent conductive layers 472, the inorganic/organic composite particles 30 are aligned between the line conductor 47a and the line conductor 47b having different polarity, thus form a face body 302 when the voltage is applied thereto. Incident lights are interrupted by the resultant face body 302, and thus characters, etc. can be displayed. As a result, characters, etc. can be displayed on the upper part of the building such as the ceiling.

**(Seventh Embodiment)**

A display device according to a seventh embodiment of the present invention which has a structure, like the sixth embodiment, obtained by arranging two line conductors or more having different polarity on the same transparent conductive layers to interrupt incident lights by a surface body, and which can be utilized in the glass show window etc..

With reference to FIGS.43 to 50, the seventh embodiment of the present invention will be explained.

FIG.43 is a perspective view showing a display device according to a seventh embodiment of the present invention. FIG.44 is a sectional view showing a sectional shape taken along a line B-B when the display device shown in FIG.43 is under no application of the voltage. In the display device of the seventh embodiment, as shown in FIG.44, a pair transparent substrates 15, 15 are arranged at a predetermined distance in parallel to constitute a housing body 18, and a liquid EA fluid 16 is enclosed between the transparent substrates 15, 15. Transparent conductive layers 175, 176 are formed respectively on opposing inner walls of the transparent substrates 15, 15.

As shown in FIG.45, one transparent conductive layer 175 of these opposing transparent conductive layers is formed to cover an entire inner face of the housing body 18. Another transparent conductive layer 176 is formed by one or more line conductors 176a having a finite or infinite shape and one or more line conductors 176b also having a finite or infinite shape adjacent to the line conductor 176a and having different polarity on inner surfaces of the housing body 18. These line conductors 176a, 176b are arranged opposedly to each other so as to have profiles of "DRESS FAIR" shown in FIG.43. Engagement portions 176c, 176d are formed to project from these line conductors 176a, 176b in the direction substantially perpendicular thereto. These engagement portions 176c, 176d are alternatively arranged at a predetermined distance along the characters to be displayed.

Although, in the seventh embodiment of the present invention, the line conductor 176a and the line conductor 176b having different polarity are formed to have profiles of characters, they may be formed to have profiles of figures. Otherwise, they may be formed as composite profiles of these characters, numerals, and figures.

The line conductors 176a is connected to one terminal of a switch S via a power source 23. Other terminal of the switch S is connected alternatively to the one transparent conductive layer 175 and the line conductors 176b, 176d having different polarity.

Although omitted from FIG.44, a sealing member is fitted between outer peripheral portions of the transparent substrates 15, 15. The EA fluid 16 is enclosed in a plate-like hollow transparent housing body formed by the transparent substrates 15, 15 and the sealing member.

As described in the first embodiment and shown in FIGS.5 and 6, electrode portions to be electrically connected to the transparent conductive layers 175, 176 are formed on outer edge portions of the transparent substrates 15, 15. The electrode portions are connected to the power source 23 via the switch S.

Since the transparent substrates 15, 15 must enclose the EA fluid 16 therein and have mechanical strength enough to be carried and installed, it is desired that they may be formed by transparent resin substrate etc. such as various glass substrates and acrylic resins. The transparent substrates 15, 15 may be formed as not only an entire transparent structure, but also a partial transparent structure in which lights can be transmitted through transparent portions. Therefore, only peripheral portions may be formed by opaque metal frames, resin frames etc., and transparent glass substrates, transparent resin substrates are fitted in the frames. In addition, shapes of the transparent substrates 15, 15 are not limited especially, but the plate-like shapes are ordinarily used.

Basically, the EA fluid 16 is the same as that explained in the first embodiment of the present invention, which is formed by dispersing inorganic/organic composite particles 30 having structures shown in FIG.4B into the electrically insulating medium 19. The inorganic/organic composite particles 30 comprise cores 31 comprising organic polymeric compound, and shells 33 comprising EA inorganic compounds 32 covering the surface of the cores 31 and producing the EA effect.

Various inorganic compounds are known in the art as the EA inorganic compounds 32. As preferable instances of the inorganic compounds, inorganic ion-exchangers such as multivalent metal hydroxide, hydrotalcites, multivalent metal acid salt, hydroxyapatite, nashicon type compound, clay mineral, potassium titanades, heteropolyacid salt, or insoluble ferrocyanide; silica gel; and semiconductor type inorganic substance can be listed.

When the EA inorganic compounds 32 are formed on the cors 31 comprising organic polymeric compound as the shells 33, the EA effect is produced by the EA fluid 16. And, it is preferable that the inorganic/organic composite particles 30 may be manufactured by simultaneously forming the cores 31 and the shells 33.

Like the first embodiment, as examples of organic macromolecular compounds available for the cores 31 of the inorganic/organic composite particles 30, one kind or two kinds or more of mixtures or copolymers such as poly(meta)acrylic acid ester, (meta)acrylic acid esterstyrene copolymer, polystyrene, polyethylene, polypropylene, nitride rubber, butyl rubber, ABS resin, nylon, polyvinyl butylate, ionomer, ethylene-vinyl acetate copolymer, vinyl acetate resin, polycarbonate, etc. can be raised.

The preferable EA inorganic compounds 32 which are usable as the shells 33 of the inorganic/organic composite particles 30 may be formed of inorganic ion-exchangers, semiconductor type inorganic compounds, and silica gels. These compounds can produce the excellent EA effect when the solid particles are dispersed into the electrically insulating medium 19. Like the first embodiment of the present invention, as the inorganic ion-exchanger of the present invention, there can be listed (1) multivalent metal hydroxide, (2) hydrotalcites, (3) multivalent metal acid salt, (4) hydroxyapatite, (5) nashicon type compound, (6) clay mineral, (7) potassium titanades, (8) heteropolyacid salt, and (9) insoluble ferrocyanide. Please refer to the first embodiment of the present invention for details of these ion-exchangers.

The preferable EA inorganic substances which can be used as the shells 33 of the inorganic/organic composite particles 30 are raised as follows. That is, metal oxide, metal hydroxide, metal oxide-hydroxide, inorganic ion-exchanger, all having conductivity of $10^3$ to $10^{-11}$ $\Omega^{-1}$/cm at a room temperature, at least one kind of these substances to which metal is doped, at least one kind of these substances which is formed as a semiconductor layer on other supporting member irrespective of metal doping, and the like are used. Other preferable EA inorganic substances are identical to the first embodiment of the present invention.

Since the organic polymeric compound having relatively small specific gravity may be used as the core 31, specific gravity of these inorganic/organic composite particles 30 can be decreased to a relatively small value in contrast to that of the EA inorganic substance 32 forming the shell 33. In accordance with the ratio and kinds of the organic polymeric compound and the EA inorganic substance, specific gravity of the inorganic/organic composite particles 30 can be adjusted freely. In general, specific gravity thereof is adjusted in a range of 1.0 to 2.0 in connection to the electrically insulating medium used. In this case, if difference in specific gravity between the composite particles 30 and the electrically insulating medium, the EA particles are sedimented in the medium because of gravity. Thus, uniform dispersion of the inorganic/organic composite particles 30 is prevented.

Note that the shell 33 and the core particles 31 of the inorganic/organic composite particles 30, both including dyestuff, may also be used. The dyestuff usable in the shell 33 is pigment. It is desired that this pigment should be included in the shell 33 to be mixed with the EA inorganic substance 32 when the shell 33 made of the EA inorganic substance 32 is formed by the method explained in the first embodiment of the present invention on the core 31.

In case the dyestuff is included in the core 31, either dye or pigment known generally as those used for synthetic resin may be used. This dyestuff can be so included in the core 31 that monomer is polymerized after the dyestuff is mixed in advance in the monomer forming the core 31, or that the dyestuff is kneaded into the synthetic resin forming the core 31.

If the inorganic/organic composite particles 30 including the dyestuff in either the shell 33 or the core 31 or in both of them is utilized, scattering light of the display device can be colored in any color when the voltage is not imposed to the resultant EA fluid 16.

For example, if titanium hydroxide or silica gel is mixed, white color can be attained. If blue pigment of phthalocyanine blue (DAINICHISEIKA COLOR & CHEMICALS Mfg. Co., Ltd., cyanine blue S-32) is mixed, blue color can be attained. If yellow pigment of fast yellow (DAINICHISEIKA COLOR & CHEMICALS Mfg. Co., Ltd., NL fast yellow 5GS), yellow color can be achieved. In addition, if black triiron tetraoxide (Fe3O4) formed of semiconductor inorganic substance, black color can be obtained. If red diiron trioxide (Fe2O3) formed of semiconductor inorganic substance, red color can be obtained.

The concentration of the inorganic/organic composite particles 30 in the EA fluid 16 used in the seventh embodiment of the present invention is not limited especially, but it is preferable that the concentration is within a range of 0.5 to 15 weight %. If the concentration of the composite particles 30 is less than 0.5 weight %, a sufficient transmitted light control effect cannot be attained. On the other hand, if the concentration of the composite particles 30 is more than 15 weight %, a large amount of the inorganic/organic composite particles 30 are mixed in the EA fluid 16 because of too large concentration of the composite particles 30. Therefore, sometimes enough transparency cannot be obtained when the electric field is applied so as to align the inorganic/organic composite particles 30, as described later.

Next, the kinematic viscosity of the electrically insulating medium 19 used in the seventh embodiment of the present invention is preferable within a range of 1 to 3000 cSt. If the kinematic viscosity is less than 1 cSt, a plenty of volatile components exist in the disperse agent so that the EA fluid lacks enough storage stability. On the contrary, if the kinematic viscosity is more than 3000 cSt, it becomes hard to escape vapors from the electrically insulating medium 19. In case the vapors remain in the electrically insulating medium 19, sometimes discharges are generated partially in micro-areas of the vapors to cause sparks, thus causing insulation deterioration. A more preferable range of the kinematic viscosity of the electrically insulating medium 19 is 10 to 1000 cSt. Further, a more preferable range of the kinematic viscosity of the electrically insulating medium 19 is 10 to 100 cSt.

Next, as the applied voltage to the EA fluid 16, any voltage can be imposed within a range of 0.1 to 5.0 kV/mm, for example. But, note that a high voltage in excess of this range may be imposed. In addition, in this range of the applied voltage, it is more preferable to set the applied voltage in a range of 0.25 to 1.5 kV/mm.

Subsequently, with reference to FIGS.5 and 6 employed in the first embodiment, a principle of operation to display desired shapes by controlling an intensity of the transmitted light by means of the display device shown in FIG.43 will be explained hereinafter.

FIG.5 shows a dispersed state of the inorganic/organic composite particles wherein the voltage is not applied to the transparent conductive layers 175, 176 of the display device A by opening the switch S. However, the upper transparent conductive layer 17 in FIG.5 correspond to the transparent conductive layer 175 of the seventh embodiment of the present invention, and the lower transparent conductive layer 17 in FIG.5 correspond to the transparent conductive layer 176 of the same. In this state, the inorganic/organic composite particles 30 are suspended in an upper portion of the electrically insulating medium 19 at random since the electric field is not imposed thereto. In this state, since incident lights into the housing body 18 are scattered into various directions due to presence of the inorganic/organic composite particles 30, the housing body 18 becomes opaque. For example, in case the titanium hydroxide type inorganic compound is used as the EA inorganic substance 32, a cloudy color tone of the housing body 18 can be achieved.

If the dyestuff is included in either the shell 33 or the core 31 or in both of them of the inorganic/organic composite particles 30, the housing body 18 is colored in certain color according to the dyestuff.

Here if each of the inorganic/organic composite particles 30 is formed as a spherical shape, less possibility is supposed wherein the scattered lights are focused in the particular direction since scattering of the lights is spread in the omni-direction.

Next, FIG.6 shows an aligned state of the inorganic/organic composite particles wherein the voltage is applied to the transparent conductive layers 175, 176 of the display device A by closing the switch S. In this state, the inorganic/organic composite particles 30 can be aligned between the transparent conductive layers 173, 174 so as to form chain-like structures 301 in the direction perpendicular to these transparent conductive layers 175, 176 and, at the same time, the chain-like structures 301 can be aligned mutually in parallel.

In other words, as aforementioned, since the concentration of the inorganic/organic composite particles 30 dispersed in the electrically insulating medium 19 is less than about 10 weight %, a total amount of the composite particles 30 is small as a whole. Therefore, when the composite particles 30 are aligned to form the chain-like structures 301, considerably wider distances than the diameter of the inorganic/organic composite particles 30 are formed between the chain-like structures 301. Thereby, incident lights into the housing body 18 along the thickness direction of the housing body 18 can be passed through the housing body 18 without substantial attenuation. Accordingly, this cause the housing body 18 to be in a transparent state.

With the above operations, according to whether the voltage is applied to the transparent conductive layers 173, 174 or not, the housing body 18 can be transferred from the transparent state to the opaque state and vice versa.

Next, the switch S is changed to be connected to the line conductor 17b having different polarity, the inorganic/organic composite particles 30 are aligned between the engagement 176c of the line conductor 176a and the engagement 176d of the line conductor 176b having different polarity, as shown in FIG.46. In other words, the inorganic/organic composite particles 30 are aligned along the surface of the housing body 18 which corresponds to the surface of the transparent conductive layers 176 to thus form a face body 302. Thus, incident lights which are input from one surface of the housing body 18 are shut off by the resultant face body 302, and part of the housing body 18 becomes a dark cloudy glass state. Thus, characters can be displayed as shown in FIG.43.

By switching the switch as above, characters et. al. can be displayed simply and quickly on the housing body 18.

In addition, since the display device A can be driven by the voltage of 0.1 to 5.0 kV/mm and very small electric current of several $mA/m^2$ at best, it can be enoughly driven by small electric power of about 10 $W/m^2$ at best. Thus, the display device having a power conservation structure can be achieved. Moreover, since the inorganic/organic composite particles 30 can be completely aligned within several seconds to 20 seconds after the voltage is applied to the transparent conductive layers 17, 17, a sufficiently quick response of the display device A can be derived. Further, if an intensity of the transmitted lights is controlled by the EA fluid 16, the intensity of the transmitted lights can be controlled evenly over a full wavelength range without absorption of the light having particular frequency. Therefore, there are no possibility of heat generation due to light absorption, etc. so that the display device capable of eliminating waste of energy can be manufactured.

Furthermore, once the inorganic/organic composite particles 30 are aligned by the applied voltage, the inorganic/organic composite particles 30 are held as they are for a while after the voltage is turned off. Thus as the voltage may be applied intermittently, energy conservation driving of the display device can be realized. In accordance with the kinematic viscosity of the electrically insulating medium 19 in which the inorganic/organic composite particles 30 are dispersed, an alignment holding time of the inorganic/organic composite particles 30 can be adjusted under application of the voltage. In other words, if the kinematic viscosity of the electrically insulating medium 19 is decreased, the alignment holding time can be shortened while, if the kinematic viscosity of the electrically insulating medium 19 is increased, the alignment holding time can be prolonged.

In the above embodiments, the inorganic/organic composite particles 30 are aligned in parallel to form line-type chain-like structures 301 by application of the voltage. But, a plurality of the chain-like structures 301 are formed in place of the line-type chain-like structures 301 if the number of the inorganic/organic composite particles 30 is increased in excess of 1 weight %. As a result, as shown in FIGS.37 and 38 used in the fifth embodiment of the present invention, the inorganic/organic composite particles 30 are aligned to form columns C.

In these columns C, the inorganic/organic composite particles 30 of the chain-like structures 301 in the right and left are adjacently coupled alternatively one by one. The present inventors have supposed that, as has been described in the fifth embodiment, this is because the inorganic/organic composite particles 30 can stay in their stable state in energy if the inorganic/organic composite particles 30 which are polarized to (+) polarity portions and (-) polarity portions, as shown in FIG.38, are adjacently aligned in an alternative manner due to mutual attraction of (+) polarity portions and (-) polarity portions.

Accordingly, if a large amount of the inorganic/organic composite particles 30 are contained, a large number of columns C are formed between the electrodes. The mechanism of increasing the transmitted lights is generated by the columns C. In this case, since a large amount of the inorganic/organic composite particles 30 can be coupled as a plurality of columns C, a distance between adjacent columns is increased largely and thus a function for increasing transmitted light is enhanced remarkably.

In the meanwhile, since the inorganic/organic composite particles 30 function as either light scattering type particles or light reflecting type particles, diameters of the inorganic/organic composite particles 30 are set within a range of 0.1 to 500 μm, preferably 5 to 200 μm, as aforementioned. As well known, since wavelengths of visible lights span from 380 to 780 nm, i.e., 0.38 to 0.78 μm, the diameters of the inorganic/organic composite particles 30 must be formed more than 0.1 μm at lowest, preferably more than 5 μm, in order to control the transmitted lights by scattering or reflecting the light having such wavelengths.

On the other hand, in case ultra-fine dielectric particles having smaller diameters than wavelengths of the visible lights causing Brawnian motion, for instance, about 5 nm to several tens nm (=0.005 to 0.02 μm) are dispersed in the electrically insulating medium 19, the ultra-fine dielectric particles may be aligned by the electric field. But, in this case, in the light transmitting mechanism, the ultra-fine dielectric particles are dispersed under no application of electric field so as to transmit the lights, whereas the ultra-fine dielectric particles are aligned under application of the electric field to scatter the lights, thus causing attenuation of the incident lights. As a result, it is not preferable since the ultra-fine dielectric particles exhibit totally different behavior.

Next, ultra-fine particles of TiBaO4 may be considered as the ultra-fine dielectric particles described above. However, TiBaO4 is heavy substance having specific gravity of a range of 4 to 6. Therefore, if diameters of the TiBaO4 particles are increased for the purpose of forming them as the light reflecting type particle, the TiBaO4 particles are sedimented in the electrically insulating medium 19 due to difference in specific gravity between the electrically insulating medium 19 and the particles. Therefore, the TiBaO4 particles cannot be uniformly dispersed in the electrically insulating medium 19 at all. Further, in order to disperse the TiBaO4 particles in the electrically insulating medium 19 uniformly, the electrically insulating medium 19 having large specific gravity is required. But, there exits no electrically insulating medium having specific gravity of about 4 to 6. On the contrary, since, as described advance, specific gravity of the inorganic/organic composite particles 30 of the present invention can be readily adjusted about 1.2, various kinds of commonly known electrically insulating medii may be utilized.

Next, in view of coloring property, it is difficult to color the ultra-fine dielectric particles. Even if the ultra-fine dielectric particles can be colored, color of the ultra-fine dielectric particles dispersed in the electrically insulating medium 19 do not appear visibly since they have too small diameters. On the contrary, according to the seventh embodiment of the present invention, if the medium is colored as transparent red and the inorganic/organic composite particles are colored as white, color change between cloudy opaque and transparent red can be attained. If the medium is formed as colorless transparent and the inorganic/organic composite particles are colored as blue, color change between blue opaque and colorless transparent can be attained. If the medium is colored as red and the inorganic/organic composite particles are colored as blue, color change between violet opaque and transparent red can be attained. If the medium is colored as light blue and the inorganic/organic composite particles are colored as yellow, color change between opaque yellowish green and transparent light blue can be attained.

If the shell 33 of the inorganic/organic composite particles 30 must be colored, a required amount of coloring inorganic pigment, which is used when manufacturing the inorganic/organic composite particles 30, is introduced into the inorganic/organic composite particles 30 and uniformly mixed. Thereby, the inorganic/organic composite particles 30 may be manufactured in the above described manner. In the inorganic/organic composite particles 30 manufactured as above, as shown in FIG.39, for example, part of the inorganic/organic composite particles 30 attached around the core 31 may be replaced by coloring inorganic pigment 35.

Experimental results of controlling the transmitted lights using above various EA fluid are the same as those explained in the first embodiment of the present invention and shown in FIGS.11 to 15, and therefore their explanations are omitted herein. However, as shown in FIGS.11, to 13, even the applied electric field is set to 3 kV/mm at 1.0 weight % of the concentration of the inorganic/organic composite particles, the light is increased at small rate. Therefore, it can be found that 2.5 weight % or more of the concentration of the inorganic/organic composite particles is preferable. In addition, it can be found from the results shown in FIGS.14 and 15 that, if the applied electric field is set to be large within a range of 0.5 to 3 kV/mm in any kinematic viscosity of the silicon oil, the dBm value of the increased light is increased. Therefore, it has been proved that an intensity of the transmitted lights can be controlled by the present invention and that, if the applied electric field is set to be large within a range of 0.25 to 1.5 kV/mm, larger increased light can be obtained.

FIG.47 shows relationship of a change rate of transmitted light and voltage applying time to electrodes when the EA fluid, which is prepared by adding the inorganic/organic composite particles to a silicon oil having kinematic viscosity of 10 cSt by seven weight %. The transmitted lights has been measured by inputting the lights into the transparent glass housing body, in which the EA fluid is filled, from the upper side and receiving light power by the photosensor arranged in the lower side of the housing body. An output of the photosensor has been analyzed. It is apparent from FIG.47 that an intensity of the transmitted lights begin to increase after about 1 second from starting the measurement and it becomes maximum after 3 to 4 seconds to be stable.

FIG.48 shows a wavelength dependency of transmitted light intensity when an intensity of the light transmitted through the EA fluid, which is prepared by adding the blue-colored inorganic/organic composite particles to a silicon oil having kinematic viscosity of 10 cSt by four weight %. Coloring of the inorganic/organic composite particles has been performed in such a manner that the EA inorganic substance constituting the shell of the particle is replaced with blue pigment by 20 weight % when the inorganic/organic composite particles are manufactured. In FIG.48, the curve shown by E=0 kV indicates an intensity of the transmitted lights under no application of the electric field. While, the curve shown by E=2 kV indicates an intensity of the transmitted lights when electric potential of 2 kV is applied to the electrodes.

As is clear from the comparison of both curves in FIG.48, blue and bluish lights with short wavelength are mainly transmitted at the time of no application of the electric field. At the time of application of the electric field, lights are transmitted over a wide wavelength range. As a result, it is apparent that blue colored EA fluid has changed colorless transparent EA fluid.

FIG.49 shows a frequency dependency of transmitted light intensity when an intensity of the light transmitted through the electrically insulating medium of dimethyl silicon oil, into which blue dye is added by 0.1 weight %.

In FIG.49, as is clear from the comparison of light source spectrum and medium spectrum, lights are absorbed in a spectrum range excluding blue color with short wavelength. Since the electrically insulating medium has mainly passed through blue color, it is blue-colored.

FIG.50 shows a frequency dependency of transmitted light intensity when an intensity of the light transmitted through the EA fluid, which is prepared by adding the yellow-colored inorganic/organic composite particles by five weight % to the electrically insulating medium of dimethyl silicon oil into which blue dye is added by 0.1 weight %.

In FIG.50, light source spectrum, transmission spectrum at E=0 kV/mm, and transmission spectrum at E=1 kV/mm are shown. It has been found from FIG.50 that the EA fluid changes from opaque yellowish green obtained as mixed color of blue and yellow under no application of the electric field to transparent blue close to transparent colorless under application of the electric field.

Like this, the EA fluid can be colored by various color variations. Transparent state having different color, transparent state having same color, or colorless transparent state may be changed mutually.

In the seventh embodiment, dependence on wavelength of the transmitted lights obtained when a pair of line conductors are connected to the switch or not is similar to that shown in FIG.40 in the fifth embodiment.

In addition, when the inorganic/organic composite particles are added to a silicon oil (base oil) having kinematic viscosity of 50 cSt by 5.0 weight %, examination results of the increased lights every wavelength of the transmitted lights show that uniform increased light can be obtained over a wide wavelength range of 400 to 1100 nm, as shown in Tables 1 and 2 in the first embodiment of the present invention.

With the above, according to the seventh embodiment of the present invention, the EA particles can be aligned by applying the electric field to the EA fluid in the housing body. Thereby, since an intensity of the lights passing through the transparent parts of the housing body, desired display can be obtained only by voltage application control. In other words, the transparent parts of the housing body may be maintained in a transparent state if the voltage is applied to the opposing transparent conductive layers. On the other hand, the transparent parts of the housing body may be changed into a opaque state if the voltage is not applied to the transparent conductive layers. As a result, according to control of application of the voltage, the housing body may be changed from transparent state to opaque state and vice versa.

In addition, in contrast to the conventional display device employing the liquid crystal, the display device of the seventh embodiment having a simple structure can be provided at extremely low production cost. Incidentally, in comparison with ordinary liquid crystal material, the EA fluid 16 previously explained is very cheap like less than 1/10 in cost. In addition, although various control circuits and LSIs for driving the liquid crystal are required in the liquid crystal device, the display device of the fifth embodiment of the present invention only needs a simple structure, as aforementioned, and the electric circuits of the power source can be formed only by a switch and several wirings.

Especially, by applying the voltage to the line conductors and the line conductors having different polarity, the EA particles can be aligned between them. In other words, the EA particles can be aligned along the upper transparent conductive layers. As a result, the lights passing through the housing body can be interrupted, thus part of the housing body becomes opaque. For this reason, by arranging the line conductors and the line conductors having different polarity to have desired shapes of characters, numerals, figures, etc., desired characters, numerals, figures, etc. can be displayed.

Various modifications will become possible for those skilled in the art after receiving the teachings of the present disclosure without departing from the scope thereof.

## Claims

1. A display device employing an electro-alignment effect (referred to as an EA effect hereinafter) caused by electro-optical fluids (referred to as an EA fluid hereinafter) which contain solid particles (referred to as EA particles hereinafter) having said EA effect in an electrically insulating medium, said display device comprising;

   (a) a housing body having at least part where a first transparent portion and a second transparent portion are arranged so as to oppose to each other;
   (b) an EA fluid held between said first transparent portion and said second transparent portion;
   (c) first transparent conductive layers formed on an inner wall of said first transparent portion;
   (d) second transparent conductive layers formed on an inner wall of said second transparent portion; and
   (e) means for applying voltage to said first transparent conductive layers and said second transparent conductive layers;

   wherein said EA fluid may be switched to be optically transparent by applying said voltage to said first transparent conductive layers and said second transparent conductive layers to thus display a desired shape.

2. A display device as claimed in claim 1, wherein a plurality of said housing bodies are stacked via transparent insulating layers to thus display a plurality of desired shapes.

3. A display device employing an EA effect caused by an EA fluid which contains EA particles in an electrically insulating medium, said display device comprising:

   (a) a housing body having at least part where a first transparent portion and a second transparent portion are arranged so as to oppose to each other;
   (b) an EA fluid held between said first transparent portion and said second transparent portion;
   (c) first transparent conductive layers formed on part of an inner wall of said first transparent portion;
   (d) second transparent conductive layers formed on part of an inner wall of said second transparent portion and at an opposing location to said first transparent conductive layer;
   (e) third transparent conductive layers formed on part of a surface of an inner wall of said second transparent portion except for said part where said second transparent conductive layers are formed, said third transparent conductive layers being formed separately from said second transparent conductive layers; and
   (f) a voltage applying means for selectively applying voltage to said first transparent conductive layers and said second transparent conductive layers and to said second transparent conductive layers and said third transparent conductive layers.

4. A display device as claimed in claim 3, wherein a plurality of said housing bodies are stacked via transparent insulating layers to thus display a plurality of desired shapes.

5. A display device employing an EA effect caused by an EA fluid which contains EA particles in an electrically insulating medium, said display device comprising:

   (a) a housing body having at least part where a first transparent portion and a second transparent portion are arranged so as to oppose to each other;
   (b) an EA fluid held between said first transparent portion and said second transparent portion;
   (c) first transparent conductive layers formed on part of an inner wall of said first transparent portion;
   (d) second transparent conductive layers formed on part of an inner wall of said second transparent portion and at an opposing location to said first transparent conductive layers;

(e) third transparent conductive layers formed on part of a surface of an inner wall of said second transparent portion except for said part where said second transparent conductive layers are formed, said third transparent conductive layers being formed separately from said second transparent conductive layers; and

(f) a first voltage voltage applying means for selectively applying voltage to said first transparent conductive layers and said second transparent conductive layers and to said first transparent conductive layers and said third transparent conductive layers;

(g) fourth transparent conductive layers formed on part of an inner wall of said first transparent portion and at a different location from that of said first transparent conductive layers;

(h) fifth transparent conductive layers formed on part of an inner wall of said first transparent portion and at a different location from those of said third transparent conductive layers and said fourth transparent conductive layers, said fifth transparent conductive layer being arranged at an opposing location to said fourth transparent conductive layers;

(i) sixth transparent conductive layers formed on part of a surface of an inner wall of said second transparent portion except for parts where said second transparent conductive layers, said third transparent conductive layers and said fifth transparent conductive layers are formed, said sixth transparent conductive layers being formed separately from said second transparent conductive layers, said third transparent conductive layers and said fifth transparent conductive layers; and

(j) a second voltage applying means for selectively applying said voltage to said fourth transparent conductive layers and said fifth transparent conductive layers and to said fourth transparent conductive layers and said sixth transparent conductive layers;

wherein a first state and a second state can be alternatively switched by said first voltage applying means and said second voltage applying means,

wherein, in said first state, said voltage is supplied simultaneously to said first transparent conductive layers and said second transparent conductive layers and to said fourth transparent conductive layers and said sixth transparent conductive layers and, in said second state, said voltage is supplied simultaneously to said first transparent conductive layers and said third transparent conductive layers and to said fourth transparent conductive layers and said fifth transparent conductive layers.

**6.** A display device as claimed in claim 5, wherein a plurality of said housing bodies are stacked via transparent insulating layers to thus display a plurality of desired shapes.

**7.** A display device employing an EA effect caused by an EA fluid which contains EA particles in an electrically insulating medium, said display device comprising:

(a) a housing body having at least part where a first transparent portion and a second transparent portion are arranged so as to oppose to each other;

(b) an EA fluid held between said first transparent portion and said second transparent portion;

(c) first transparent conductive layers formed on a substantially entire surface of an inner wall of said first transparent portion;

(d) second transparent conductive layers formed of line conductors which are arranged on part of an inner wall of said second transparent portion to have a predetermined shape;

(e) third transparent conductive layers formed of line conductors which are arranged on part of an inner wall of said second transparent portion, said third transparent conductive layers being formed adjacent to and spaced apart from said second transparent conductive layers; and

(f) a voltage applying means for applying voltage selectively to said first transparent conductive layers and said second transparent conductive layers and to said first transparent conductive layers and said third transparent conductive layers.

**8.** A display device as claimed in claim 7, wherein said housing body is arranged horizontally or substantially horizontally.

**9.** A display device as claimed in claim 8, wherein said first transparent portion is arranged on the upper side of said housing body.

**10.** A display device as claimed in claim 8, wherein said second transparent portion is arranged on the upper side of said housing body.

**11.** A display device as claimed in claim 7, wherein a plurality of said housing bodies are stacked via transparent insulating layers to thus display a plurality of desired shapes.

12. A display device as claimed in claim 9, wherein said EA fluid is formed of an electrically insulating medium having smaller specific gravity than that of said EA particles.

13. A display device as claimed in claim 10, wherein said EA fluid is formed of an electrically insulating medium having smaller specific gravity than that of said EA particles.

14. A display device as claimed in one of claims 1 to 13, wherein each of said EA particles is formed of an inorganic/organic composite particle which comprises a core formed of an organic polymeric compound and an shell containing inorganic substances having said EA effect.

15. A display device as claimed in claim 14, wherein each of said inorganic substances having said EA effect is formed of either one of inorganic ion-exchanger, silica gel, semiconductor inorganic substance, and mixture thereof.

16. A display device as claimed in claim 14, wherein said shell includes pigment particles together with said inorganic substances having said EA effect.

17. A display device as claimed in claim 14, wherein said core includes pigment.

18. A display device as claimed in one of claims 1 to 13, wherein kinematic viscosity of said electrically insulating medium is set within a range of 1 to 3000 cSt.

19. A display device as claimed in one of claims 1 to 13, wherein concentration of said EA particles in said electrically insulating medium is set within a range of 0.5 to 15 weight %.

20. A display device as claimed in one of claims 1 to 13, wherein an electric field applied to said EA particles is set within a range of 0.1 to 5.0 kV/mm.

21. A display device as claimed in one of claims 1 to 13, further comprising an illuminating means on an exterior of said housing body.

22. A display device as claimed in claim 21, further comprising a light coloring means between said housing body and said illuminating means.

23. A display device as claimed in one of claims 1 to 13, wherein said electrically insulating medium is formed of a colored electrically insulating medium.

FIG. 1
PRIOR ART

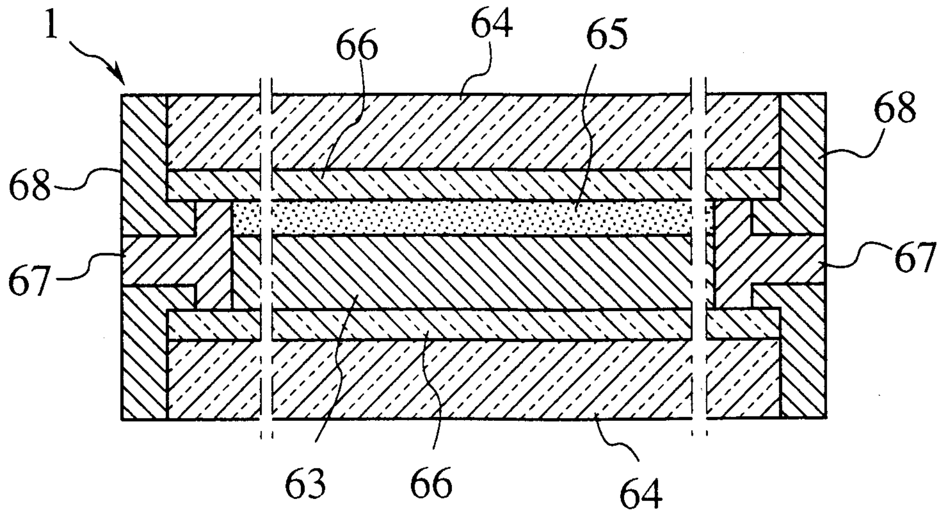


FIG. 2
PRIOR ART

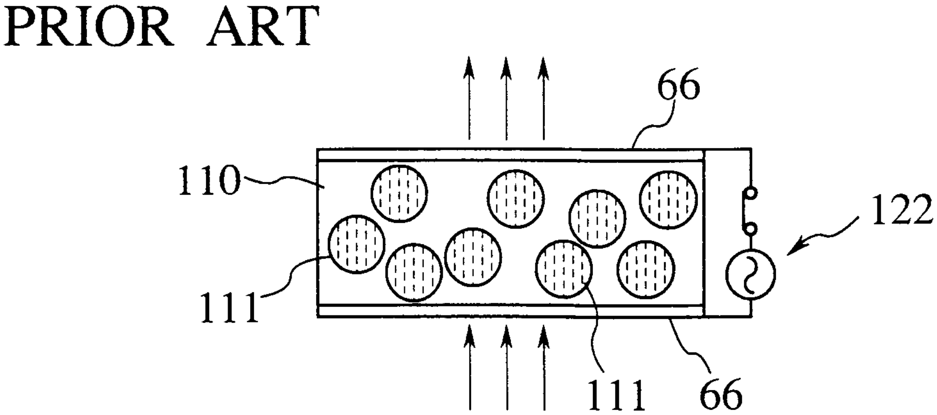


FIG. 3
PRIOR ART

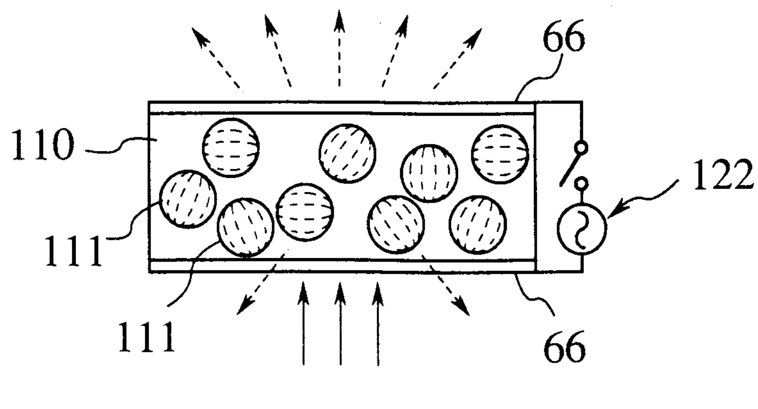

FIG. 4A

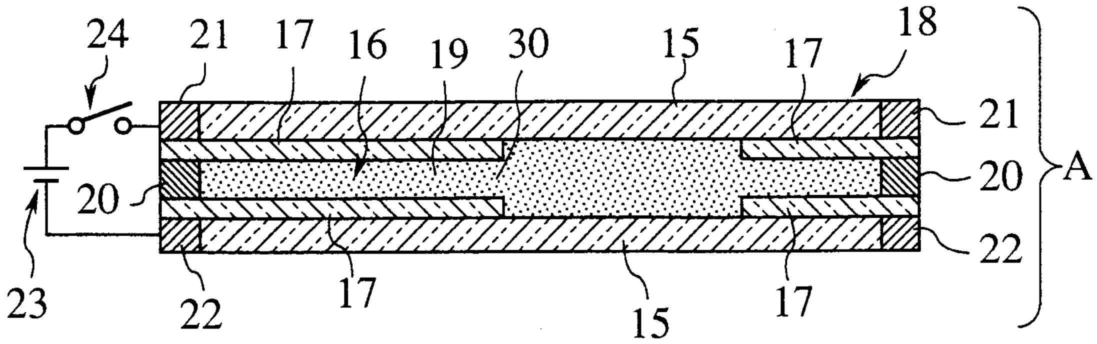


FIG. 4B

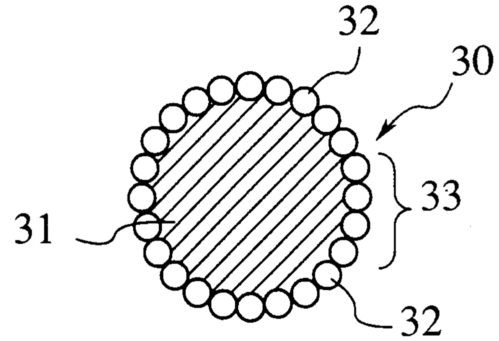


FIG. 5

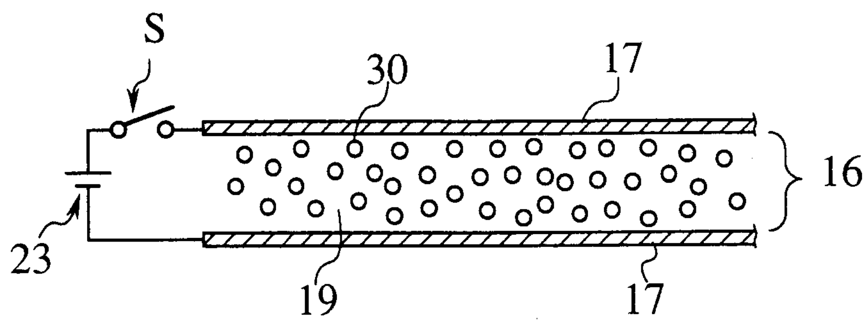


FIG. 6

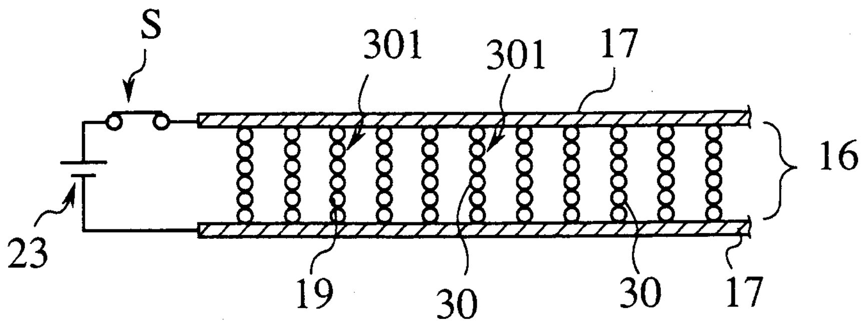

FIG. 7

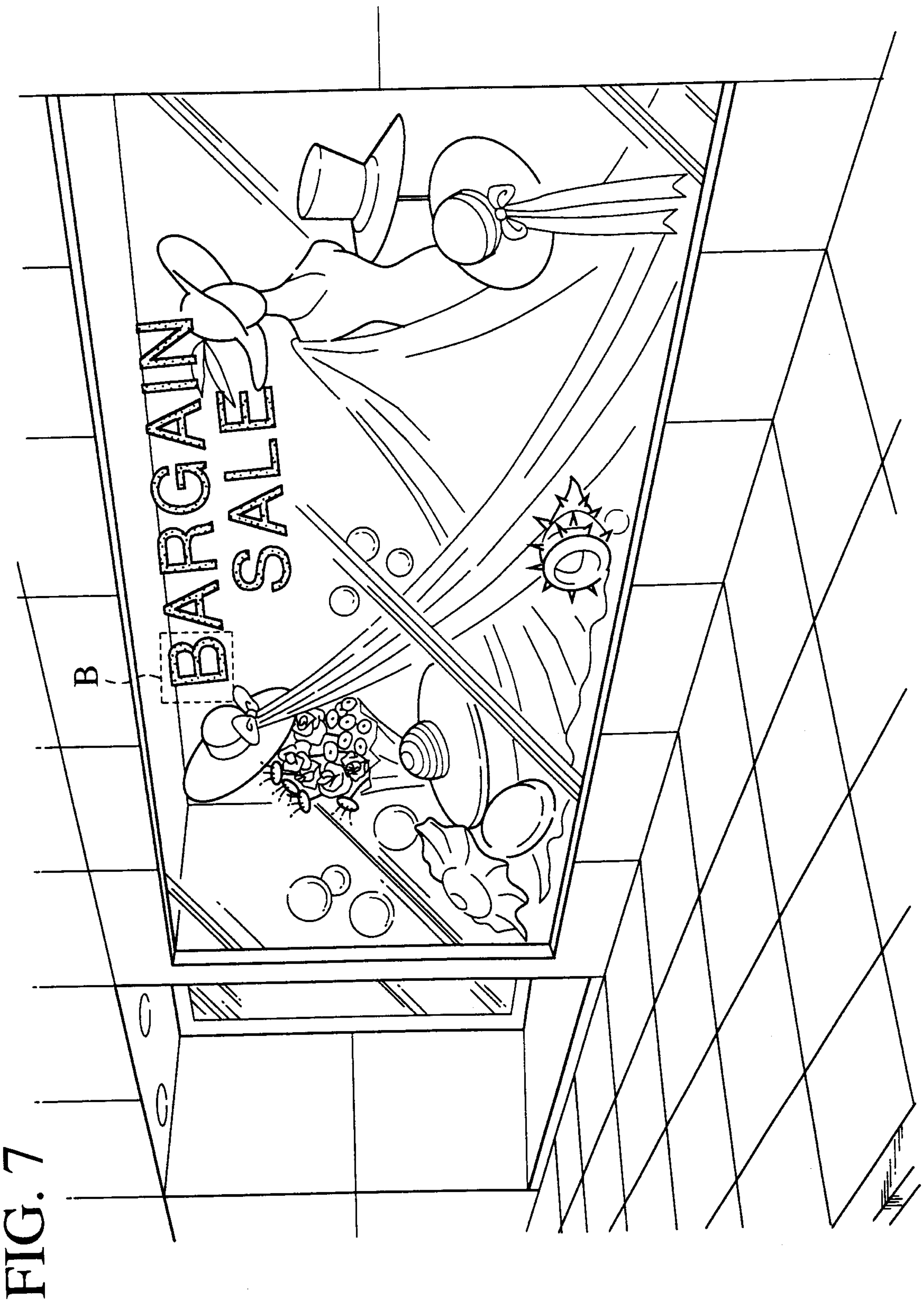

FIG. 8

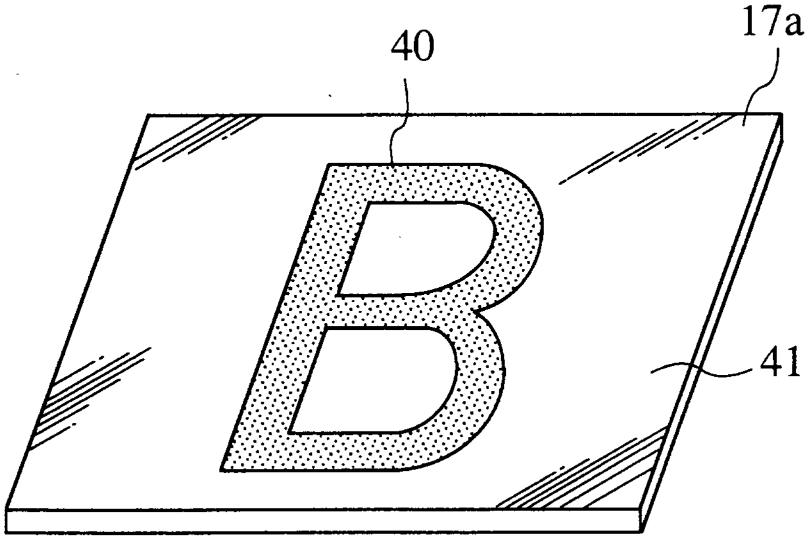

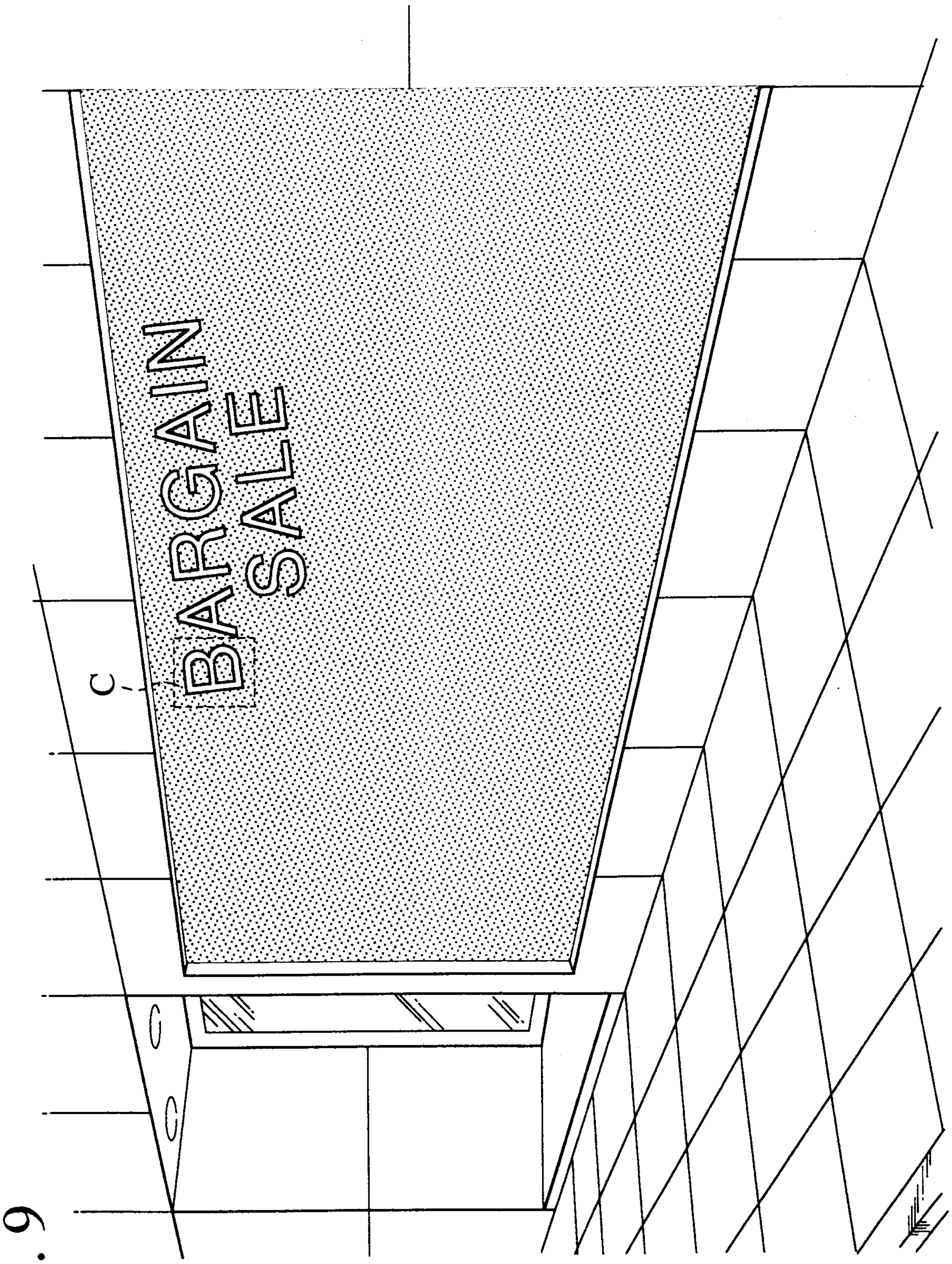


FIG. 9

FIG. 10

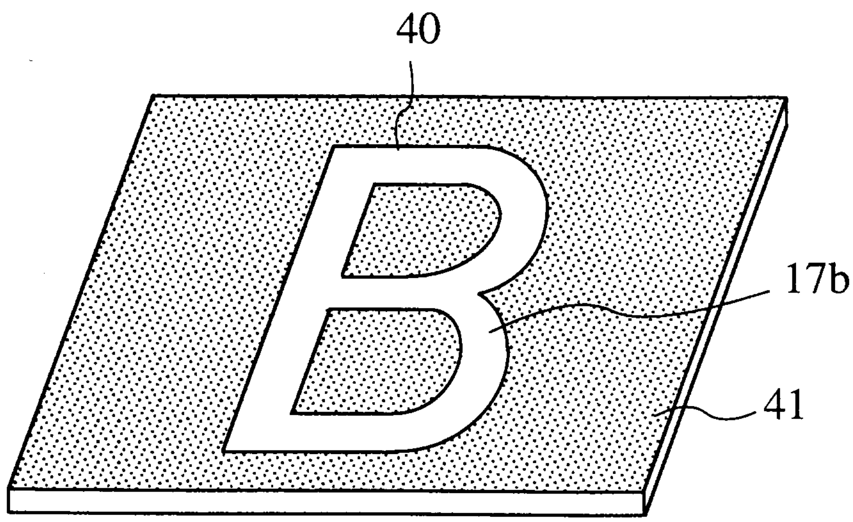

FIG. 11

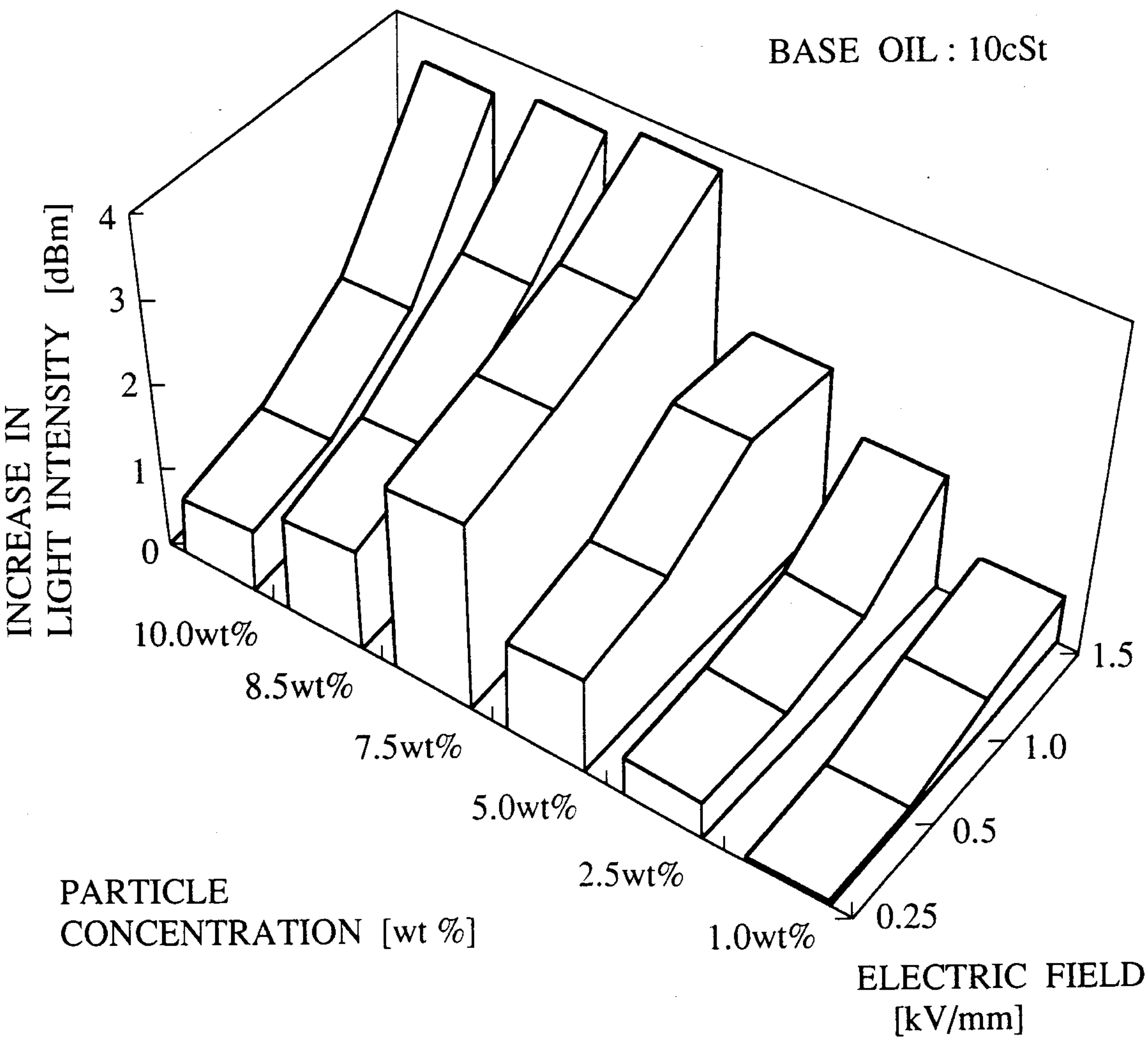
BASE OIL : 10cSt
INCREASE IN
LIGHT INTENSITY [dBm]
4
3
2
1
0
10.0wt%
8.5wt%
7.5wt%
5.0wt%
2.5wt%
1.0wt%
PARTICLE
CONCENTRATION [wt %]
1.5
1.0
0.5
0.25
ELECTRIC FIELD
[kV/mm]

# FIG. 12

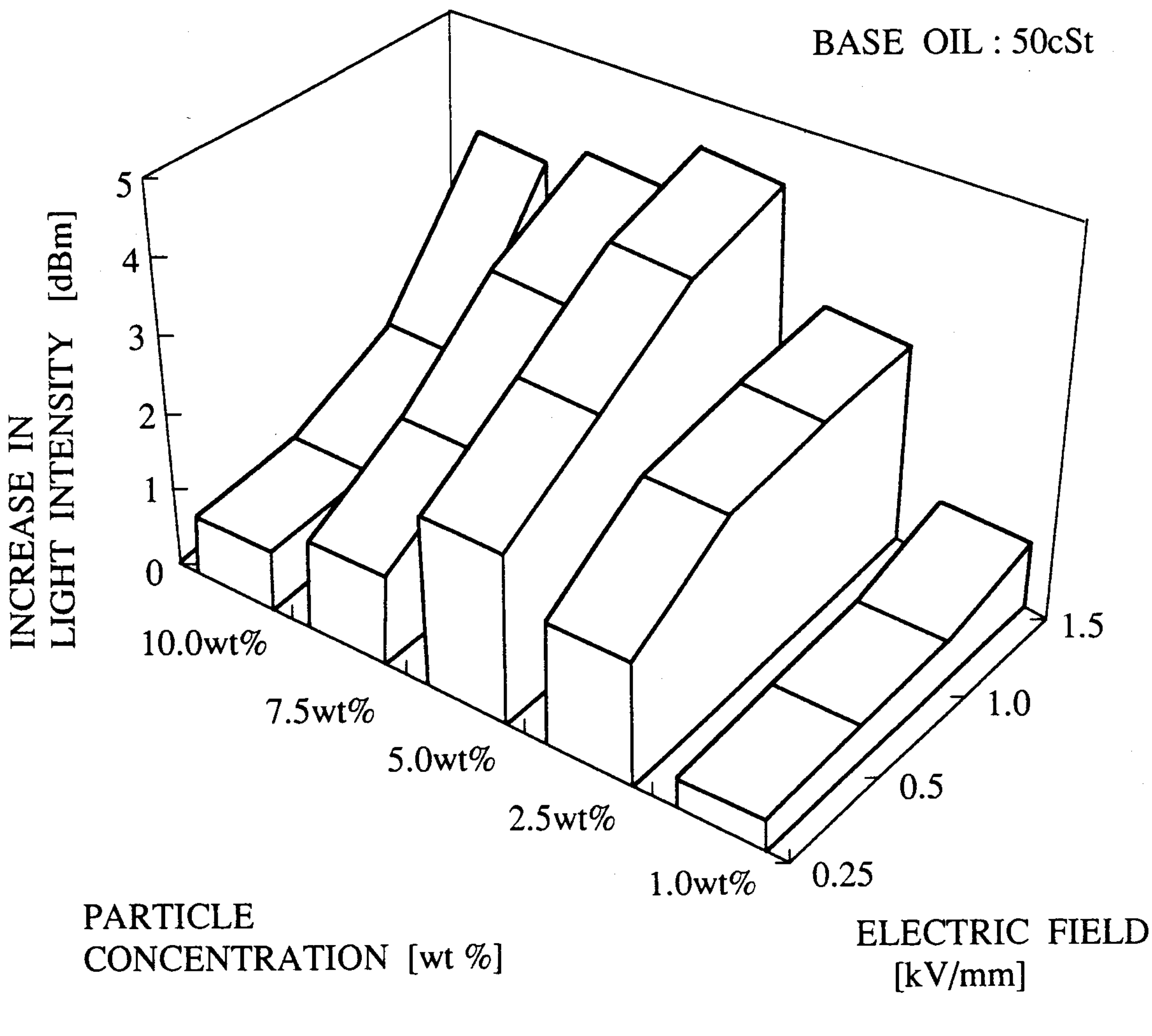
BASE OIL : 50cSt
INCREASE IN
LIGHT INTENSITY [dBm]
5
4
3
2
1
0
10.0wt%
7.5wt%
5.0wt%
2.5wt%
1.0wt%
PARTICLE
CONCENTRATION [wt %]
1.5
1.0
0.5
0.25
ELECTRIC FIELD
[kV/mm]

# FIG. 13

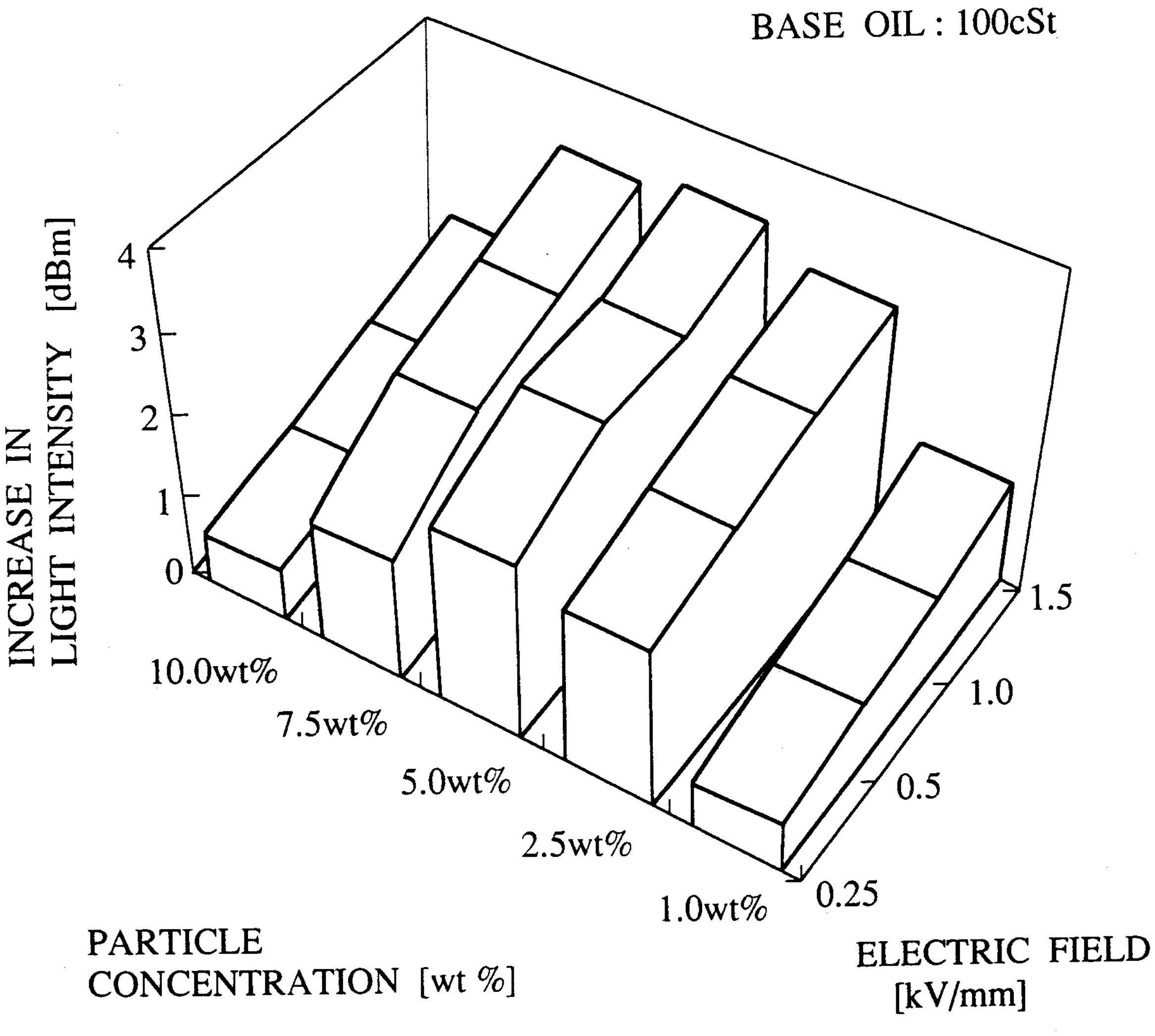
BASE OIL : 100cSt
INCREASE IN LIGHT INTENSITY [dBm]
4
3
2
1
0
10.0wt%
7.5wt%
5.0wt%
2.5wt%
1.0wt%
1.5
1.0
0.5
0.25
PARTICLE CONCENTRATION [wt %]
ELECTRIC FIELD [kV/mm]

FIG. 14

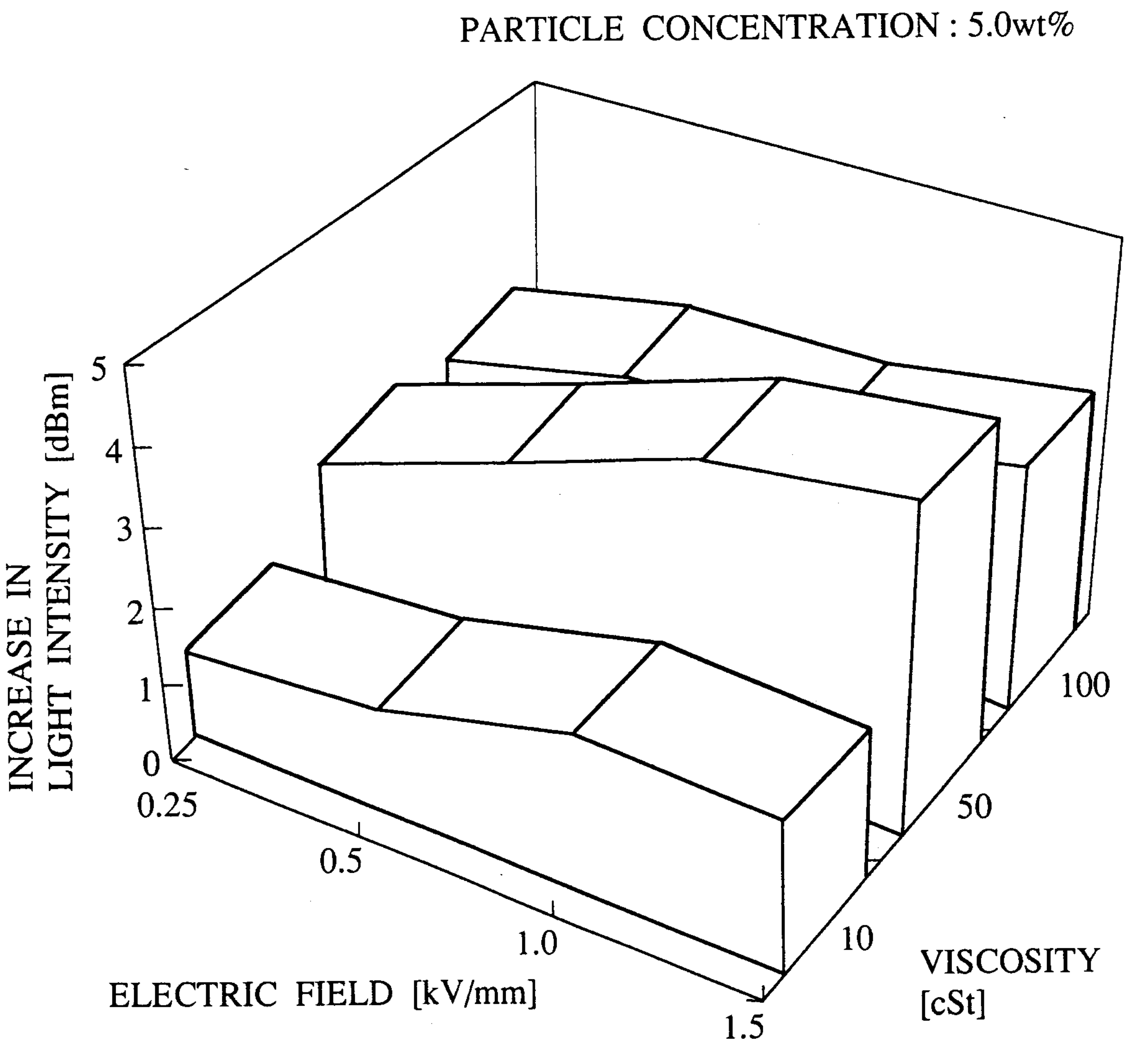
PARTICLE CONCENTRATION : 5.0wt%
INCREASE IN
LIGHT INTENSITY [dBm]
5
4
3
2
1
0
0.25
0.5
1.0
1.5
ELECTRIC FIELD [kV/mm]
10
50
100
VISCOSITY
[cSt]

FIG. 15

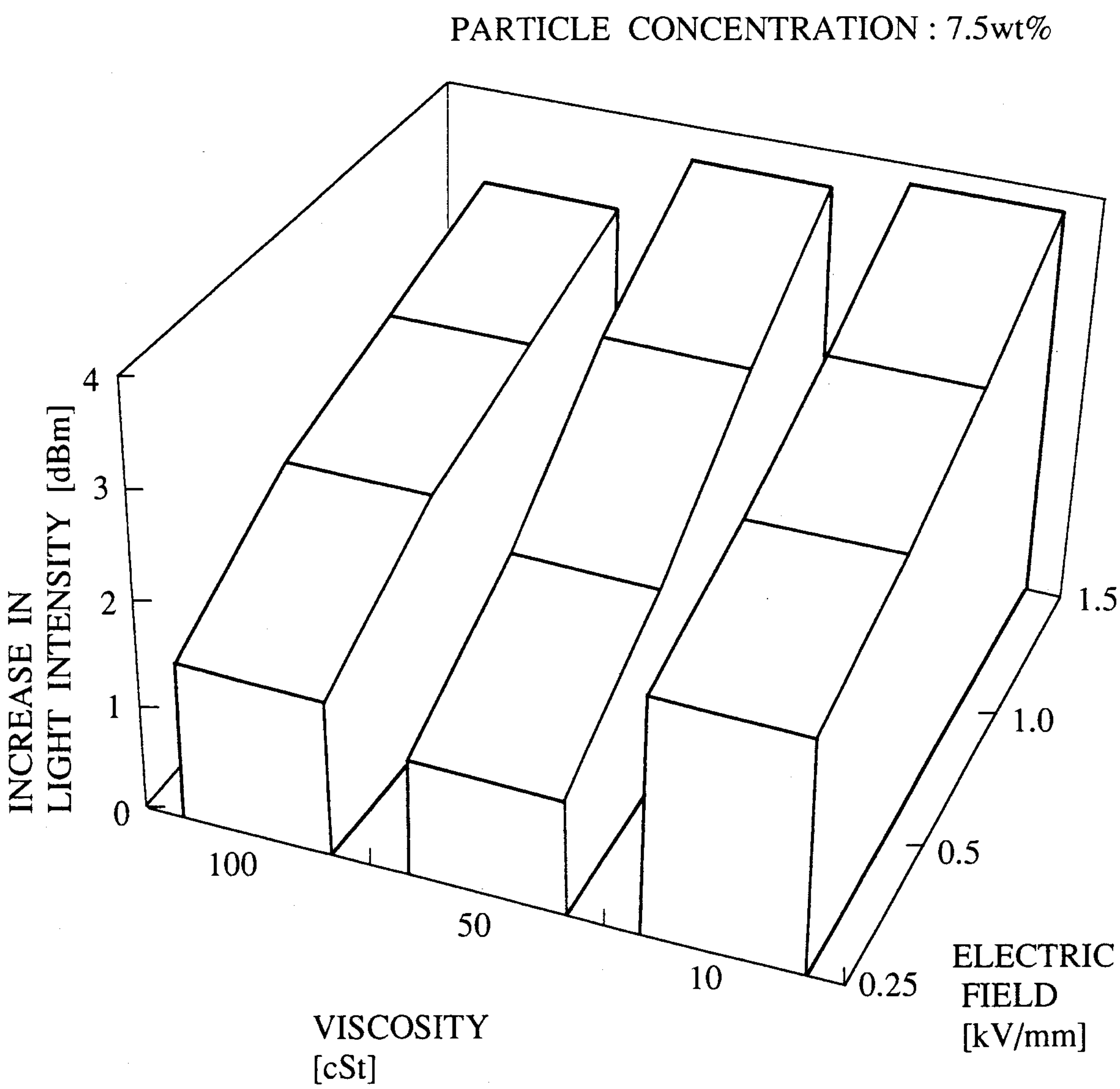
PARTICLE CONCENTRATION : 7.5wt%
INCREASE IN
LIGHT INTENSITY [dBm]
0
1
2
3
4
100
50
10
VISCOSITY
[cSt]
0.25
0.5
1.0
1.5
ELECTRIC
FIELD
[kV/mm]

FIG. 16

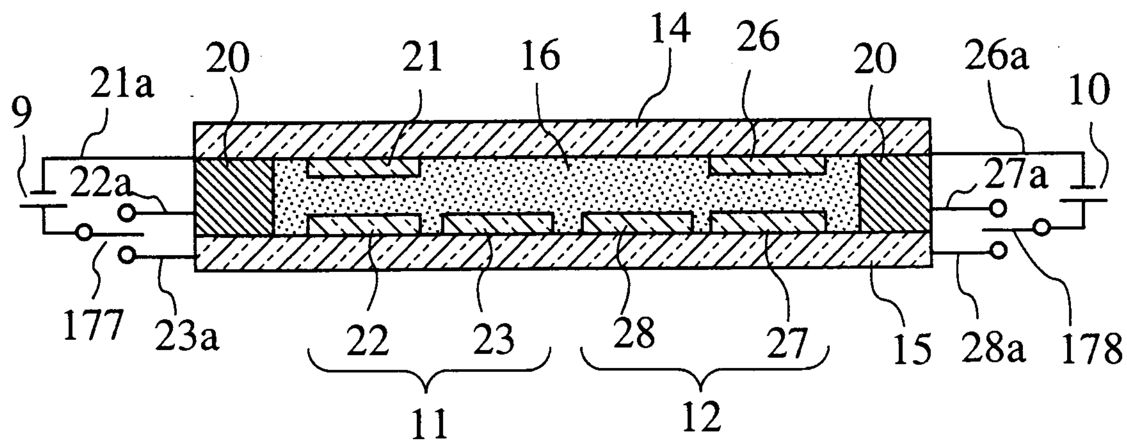
9
21a
20
21
16
14
26
20
26a
10
22a
27a
177
23a
22
23
28
27
15
28a
178
11
12

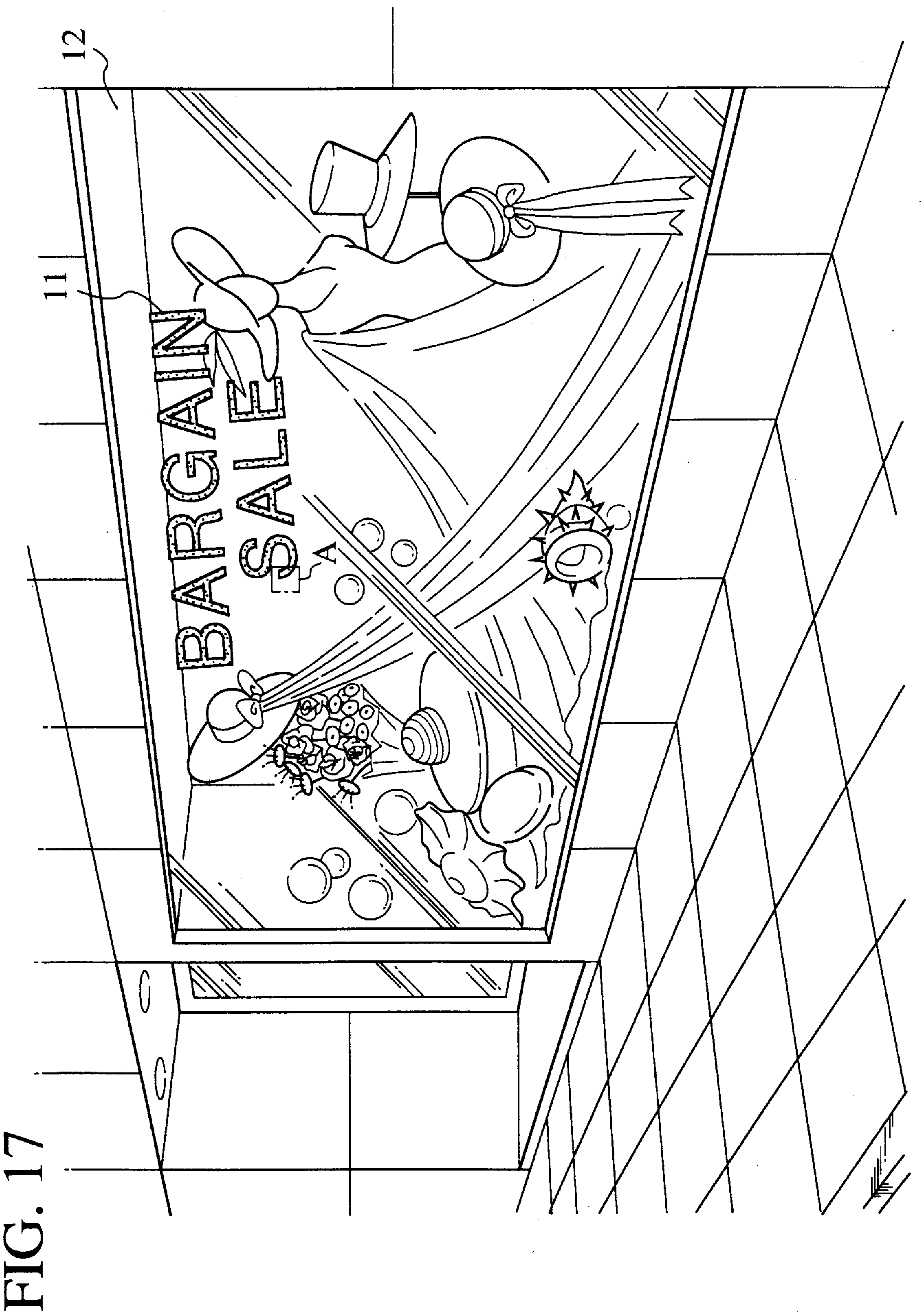


FIG. 17

FIG. 18

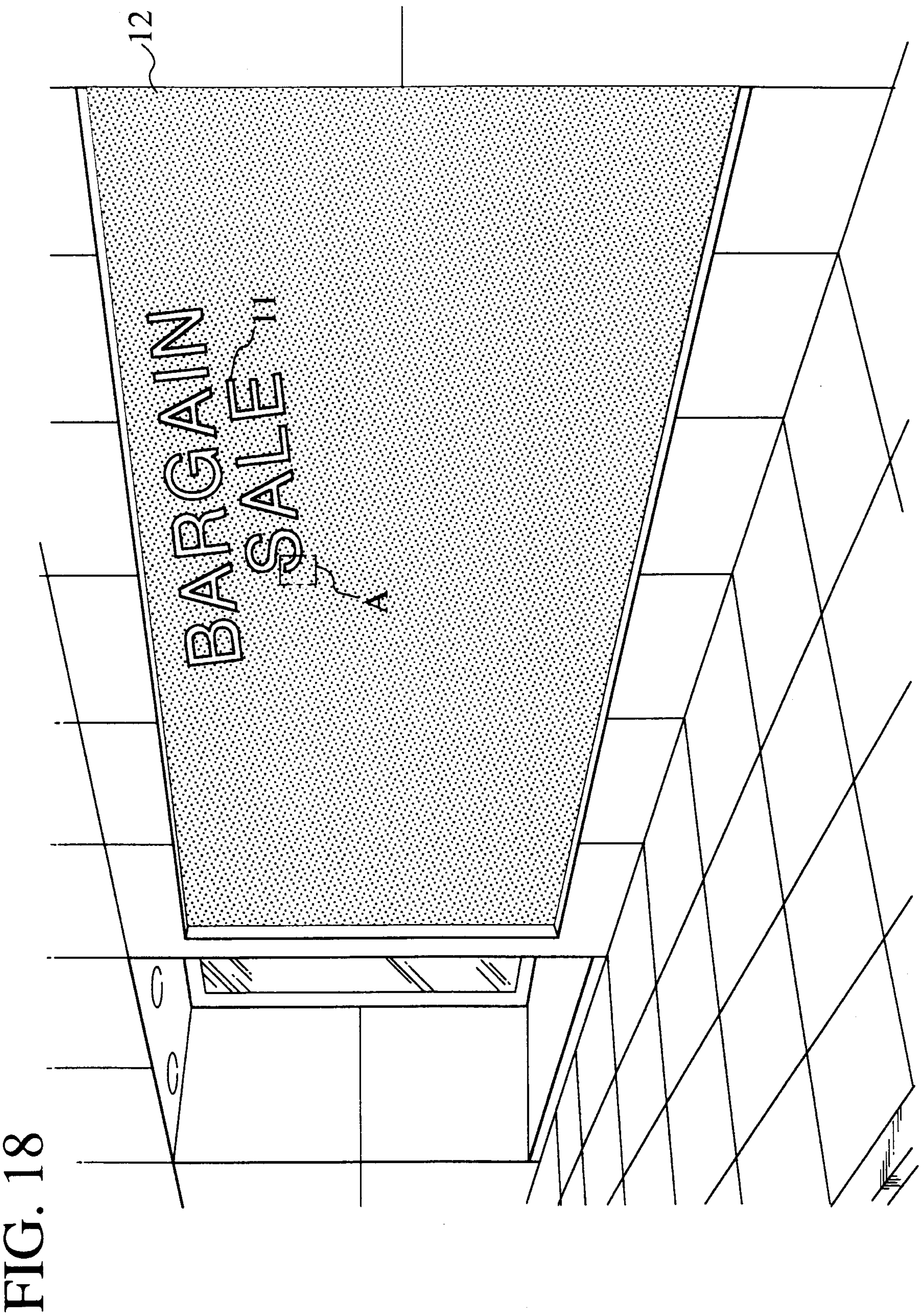

FIG. 19

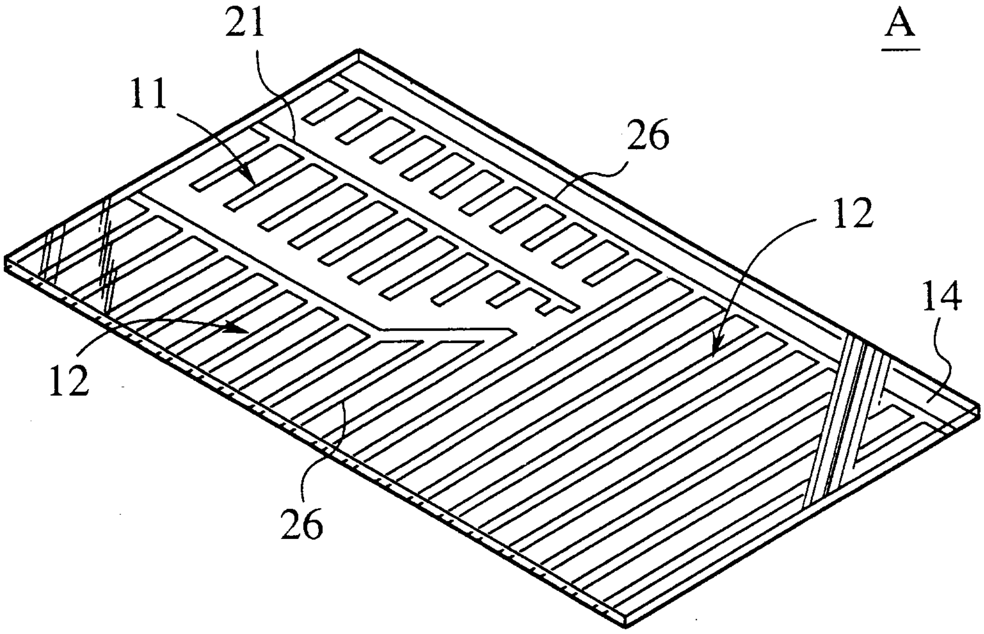


FIG. 20

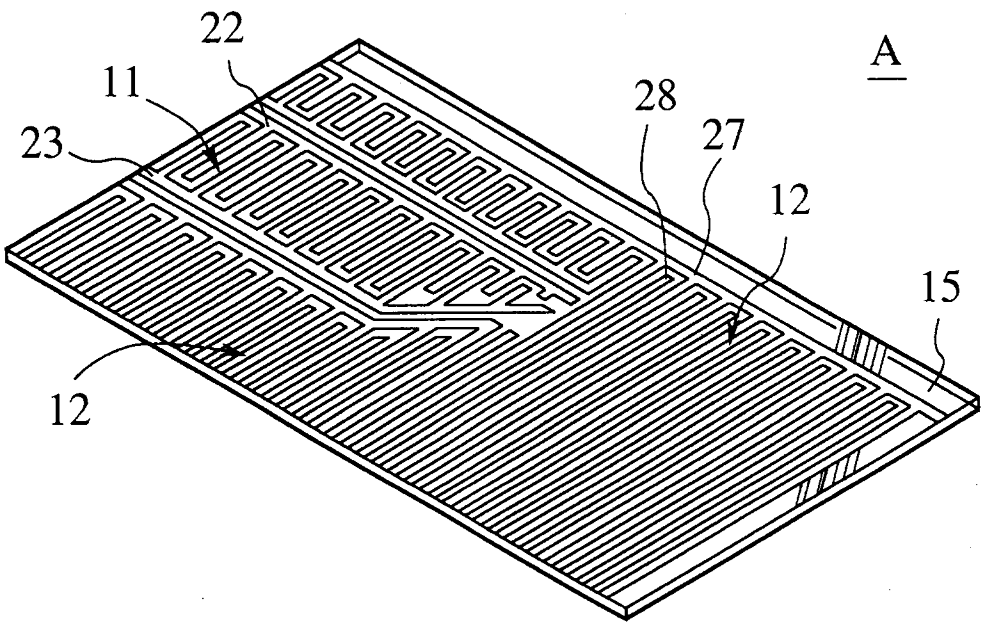

FIG. 21

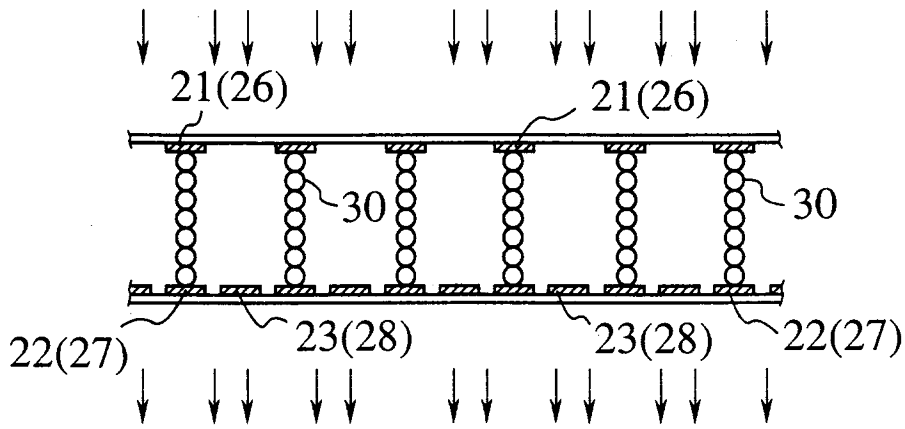
21(26)
21(26)
30
30
22(27)
23(28)
23(28)
22(27)

FIG. 22

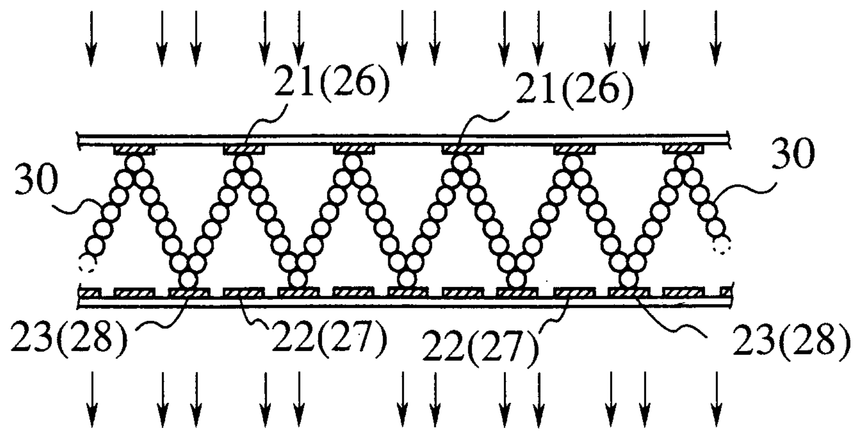
21(26)
21(26)
30
30
23(28)
22(27)
22(27)
23(28)

# FIG. 23

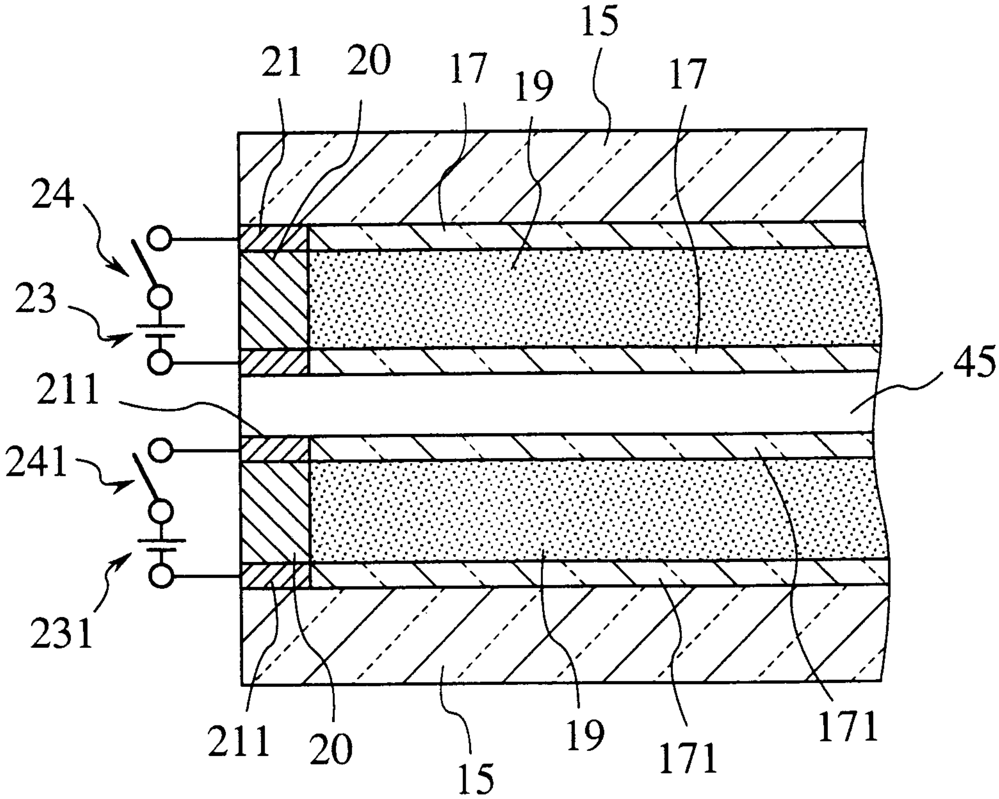
15
21
20
17
19
17
24
23
45
211
241
231
211
20
15
19
171
171

# FIG. 24

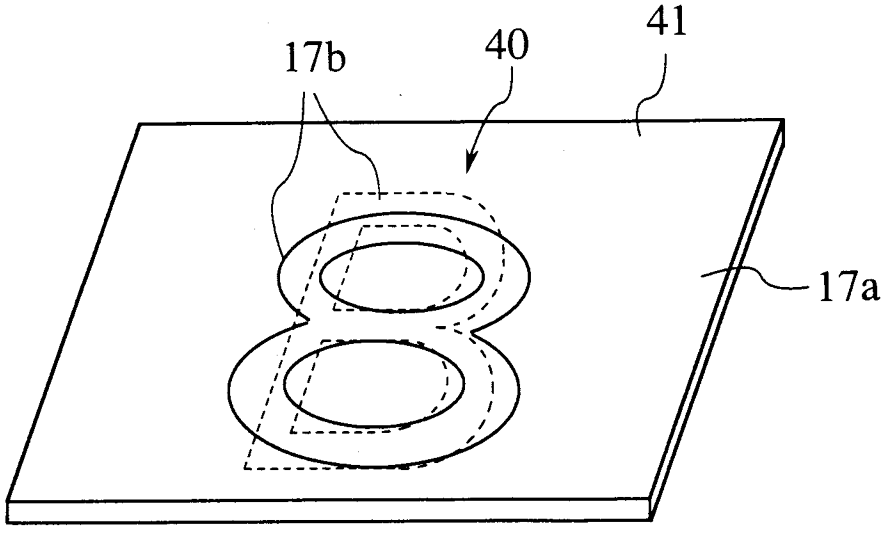
41
17b
40
17a

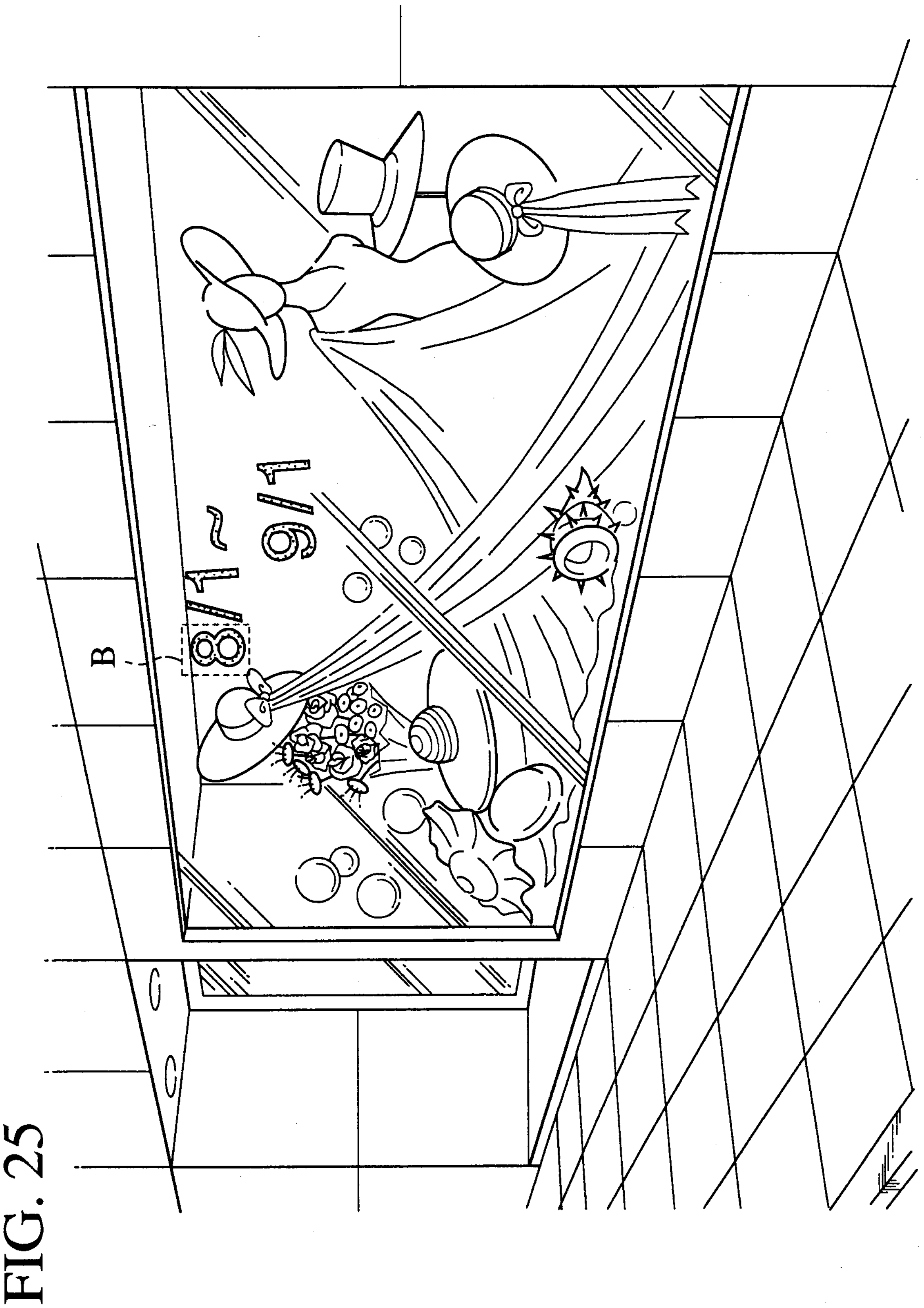


FIG. 25

FIG. 26

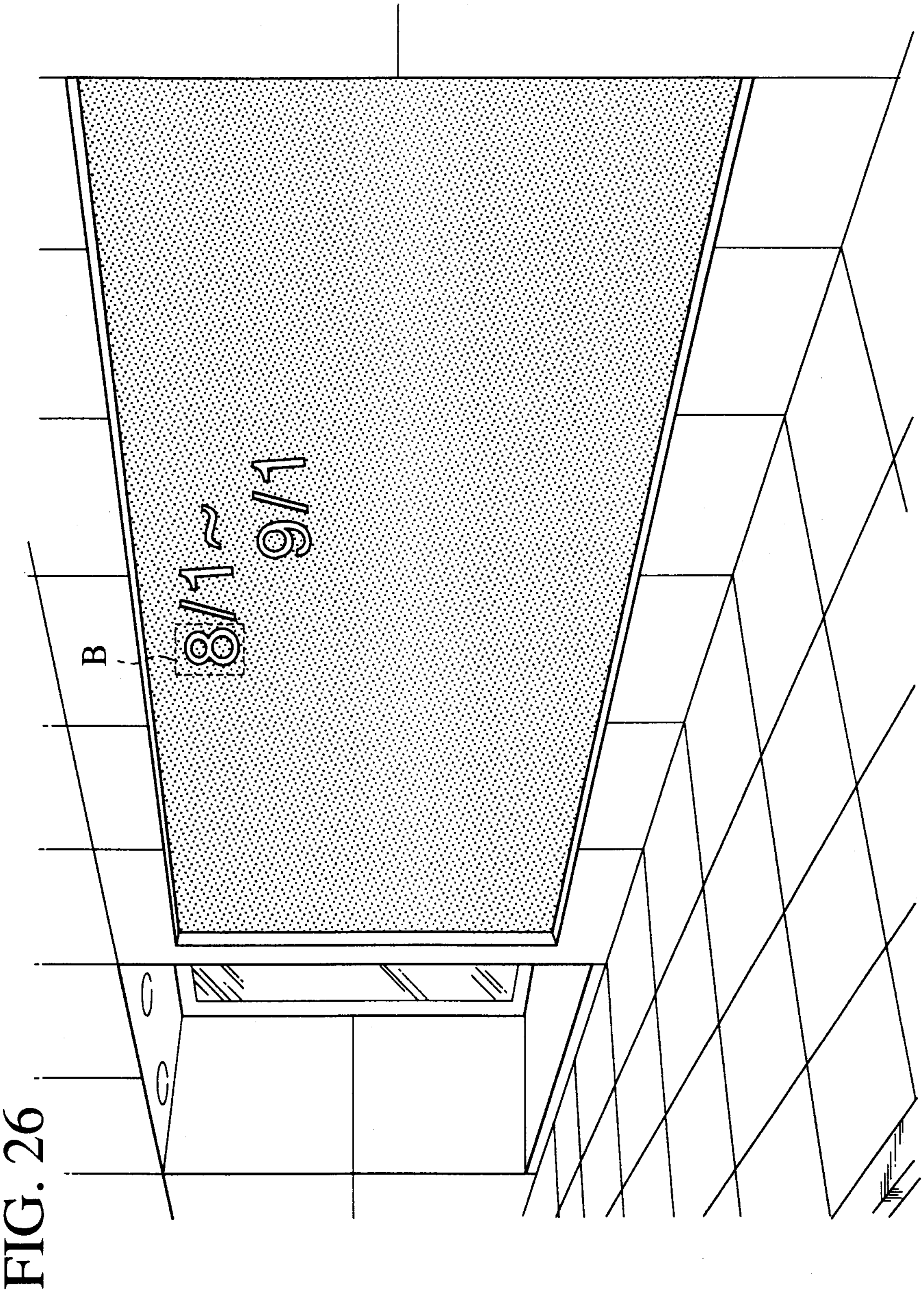

FIG. 27

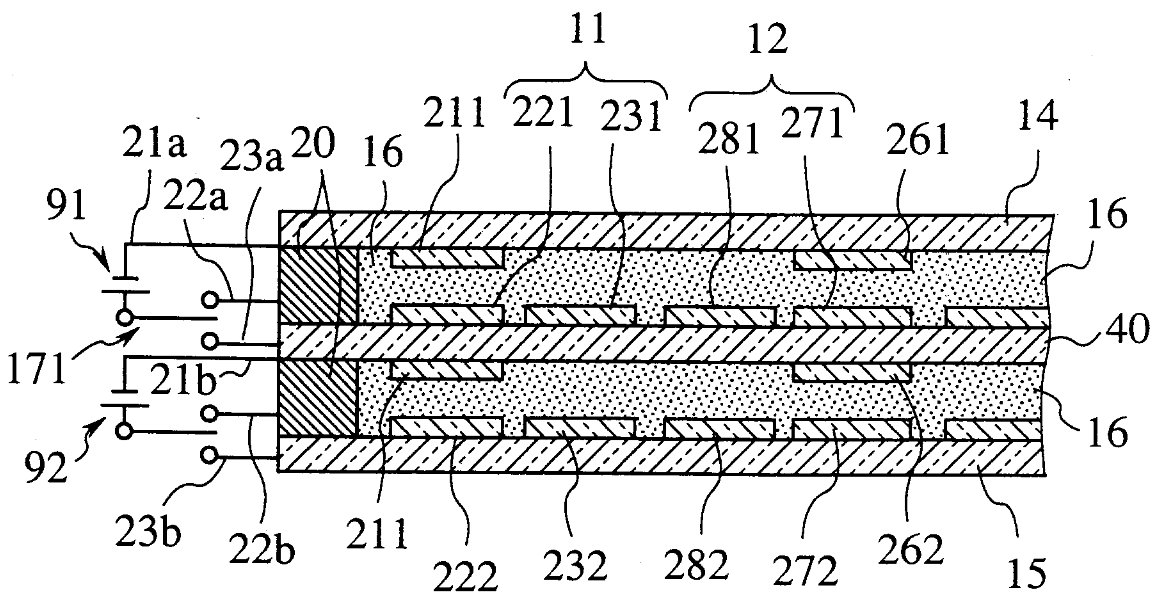
11
12
211
221
231
281
271
261
14
21a
23a
20
16
22a
91
16
40
171
21b
92
16
23b
22b
211
222
232
282
272
262
15

FIG. 28

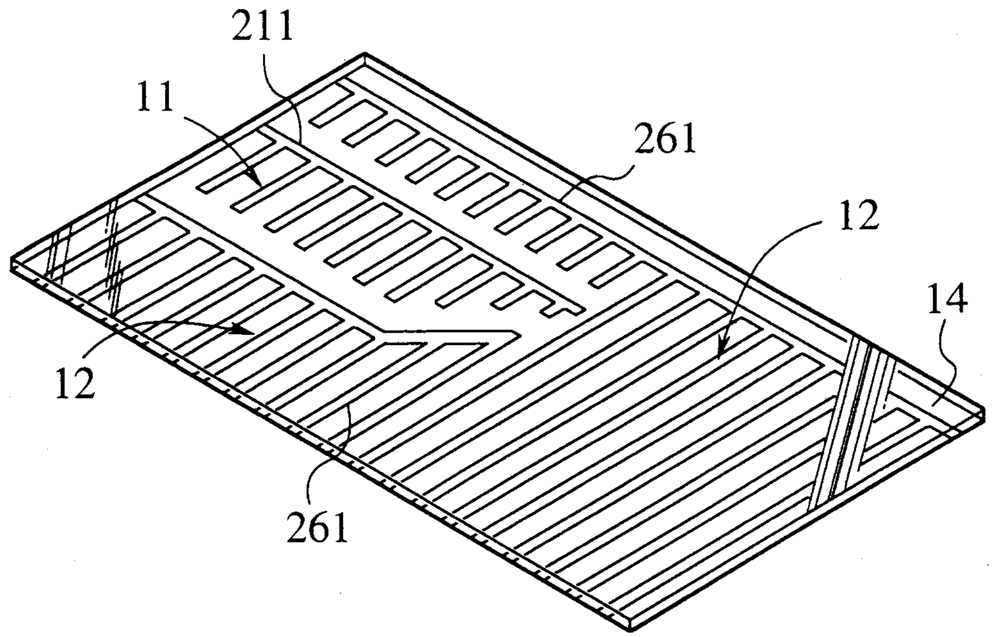


FIG. 29

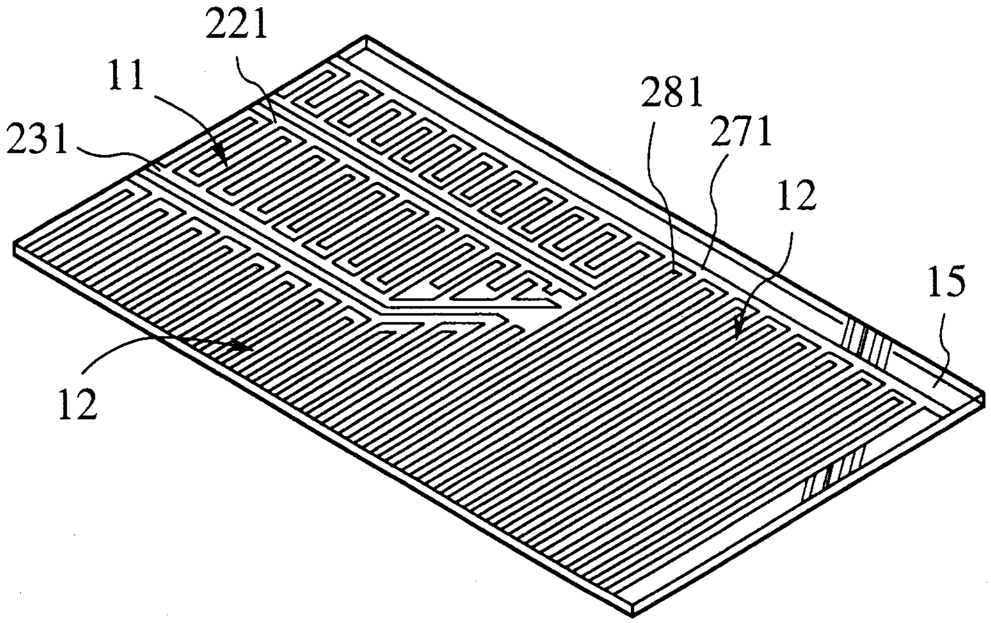

FIG. 30

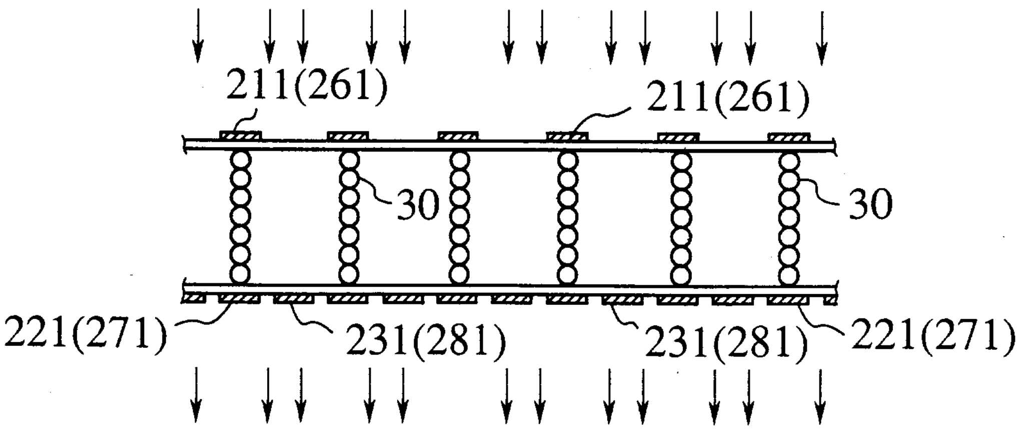
211(261)
211(261)
30
30
221(271)
231(281)
231(281)
221(271)

FIG. 31

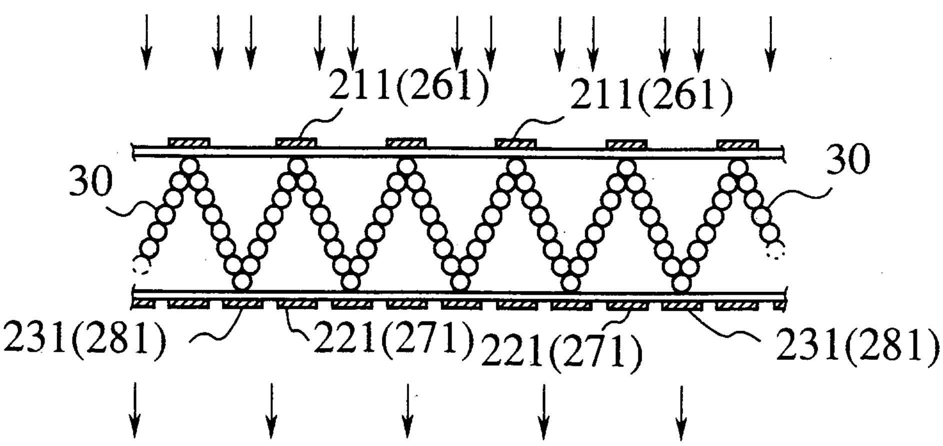
211(261)
211(261)
30
30
231(281)
221(271)
221(271)
231(281)

FIG. 32

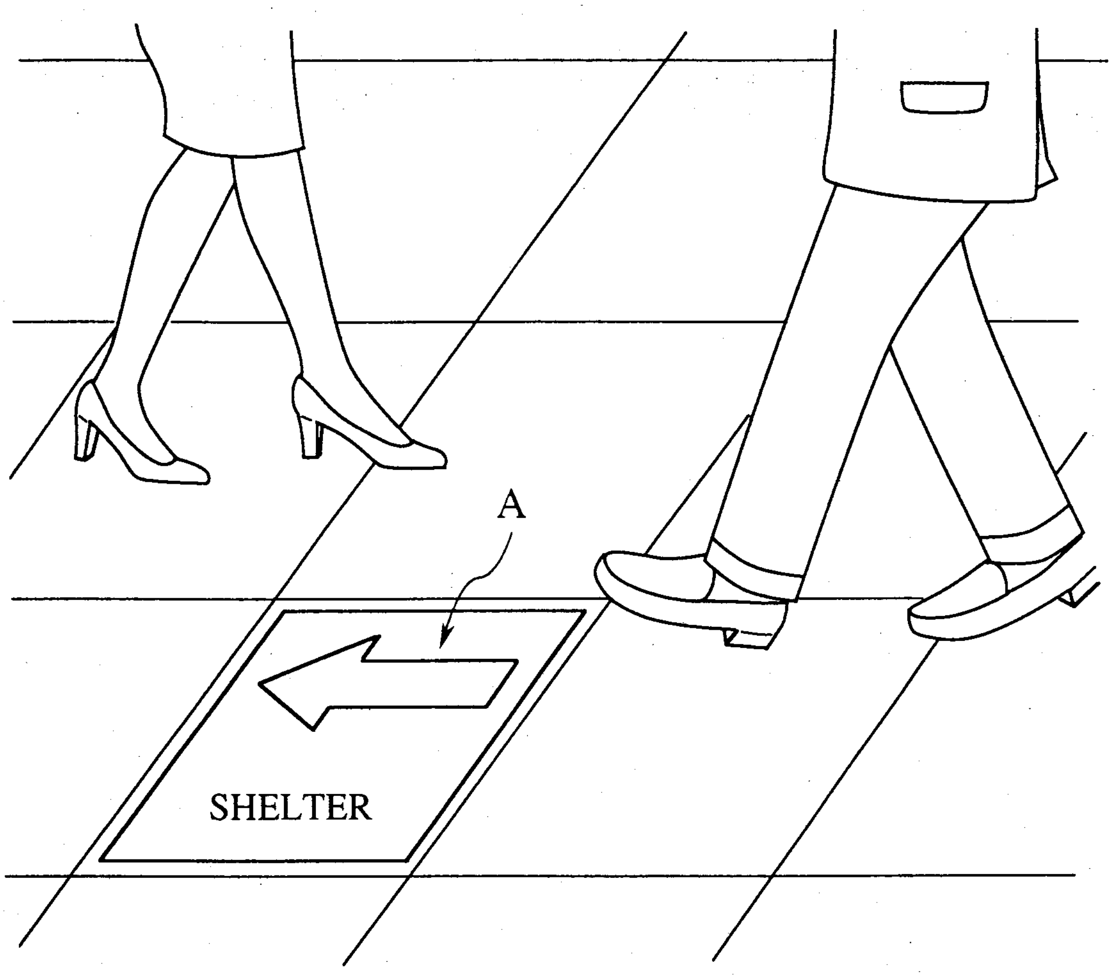


FIG. 33

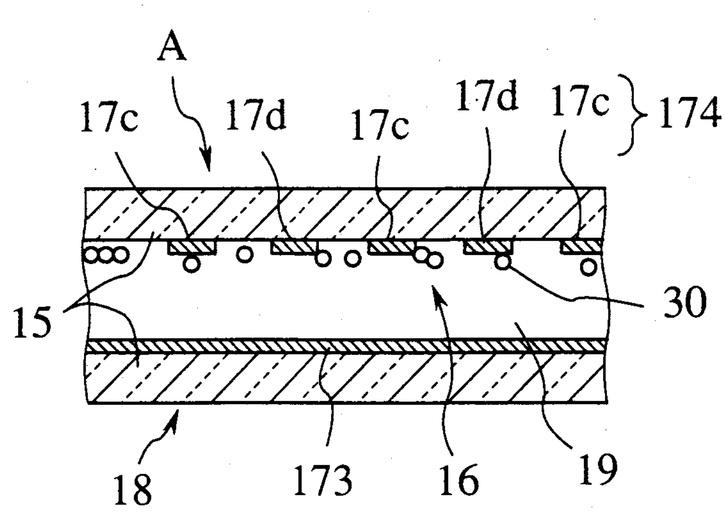

FIG. 34

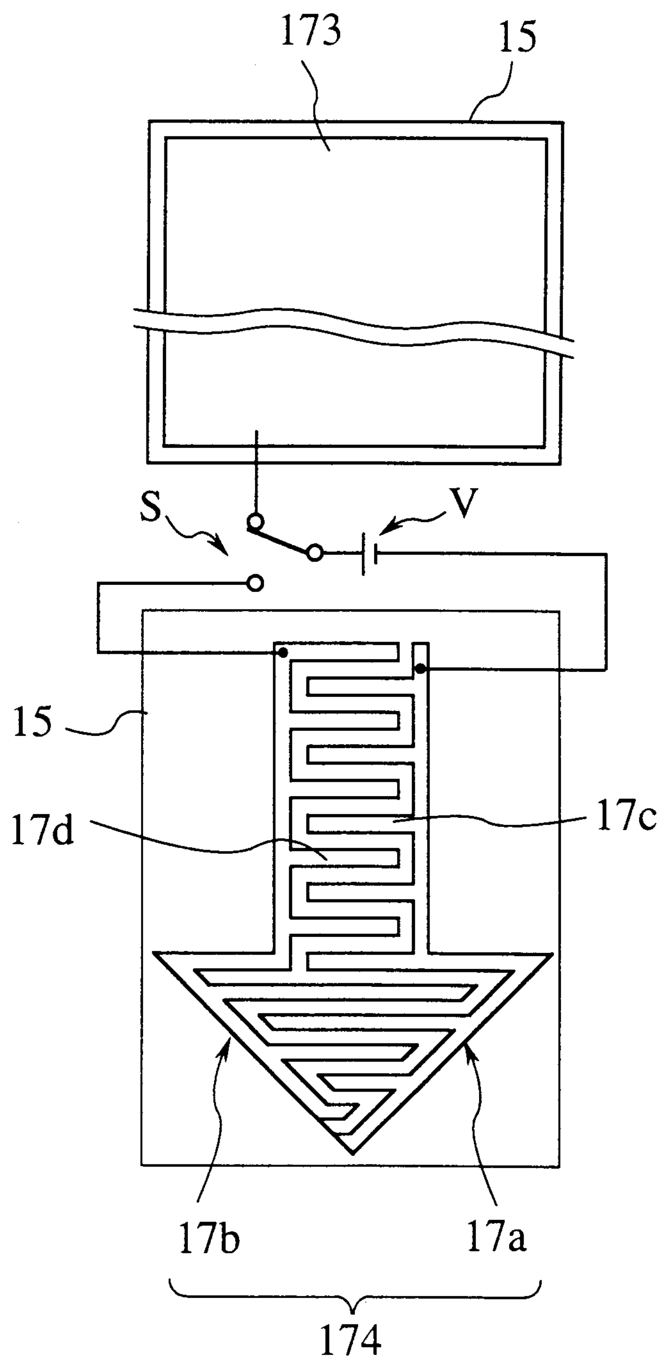

FIG. 35

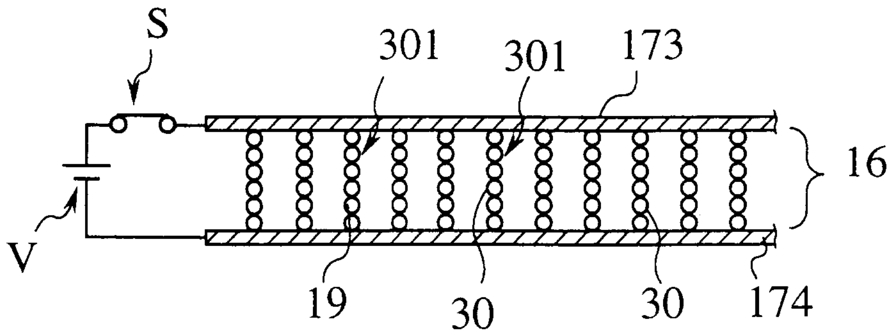
S
301
301
173
16
V
19
30
30
174

FIG. 36

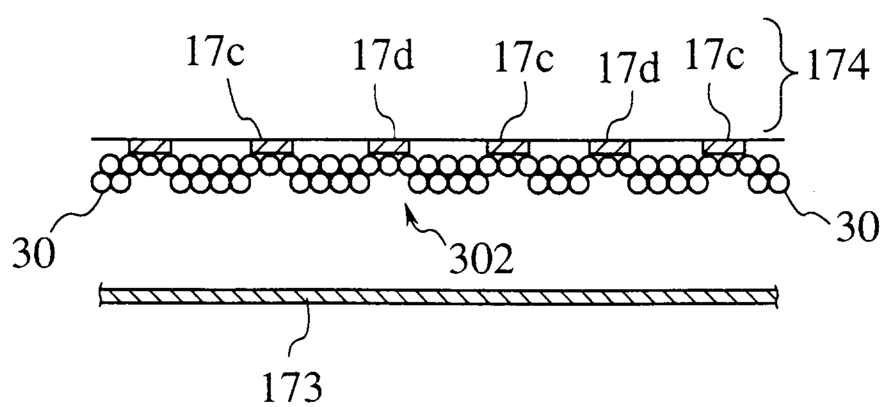
17c
17d
17c
17d
17c
174
30
302
30
173

FIG. 37

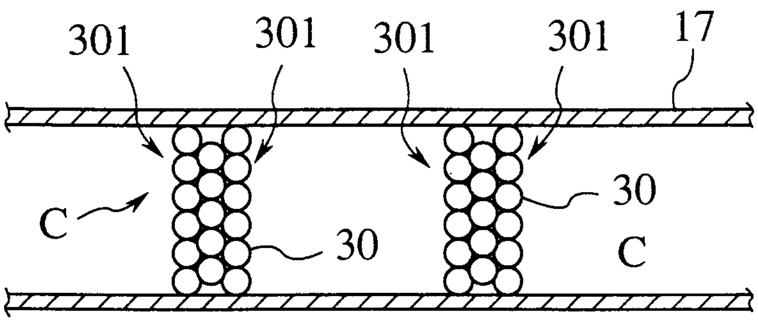


FIG. 38

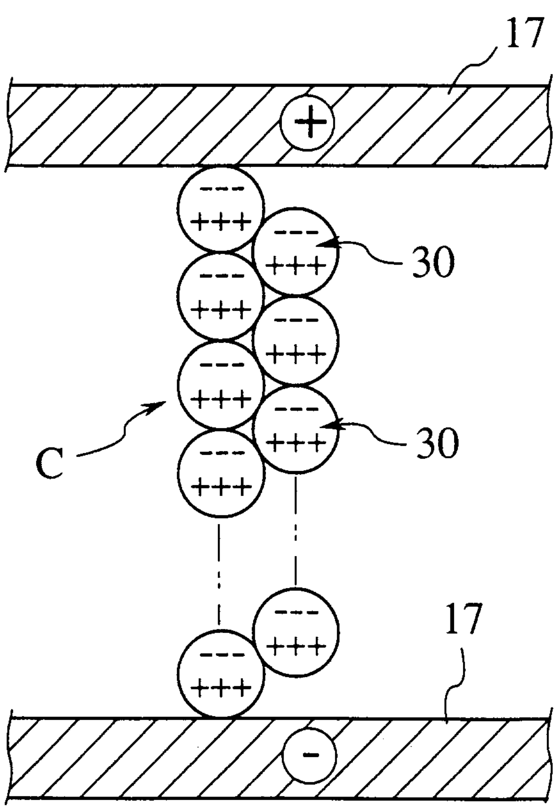

FIG. 39

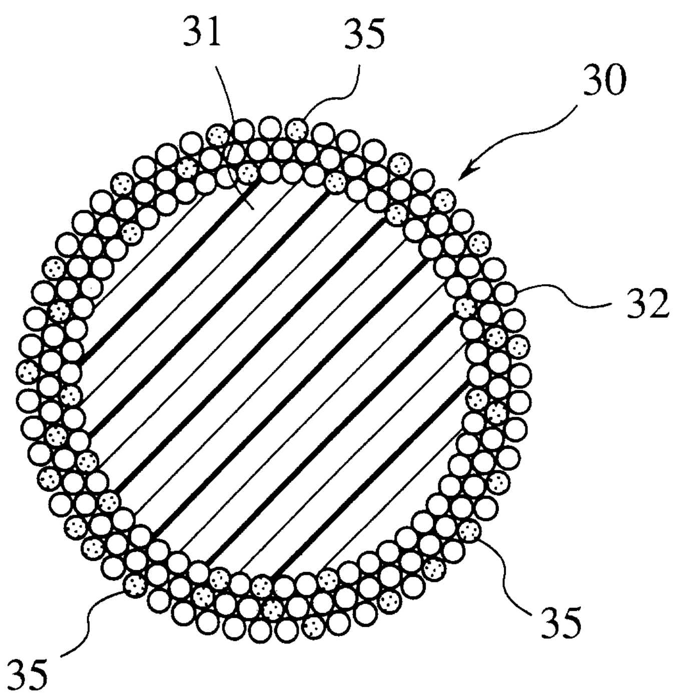

FIG. 40

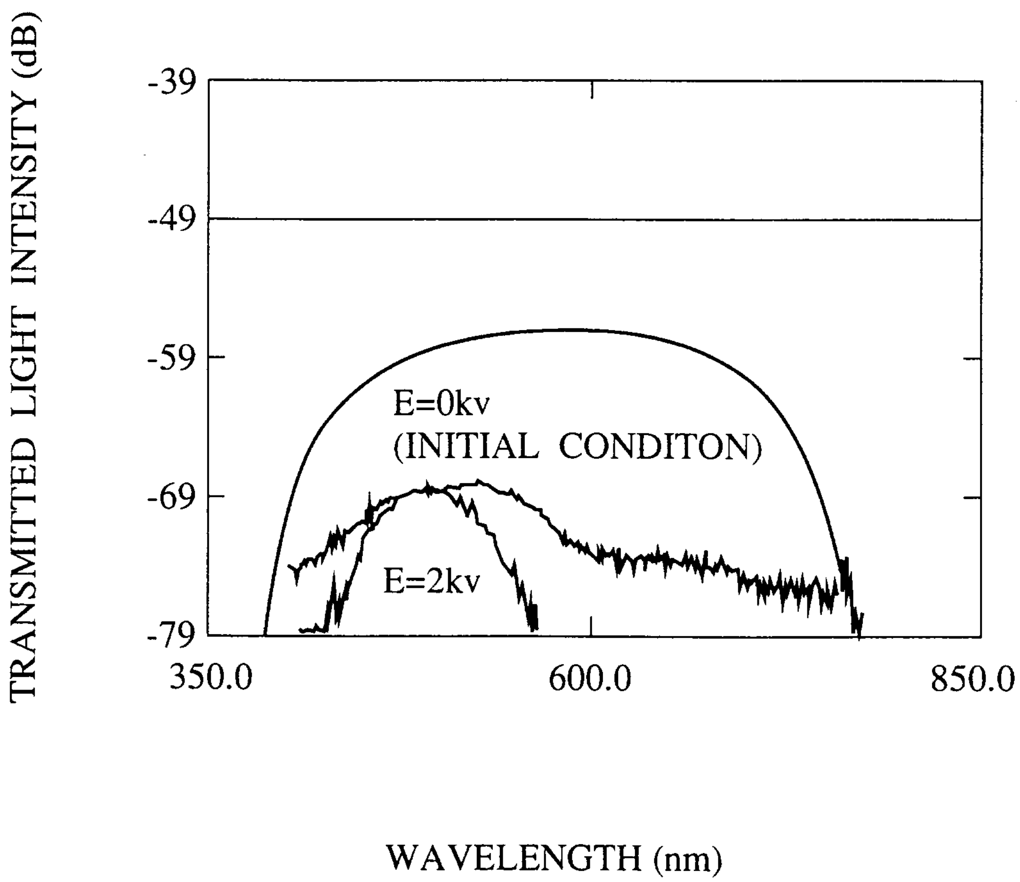
TRANSMITTED LIGHT INTENSITY (dB)
-39
-49
-59
-69
-79
350.0
600.0
850.0
E=0kv
(INITIAL CONDITON)
E=2kv
WAVELENGTH (nm)

FIG. 41

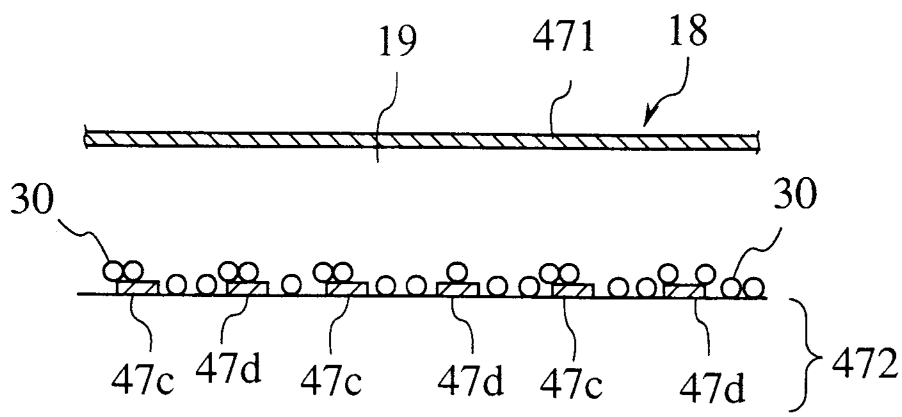
19
471
18
30
30
47c
47d
47c
47d
47c
47d
472

FIG. 42

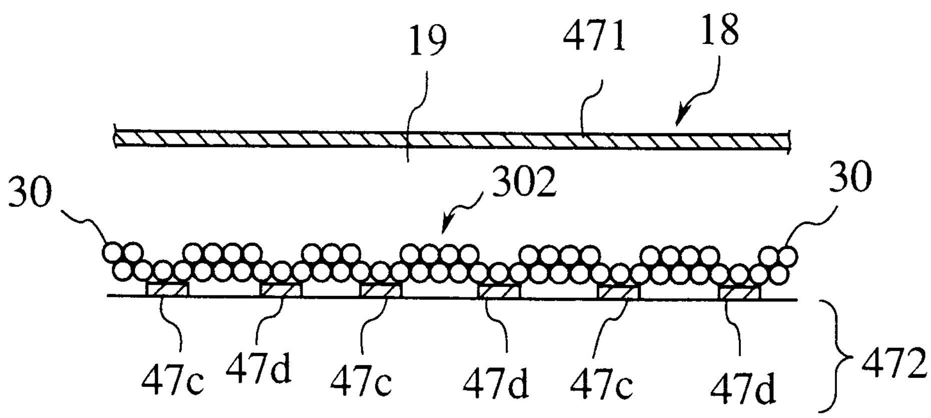
19
471
18
30
302
30
47c
47d
47c
47d
47c
47d
472

FIG. 43

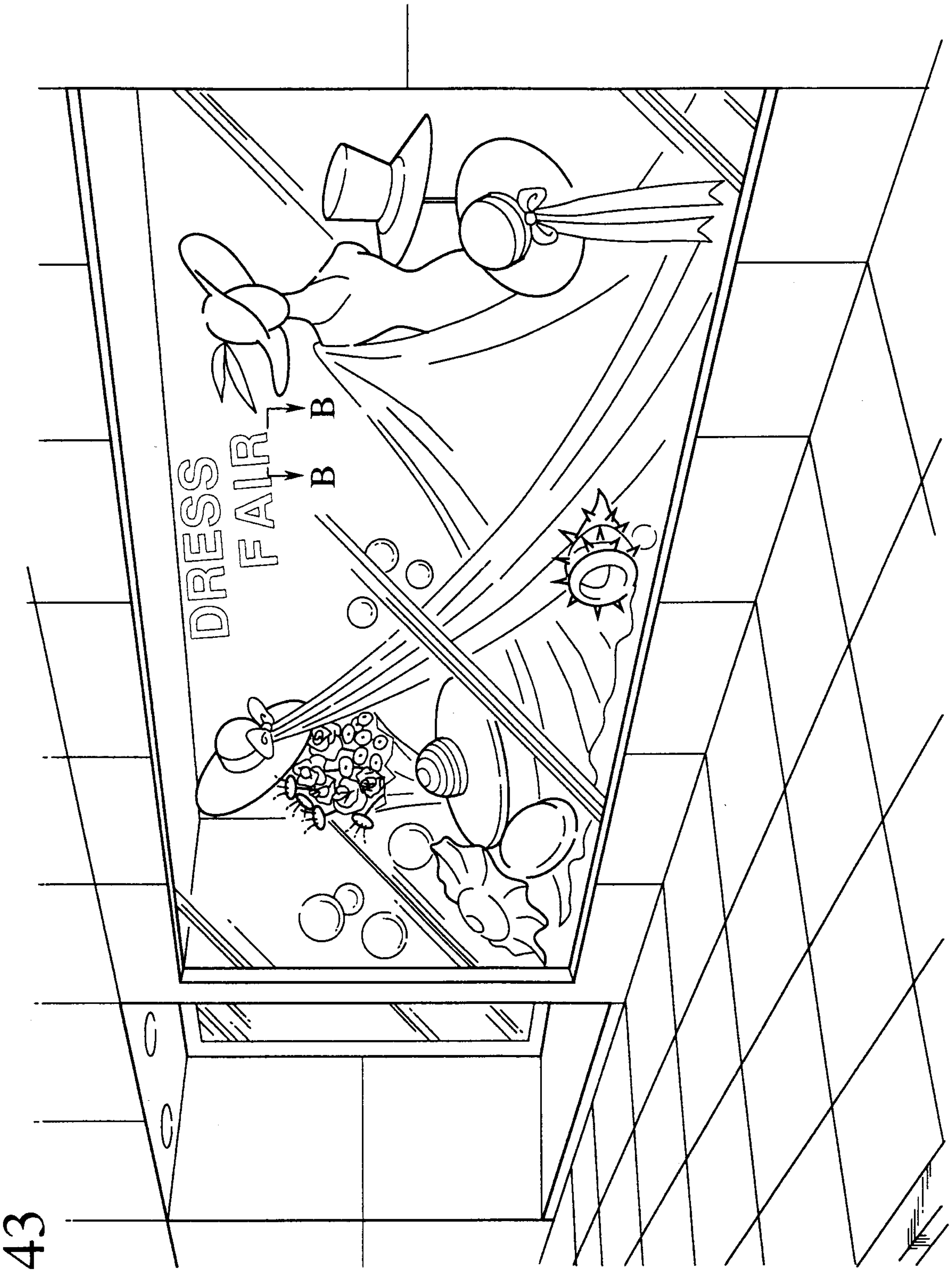

FIG. 44

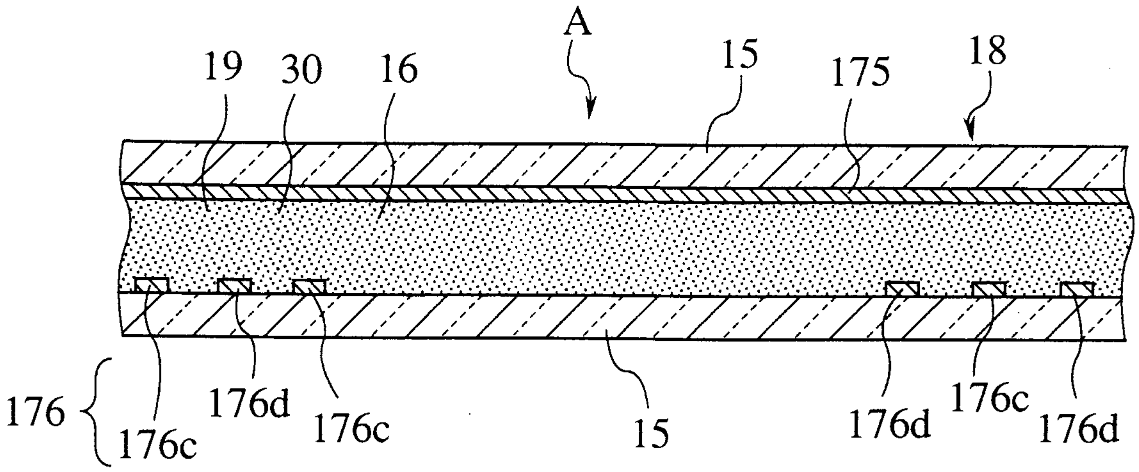
A
19
30
16
15
175
18
176
176c
176d
176c
15
176d
176c
176d

FIG. 45

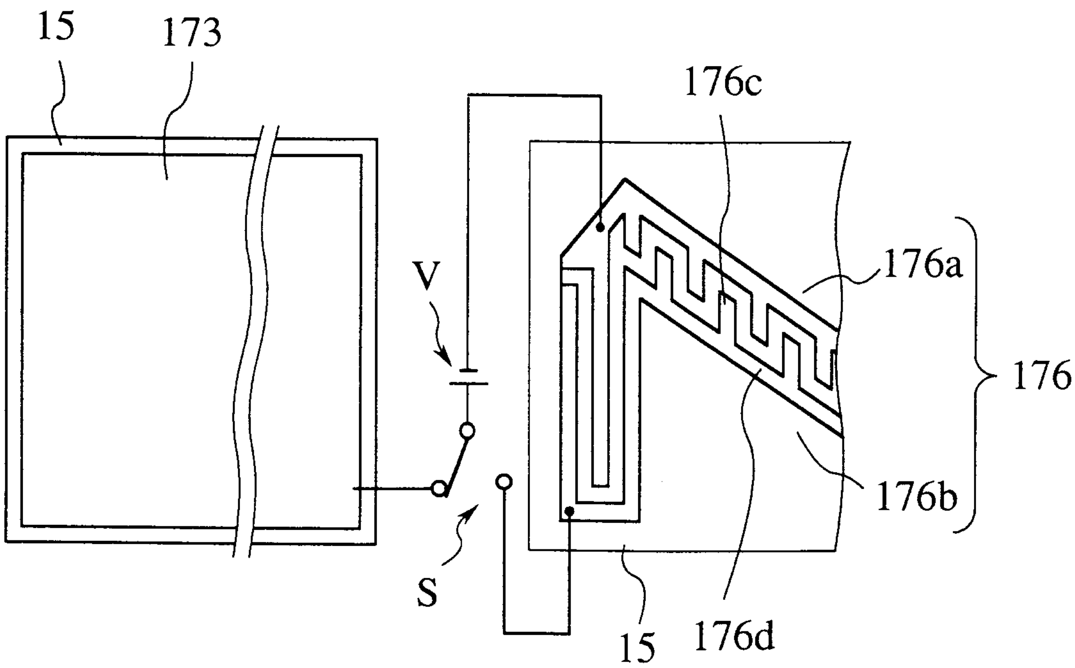
15
173
176c
V
176a
176
176b
S
15
176d

# FIG. 46

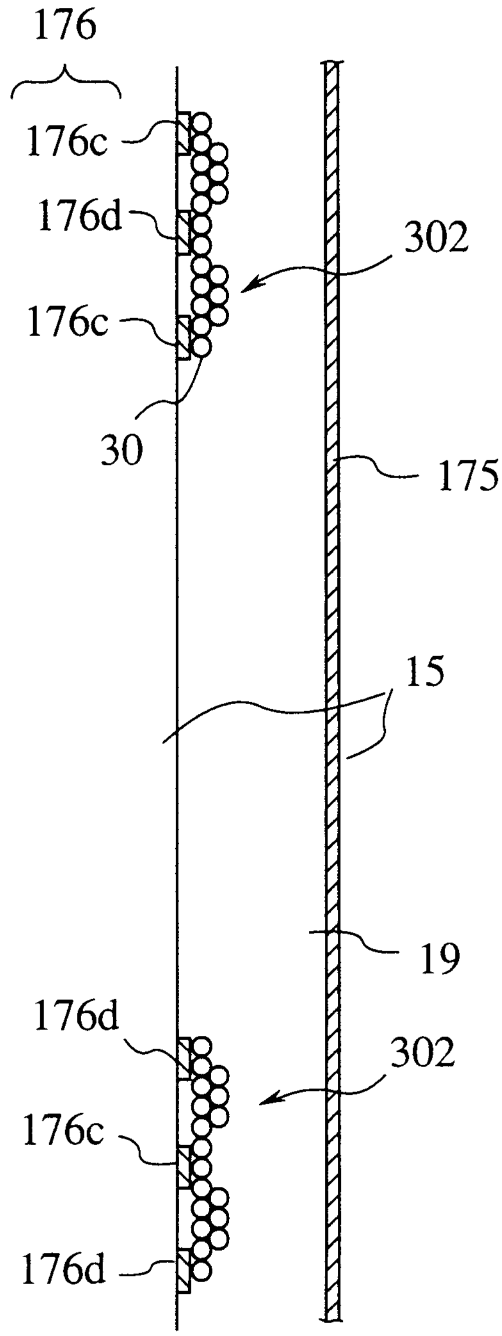

FIG. 47

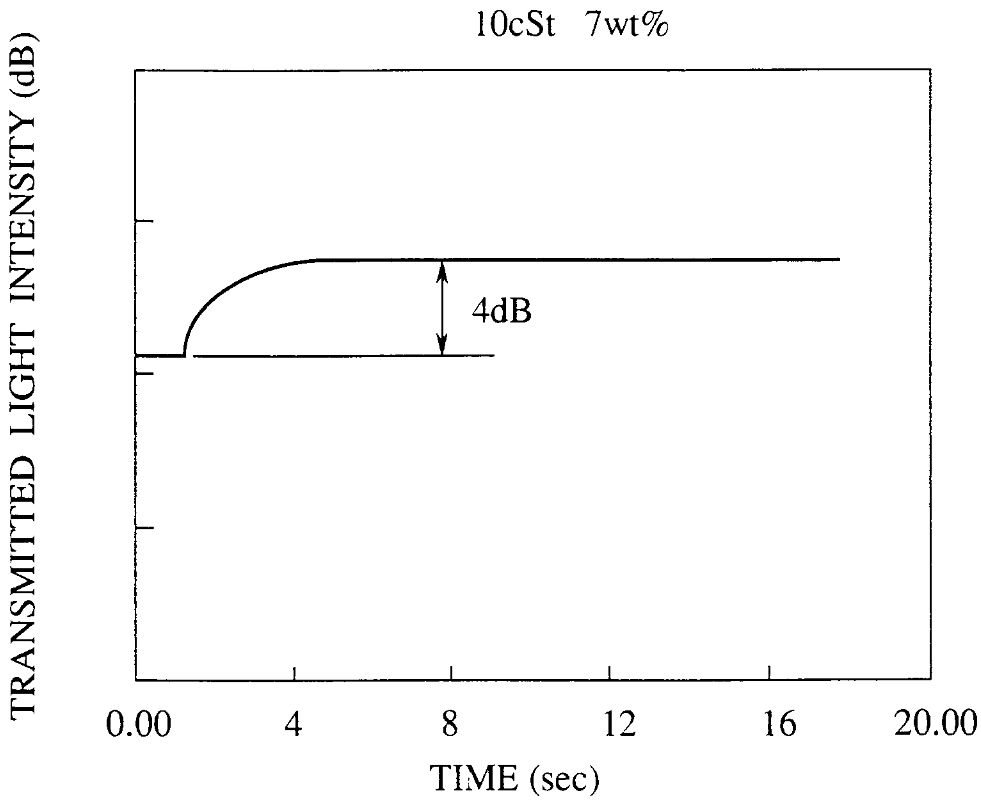
10cSt 7wt%
TRANSMITTED LIGHT INTENSITY (dB)
4dB
0.00
4
8
12
16
20.00
TIME (sec)

FIG. 48

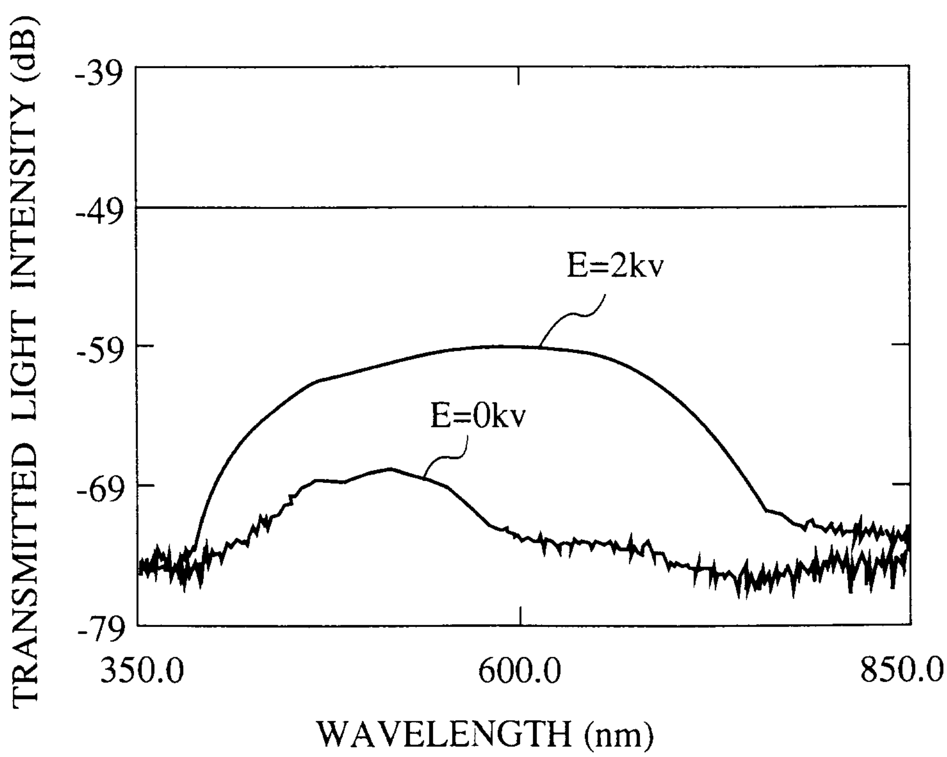
TRANSMITTED LIGHT INTENSITY (dB)
-39
-49
-59
-69
-79
E=2kv
E=0kv
350.0
600.0
850.0
WAVELENGTH (nm)

FIG. 49

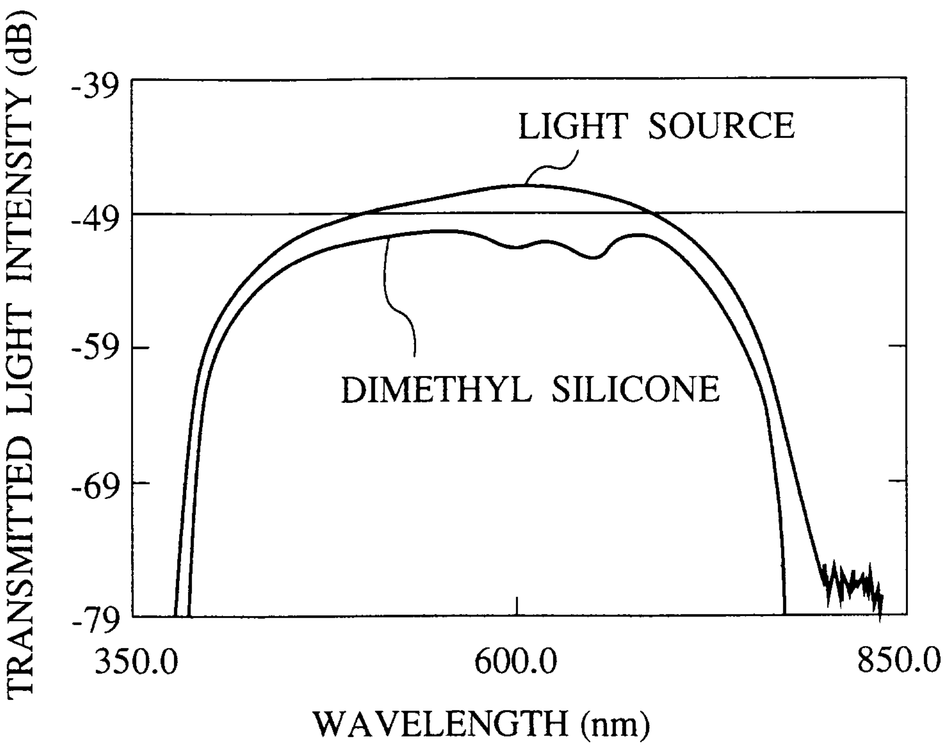
TRANSMITTED LIGHT INTENSITY (dB)
-39
-49
-59
-69
-79
LIGHT SOURCE
DIMETHYL SILICONE
350.0
600.0
850.0
WAVELENGTH (nm)

FIG. 50

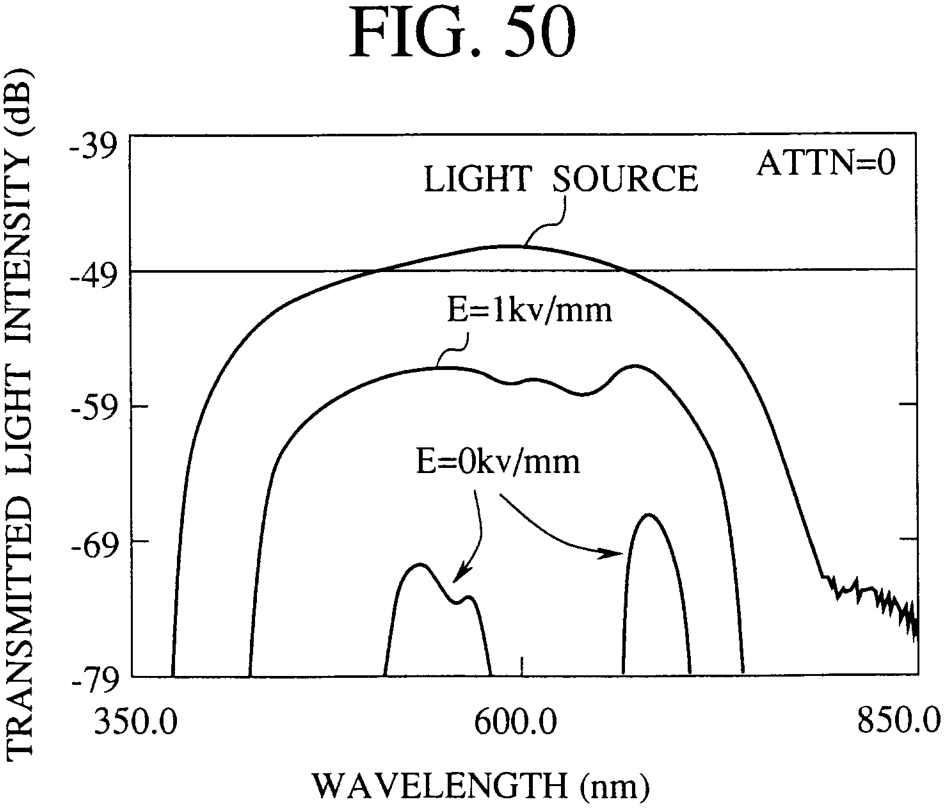
TRANSMITTED LIGHT INTENSITY (dB)
-39
-49
-59
-69
-79
LIGHT SOURCE
ATTN=0
E=1kv/mm
E=0kv/mm
350.0
600.0
850.0
WAVELENGTH (nm)